(19) Europäisches Patentamt
European Patent Office
Office européen des brevets

(11) Veröffentlichungsnummer: **0 425 434 B1**

(12) **EUROPÄISCHE PATENTSCHRIFT**

(45) Veröffentlichungstag der Patentschrift: **15.11.95**

(51) Int. Cl.$^{6}$: **C09B 67/22**, C09B 29/40, D06P 3/24

(21) Anmeldenummer: **90810789.9**

(22) Anmeldetag: **16.10.90**

# (54) Farbstoffmischungen und deren Verwendung.

(30) Priorität: **23.10.89 CH 3825/89**
**23.10.89 CH 3826/89**

(43) Veröffentlichungstag der Anmeldung:
**02.05.91 Patentblatt 91/18**

(45) Bekanntmachung des Hinweises auf die Patenterteilung:
**15.11.95 Patentblatt 95/46**

(84) Benannte Vertragsstaaten:
**BE CH DE DK ES FR GB IT LI NL**

(56) Entgegenhaltungen:
**EP-A- 0 121 495**
**EP-A- 0 127 579**
**EP-A- 0 240 465**
**GB-A- 2 236 542**

(73) Patentinhaber: **CIBA-GEIGY AG**
**Klybeckstrasse 141**
**CH-4002 Basel (CH)**

(72) Erfinder: **Mäusezahl, Dieter, Dr.**
**Langgartenstrasse 19**
**CH-4105 Biel-Benken (CH)**

EP 0 425 434 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mischungen gelbfärbender Farbstoffe, die zum Farben von natürlichen oder synthetischen textilen Polyamidfasermaterialien aus wässrigem Bad geeignet sind, die sehr gute Echtheitseigenschaften aufweisen und die insbesondere in Kombination mit anderen Farbstoffen ein gutes Ziehverhalten, insbesondere aus Kurzflotten, zeigen.

Gegenstand der vorliegenden Erfindung ist eine Farbstoffmischung, die einen Farbstoff der Formel

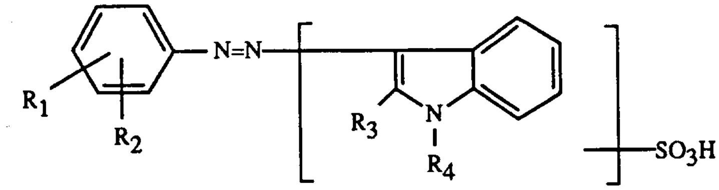

(1),

worin $R_1$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $R_2$ Wasserstoff, Halogen, ein gegebenenfalls substituierter Alkyl-, Aryloxy- oder Aryloxysulfonylrest oder ein Rest der Formel

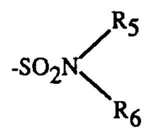

oder

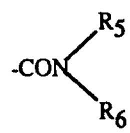

,

$R_3$ ein gegebenenfalls substituierter Alkyl- oder Arylrest, $R_4$ Wasserstoff oder Alkyl und $R_5$ und $R_6$ unabhängig voneinander Wasserstoff oder ein gegebenenfalls substituierter Alkyl-, Cycloalkyl- oder Arylrest ist,

und mindestens einen Farbstoff der Formeln (2) bis (5)

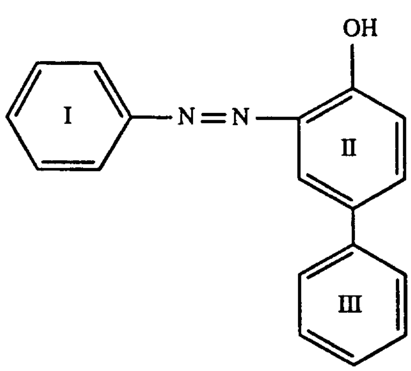

(2),

worin die Benzringe I, II und III substituiert sein können,

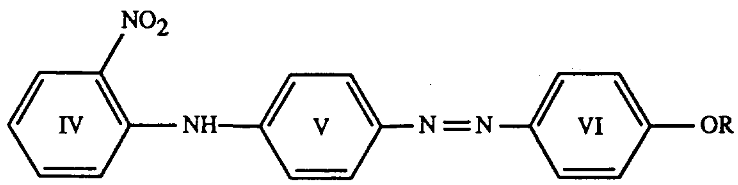

(3),

worin die Benzringe IV, V und VI substituiert sein können und R Wasserstoff oder Arylsulfonyl ist,

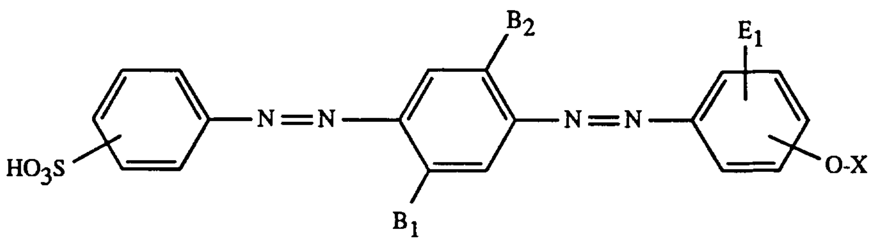

(4),

worin $B_1$, $B_2$ und $E_1$ Wasserstoff, $C_{1-4}$-Alkyl, $C_{1-4}$-Alkoxy oder $C_{2-4}$-Hydroxyalkoxy und X geradkettiges oder verzweigtes $C_{1-4}$-Alkyl oder geradkettiges oder verzweigtes $C_{2-4}$-Hydroxylalkyl bedeuten,
und

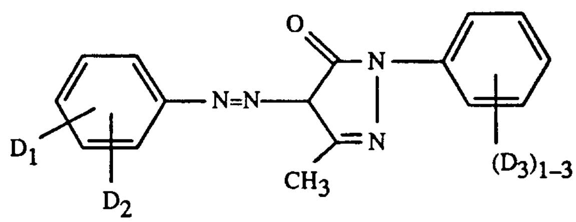

(5),

worin $D_1$ die für $R_1$ in Formel (1) angegebene Bedeutung, und $D_2$ die für $R_2$ in Formel (1) angegebene Bedeutung hat und $(D_3)_{1-3}$ für 1 bis 3 Substituenten $D_3$ steht und $D_3$ Wasserstoff, Halogen, $C_{1-4}$-Alkyl, $C_{1-4}$-Alkoxy oder Sulfo ist, enthält.

Bevorzugt ist die erfindungsgemässe Farbstoffmischung die einen Farbstoff der Formel (1) und einen oder mehrere Farbstoffe der Formel (2), oder einen Farbstoff der Formel (1) und einen oder mehrere Farbstoffe der Formel (3), oder einen Farbstoff der Formel (1), einen oder mehrere Farbstoffe der Formel (2) und einen oder mehrere Farbstoffe der Formel (3) enthält.

Ebenfalls bevorzugt ist die erfindungsgemässe Farbstoffmischung, die einen Farbstoff der Formel (1) und einen oder mehrere Farbstoffe der Formel (4), oder einen Farbstoff der Formel (1) und einen oder mehrere Farbstoffe der Formel (5), oder einen Farbstoff der Formel (1), einen oder mehrere Farbstoffe der Formel (4) und einen oder mehrere Farbstoffe der Formel (5) enthält.

Bedeuten $R_1$, $D_1$ oder $D_3$ $C_{1-4}$-Alkyl, so handelt es sich um Methyl, Äthyl, n-Propyl, Isopropyl, n-Butyl, sek.-Butyl, Isobutyl oder tert.-Butyl.

Bedeuten $R_1$, $D_1$ oder $D_3$ $C_{1-4}$-Alkoxy, so handelt es sich um Methoxy, Äthoxy, n-Propoxy, Isopropoxy, n-Butoxy, sek.-Butoxy, Isobutoxy oder tert.-Butoxy.

Bedeuten $R_1$ oder $D_1$ $C_{2-4}$-Alkanoylamino, so handelt es sich beispielsweise um Acetylamino, Propionylamino oder Butyrylamino.

Bedeutet $R_1$ oder $D_1$ einen gegebenenfalls substituierten Arylsulfonyl-, Aryloxy- oder Arylcarbonylrest, so bedeutet Aryl vorzugsweise einen Rest der Benzol- oder Naphthalinreihe, der weitersubstituiert sein kann, beispielsweise durch $C_{1-4}$-Alkylgruppen, wie Methyl und Äthyl, $C_{1-4}$-Alkoxygruppen, wie Methoxy und Äthoxy, Halogen, wie Fluor, Chlor und Brom, Alkanoylaminogruppen mit 1 bis 6 Kohlenstoffatomen, wie Acetylamino, und Hydroxy.

Bedeuten $R_1$, $R_2$, $D_1$, $D_2$ oder $D_3$ Halogen, so handelt es sich um Fluor, Chlor oder Brom.

Bedeuten $R_2$ oder $D_2$ einen gegebenenfalls substituierten Aryloxy- oder Aryloxysulfonylrest, so bedeutet Aryl einen Rest der Benzol- oder Naphthalinreihe, der weitersubstituiert sein kann, beispielsweise durch $C_{1-4}$-Alkylgruppen, wie Methyl und Äthyl, $C_{1-4}$-Alkoxygruppen, wie Methoxy und Äthoxy, Halogen, wie Fluor, Chlor und Brom, Alkanoylaminogruppen mit 1 bis 6 Kohlenstoffatomen, wie Acetylamino, und Hydroxy.

Bedeuten $R_2$, $R_3$, $R_5$, $R_6$ oder $D_2$ einen gegebenenfalls substituierten Alkylrest, so handelt es sich unabhängig voneinander vorzugsweise um einen geradkettigen oder verzweigten $C_{1-12}$-Alkyl-, insbesondere $C_{1-4}$-Alkylrest, der weitersubstituiert sein kann, z.B. durch Halogen, wie Fluor, Chlor oder Brom, Hydroxy, Cyano, $C_{1-4}$-Alkoxy, wie Methoxy oder Äthoxy, und Alkanoylgruppen mit 1 bis 6 Kohlenstoffatomen, wie die Acetyl- oder Propionylgruppe, und die Benzoylgruppe. Der Alkylrest $R_3$ kann auch durch Sulfo substituiert sein. Als Beispiele für $R_2$, $R_3$, $R_5$ und $R_6$ als Alkylrest seien genannt: Methyl, Äthyl, Propyl, Isopropyl, Butyl, sek.-Butyl, tert.-Butyl, Isobutyl und Trifluormethyl.

Bedeuten $R_3$, $R_5$ und $R_6$ einen gegebenenfalls substituierten Arylrest, so gehört dieser unabhängig voneinander vorzugsweise der Benzol- oder Naphthalinreihe an, er kann weitersubstituiert sein, beispielsweise durch $C_{1-4}$-Alkylgruppen, wie Methyl, $C_{1-4}$-Alkoxygruppen, wie Methoxy und Äthoxy, Halogen, wie Fluor, Chlor oder Brom, Trifluormethyl, Alkanoylaminogruppen mit 1 bis 6 Kohlenstoffatomen, wie Acetylamino, Hydroxy und Carboxy. Der Arylrest $R_3$ kann auch durch Sulfo substituiert sein. Insbesondere ist $R_3$, $R_5$ und $R_6$ als Arylrest ein Phenylrest, der durch Methyl, Trifluormethyl und Chlor substituiert sein kann.

Bedeutet $R_4$ einen Alkylrest, so kommt vorzugsweise ein geradkettiger oder verzweigter $C_{1-12}$-Alkyl- und insbesondere $C_{1-8}$-Alkylrest in Betracht. Als Beispiele seien genannt: Methyl, Äthyl, Propyl, Isopropyl, Butyl, sek.-Butyl, tert.-Butyl, Isobutyl, Pentyl-(1), Pentyl-(3), Heptyl-(1), Heptyl-(3) und Octyl-(1).

Bedeuten $R_5$ und $R_6$ einen gegebenenfalls substituierten Cycloalkylrest, so kommen unabhängig voneinander vorzugsweise Cycloalkylgruppen mit 5- bis 7-gliedrigen Ringen in Betracht, die weitersubstituiert sein können, z.B. durch $C_{1-4}$-Alkyl, wie Methyl. Insbesondere kommt die Cyclohexylgruppe in Betracht.

Als Substituenten der Benzringe I, II, III, IV, V und VI kommen z.B. in Betracht Alkylgruppen mit 1 bis 8, vorzugsweise 1 bis 4 Kohlenstoffatomen, wie z.B. Methyl, Äthyl, Propyl, Isopropyl, Butyl, Isobutyl, sek.-Butyl, tert.-Butyl, Hexyl, Octyl, wobei die Alkylgruppen durch Sulfo oder Sulfato substituiert sein können, Alkoxygruppen mit 1 bis 8 Kohlenstoffatomen, insbesondere 1 bis 4 Kohlenstoffatomen, wie z.B. Methoxy, Äthoxy, Propoxy, Isopropoxy, Butoxy, wobei die Alkoxygruppe im Alkylrest durch Sulfo oder Sulfato substituiert sein kann, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Äthoxycarbonylamino, Alkanoylgruppen mit 2 bis 8, vorzugsweise 2 bis 4 Kohlenstoffatomen, wie z.B. Acetyl, Propionyl, Butyryl oder Isobutyryl, $C_5$-$C_7$-Cycloalkylcarbonyl, wie z.B. Cyclohexylcarbonyl, im Cycloalkylring durch $C_1$-$C_4$-Alkyl, wie z.B. Methyl, Äthyl, Propyl, Butyl, oder Halogen, wie z.B. Fluor, Chlor, Brom, Sulfo oder Sulfato, substituiertes $C_5$-$C_7$-Cycloalkylcarbonyl, Benzoyl, im Phenylring durch $C_1$-$C_4$-Alkyl, wie z.B. Methyl, Äthyl, Propyl, Butyl, oder Halogen, wie z.B. Fluor, Chlor, Brom, Sulfo oder Sulfato, substituiertes Benzoyl, gegebenenfalls durch $C_1$-$C_4$-Alkyl, Halogen, Sulfo oder Sulfato substituiertes Benzthiazol oder Benzoxazol, Benzoylamino, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, $C_5$-$C_7$-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, $C_1$-$C_8$-Alkylaminosulfonyl, $C_1$-$C_4$-Alkylsulfonylaminosulfonyl, gegebenenfalls im Phenylring durch $C_1$-$C_4$-Alkyl, Halogen, wie z.B. Fluor, Chlor, Brom, Sulfo oder Sulfato substituiertes Phenylsulfonyl, Carboxy, Sulfomethyl, Sulfo, Sulfato, Thiosulfato, sowie Phenyl, Naphthyl, Phenoxy, Phenoxysulfonyl, Phenylaminosulfonyl, wobei die angegebenen Phenyl- oder Naphthylreste durch die oben angegebenen Substituenten weitersubstituiert sein können.

Bedeutet R in Formel (3) einen Arylsulfonylrest, so kommt insbesondere ein Phenylsulfonylrest in Betracht, der wie oben für die Benzringe I bis VI angegeben substituiert sein kann.

Als Alkylreste kommen für $B_1$, $B_2$, $E_1$ und X in Formel (4) unabhängig voneinander geradkettige oder verzweigte Alkylreste in Betracht, wie beispielsweise Methyl, Äthyl, Propyl, Isopropyl, Butyl, sek.-Butyl, Isobutyl und tert.-Butyl.

Als Alkoxyreste kommen für $B_1$, $B_2$ und $E_1$ in Formel (4) beispielsweise der Methoxy-, Äthoxy-, Propoxy-, Isopropoxy-, Butoxy-, sek.-Butoxy-, Isobutoxy- oder tert.-Butoxyrest in Betracht.

Als Hydroxyalkoxyrest kommen für $B_1$, $B_2$ und $E_1$ in Formel (4) ein geradkettiger oder verzweigter Hydroxyalkoxyrest in Betracht, wie beispielsweise der $\beta$-Hydroxyäthoxy-, $\beta$-Hydroxypropoxy-, $\beta$-Hydroxybutoxy- oder der $\alpha$-Äthyl-$\beta$-hydroxyäthoxyrest.

Als Hydroxyalkylrest kommt für X in Formel (4) ein geradkettiger oder verzweigter Hydroxyalkylrest in Betracht, wie z.B. der $\beta$-Hydroxyäthyl-, $\beta$-Hydroxypropyl-, $\beta$-Hydroxybutyl- oder der $\alpha$-Äthyl-$\beta$-hydroxyäthyl-

rest.

Bevorzugt ist eine Farbstoffmischung, die einen Farbstoff der Formel (1), worin $R_1$ Wasserstoff, $C_{1-4}$-Alkyl, $C_{1-4}$-Alkoxy, Halogen, $C_{2-4}$-Alkanoylamino, ein gegebenenfalls durch $C_{1-4}$-Alkyl oder Halogen substituierter Phenylsulfonyl-, Naphthylsulfonyl-, Phenyloxy- oder Phenylcarbonylrest, $R_2$ Wasserstoff, Halogen, $C_{1-4}$-Alkyl, Trifluormethyl, ein gegebenenfalls durch $C_{1-4}$-Alkyl oder Halogen substituierter Phenoxy- oder Phenoxysulfonylrest,

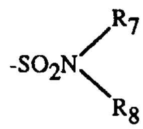

oder

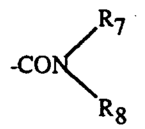

,

$R_3$ $C_{1-4}$-Alkyl oder Phenyl, $R_4$ Wasserstoff oder $C_{1-8}$-Alkyl und $R_7$ und $R_8$ unabhängig voneinander Wasserstoff, $C_{1-4}$-Alkyl, $C_{1-4}$-Hydroxyalkyl, $C_{5-7}$-Cycloalkyl, Phenyl oder durch Halogen, Trifluormethyl oder $C_{1-4}$-Alkyl substituiertes Phenyl ist, und einen oder mehrere Farbstoffe der Formeln (2), (3), (4) oder (5) enthält.

Besonders bevorzugt ist eine Farbstoffmischung, welche als Farbstoff der Formel (1) einen Farbstoff der Formel

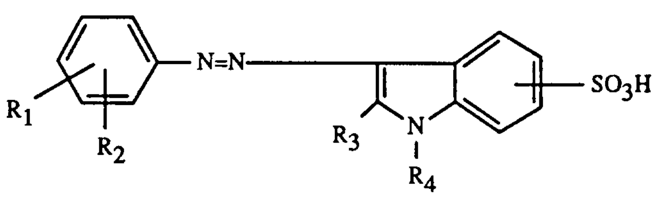

(6),

worin $R_1$, $R_2$, $R_3$ und $R_4$ die unter Formel (1) angegebenen Bedeutungen haben,
insbesondere worin $R_1$ Wasserstoff, Methyl, Chlor, Methoxy, Äthoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-Methyl-N-$\beta$-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Äthyl-N-phenylaminosulfonyl, $-CONH_2$ oder $-CON(CH_3)_2$, $R_3$ Methyl oder Phenyl und $R_4$ Wasserstoff, Methyl, Äthyl oder Octyl ist, und einen oder mehrere Farbstoffe der Formeln (2), (3), (4) oder (5) enthält.

Ganz besonders bevorzugt ist eine Farbstoffmischung, die einen Farbstoff der Formel (6) und mindestens einen Farbstoff der Formel

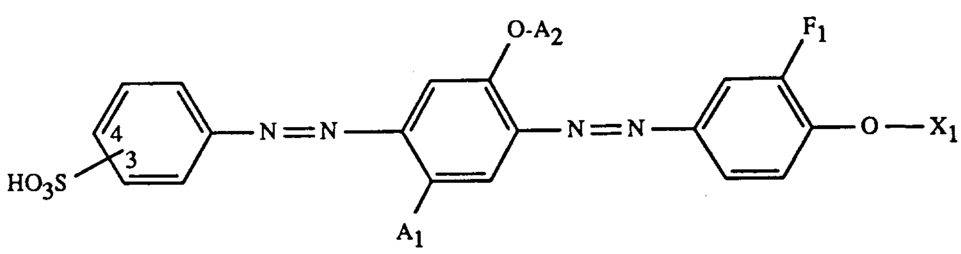

(7),

worin $A_1$ Wasserstoff oder Methyl, $F_1$ Wasserstoff oder Methyl und $A_2$ und $X_1$ unabhängig voneinander Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist, enthält.

Als bevorzugte Farbstoffe der Formel (7) kommen z.B. die folgenden Farbstoffe in Betracht:

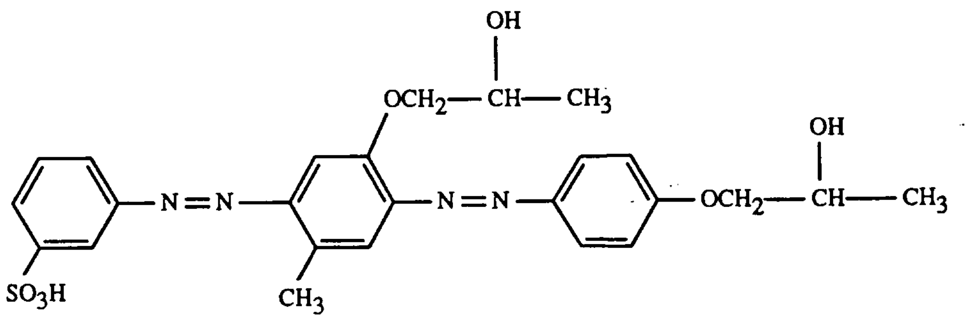

(7a)

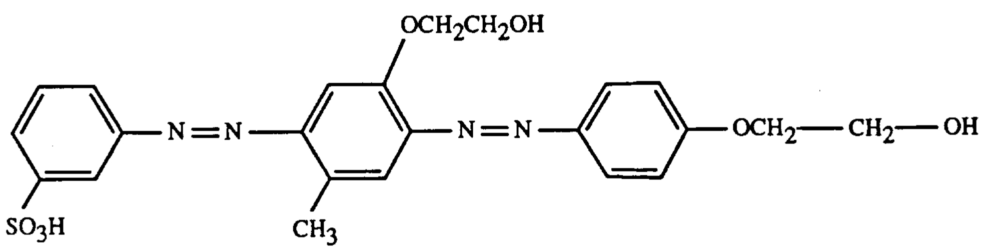

(7b)

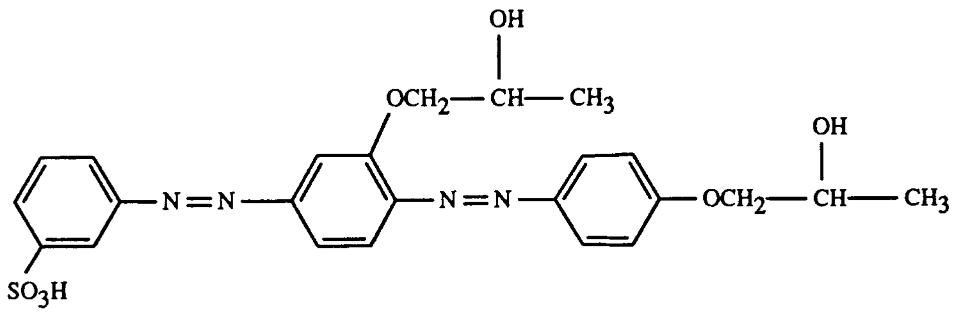

(7c)

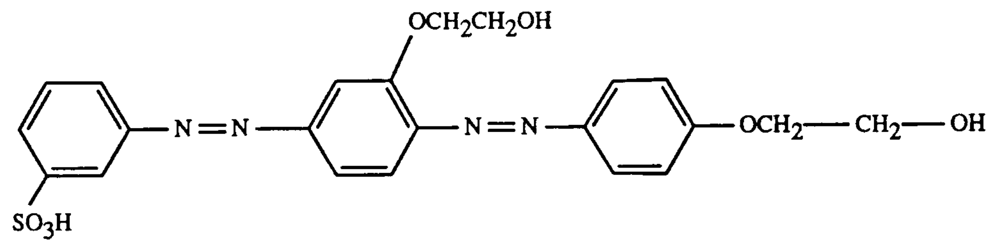

(7d)

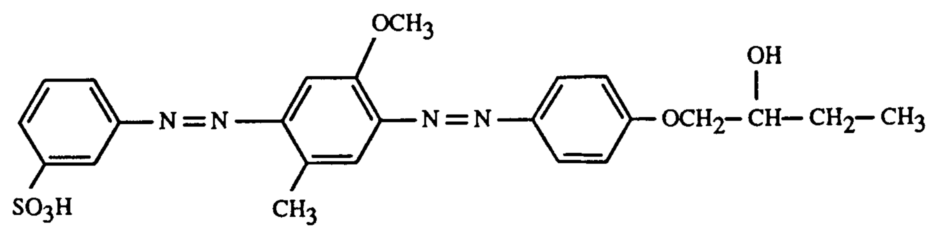

(7e)

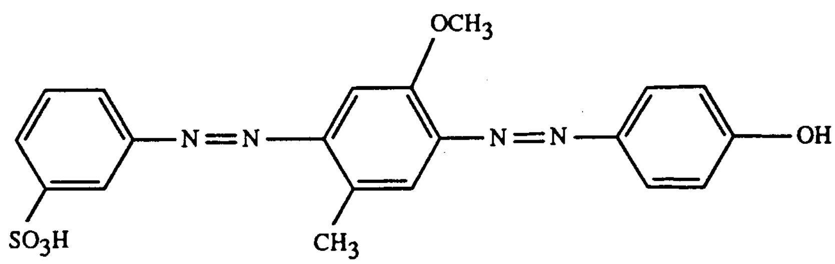

(7f)

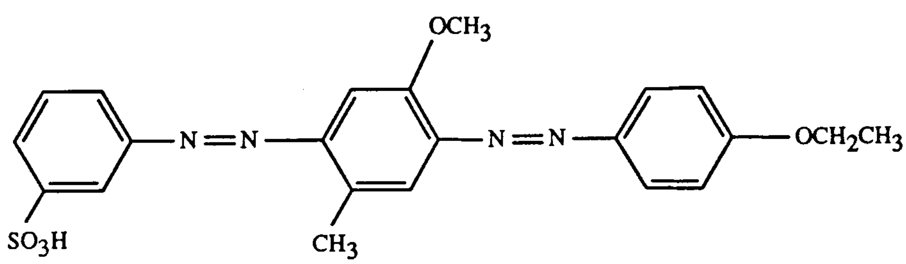

(7g)

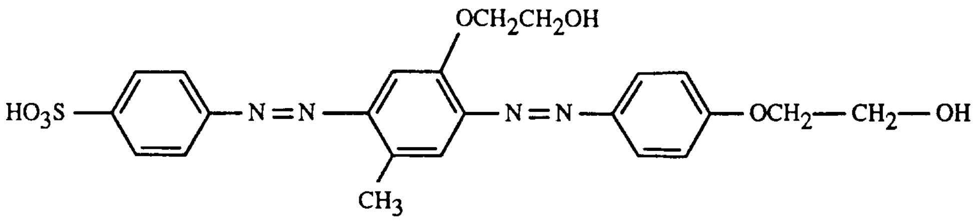

(7h)

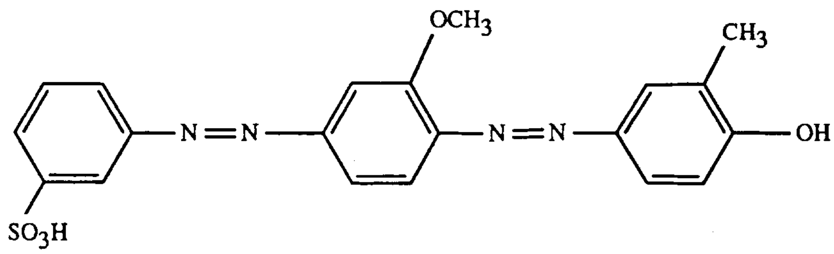

(7i)

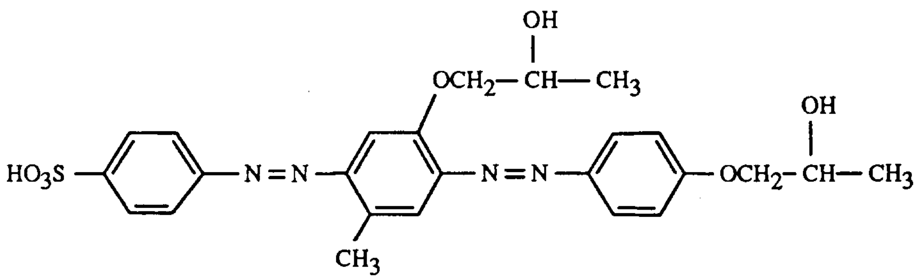

(7j)

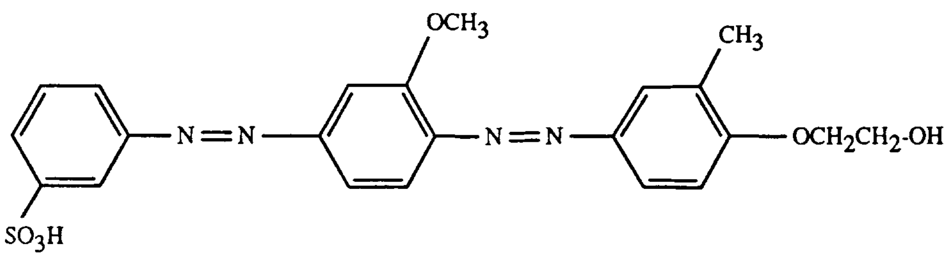

(7k)

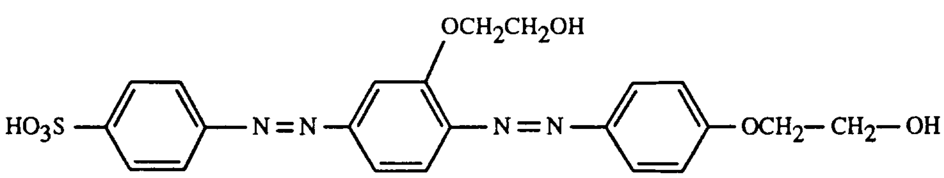

(7l)

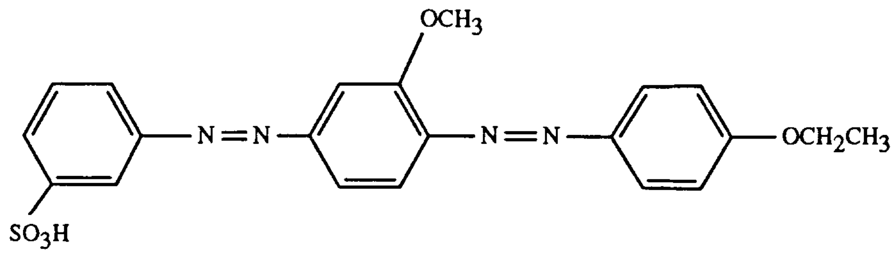

(7m)

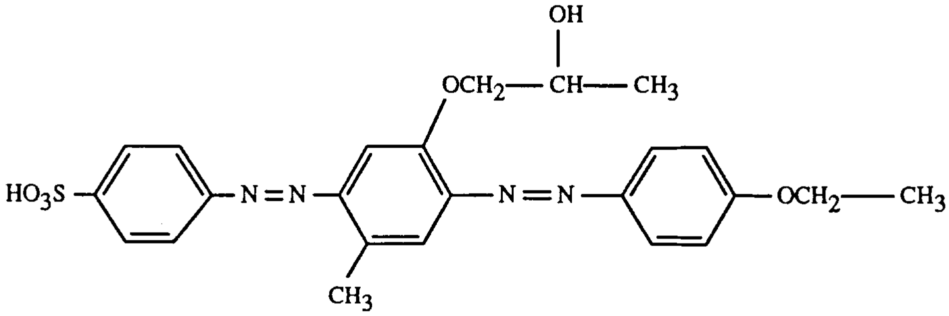

(7n)

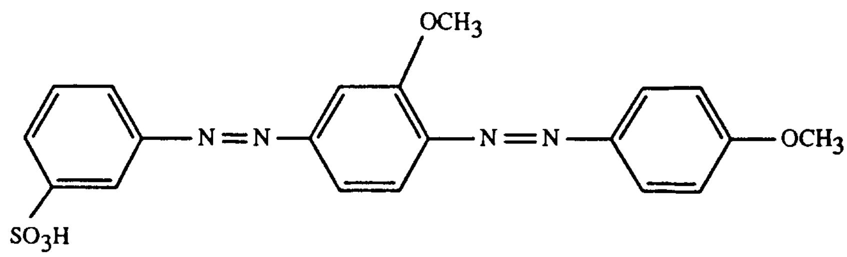

(7o)

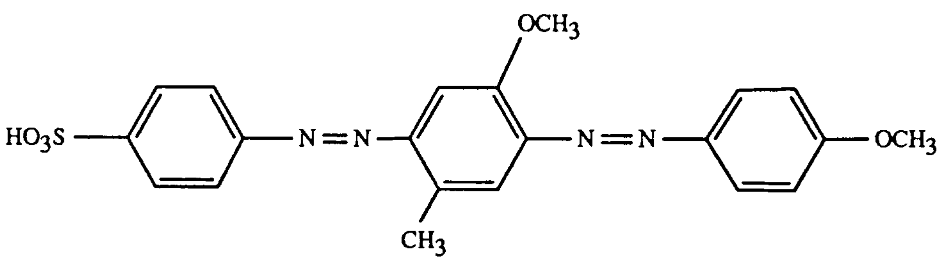

(7p)

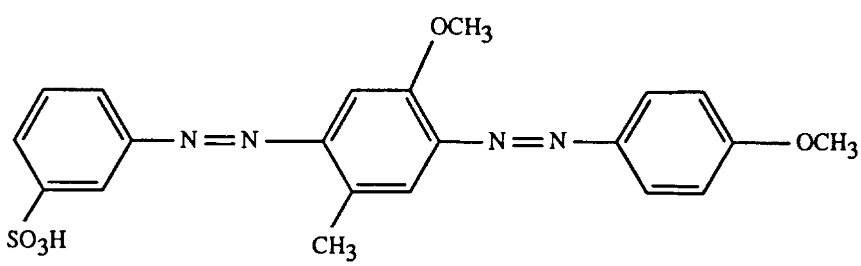

(7q)

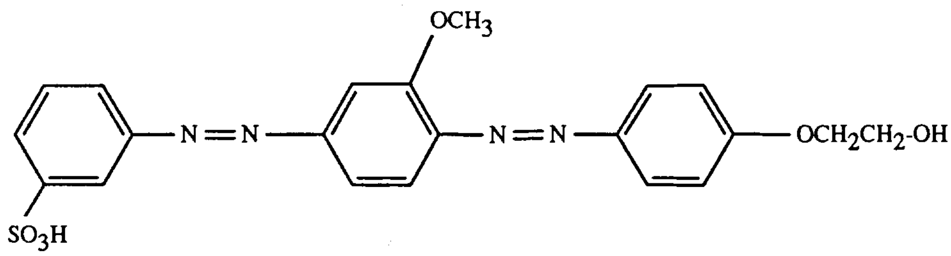
(7r)

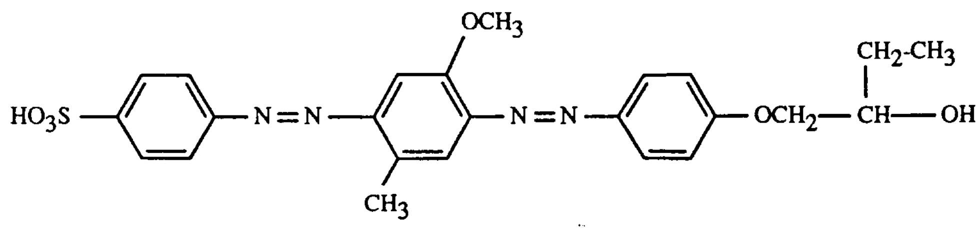
(7s)

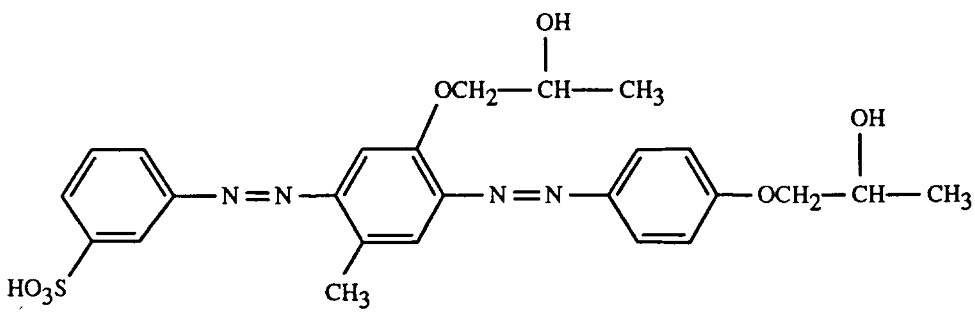
(7t)

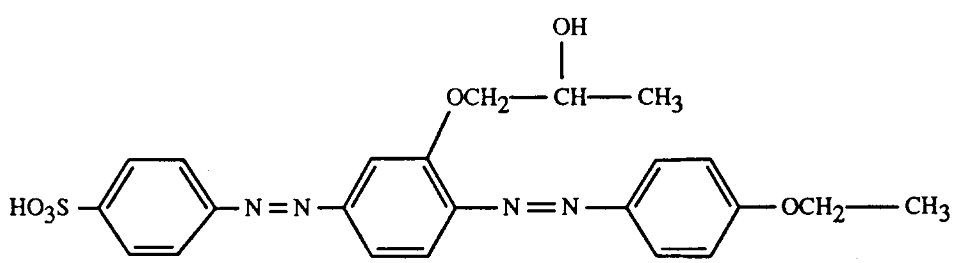
(7u)

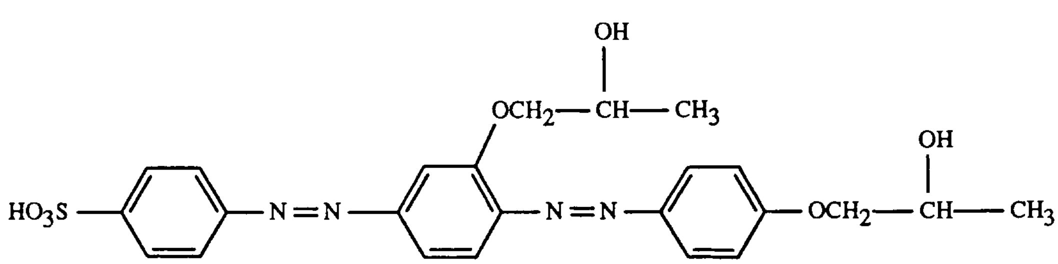
(7v)

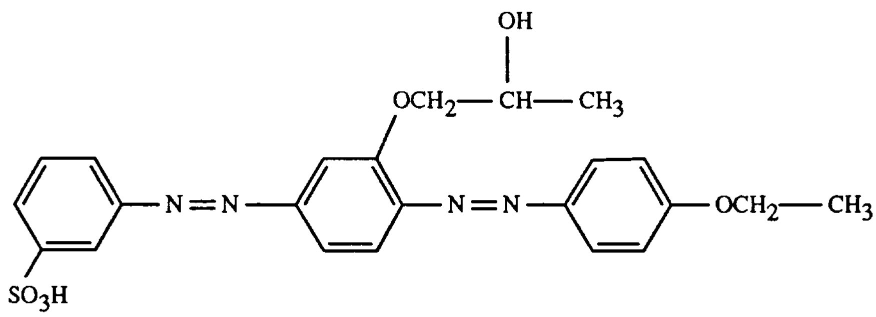

(7w)

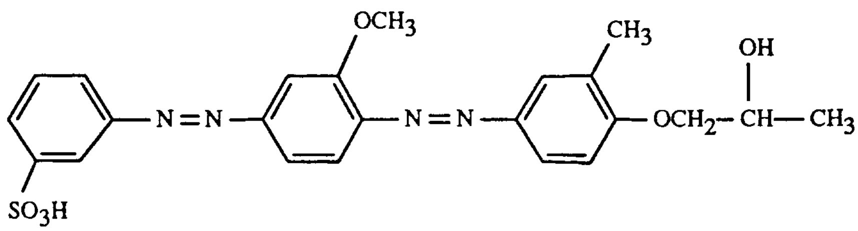

(7x)

oder

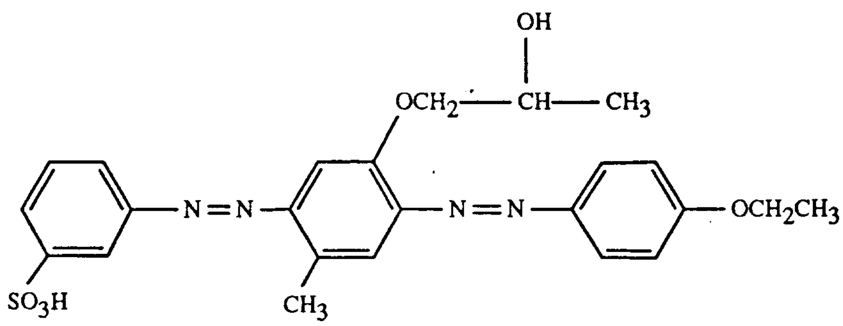

(7y).

Ganz besonders bevorzugt ist ebenfalls eine Farbstoffmischung, die einen Farbstoff der Formel (6) und mindestens einen Farbstoff der Formeln (8), (9), (10) und (11)

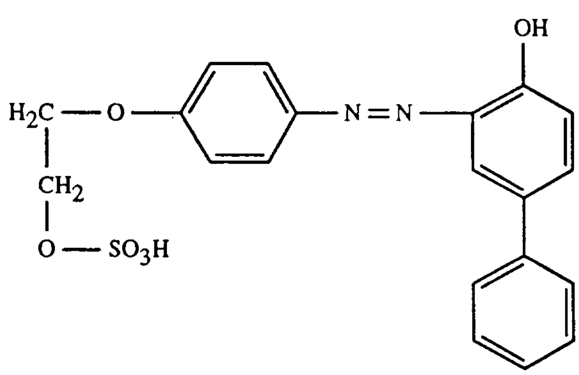

(8)

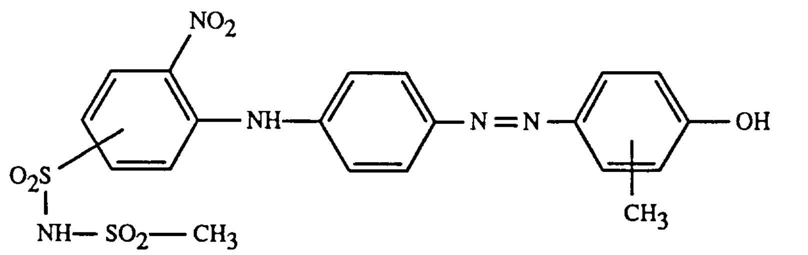

(9)

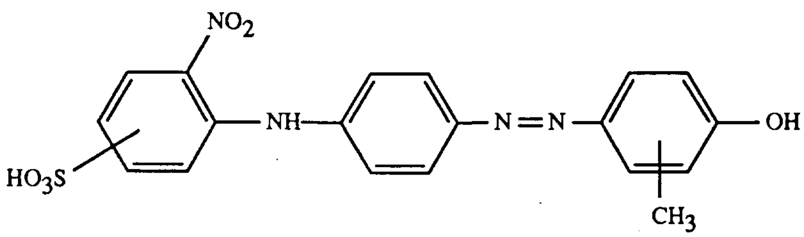

(10)

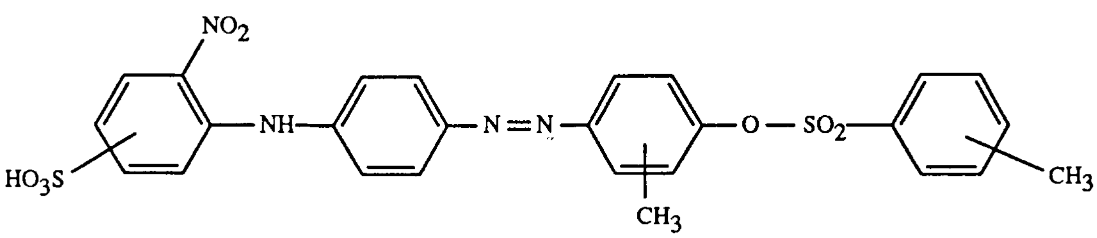

(11)

enthält. Insbesondere enthält die Farbstoffmischung einen Farbstoff der Formel (6) und einen Farbstoff der Formel (8), (9), (10) oder (11).

Ganz besonders bevorzugt ist ferner eine Farbstoffmischung, die einen Farbstoff der Formel (6) und einen Farbstoff der Formel

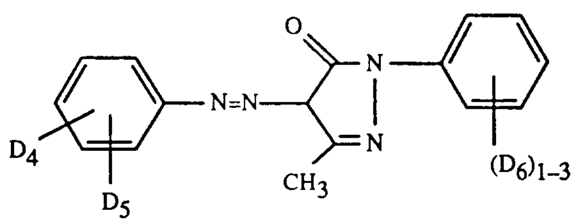

(12),

worin $D_4$ Chlor oder Phenylaminosulfonyl und $D_5$ Wasserstoff oder Sulfo ist und $(D_6)_{1-3}$ für 1 bis 3 Substituenten $D_6$ steht und $D_6$ Wasserstoff, Chlor oder Sulfo ist, enthält.

Als bevorzugte Farbstoffe der Formel (12) kommen z.B. die folgenden Farbstoffe in Betracht:

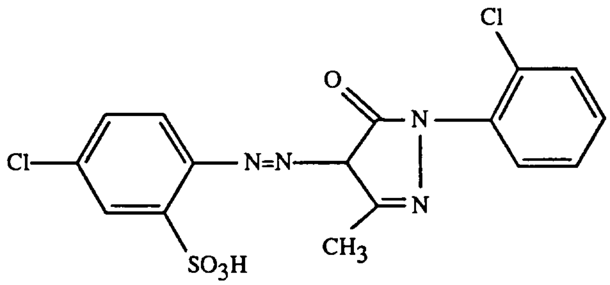

(12a),

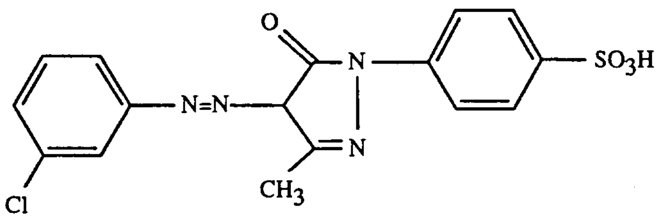

(12b),

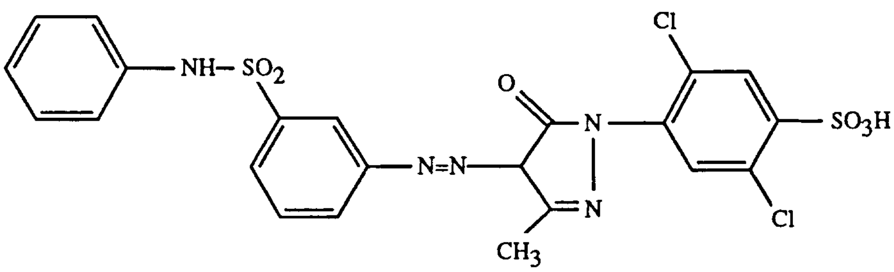

(12c)

oder

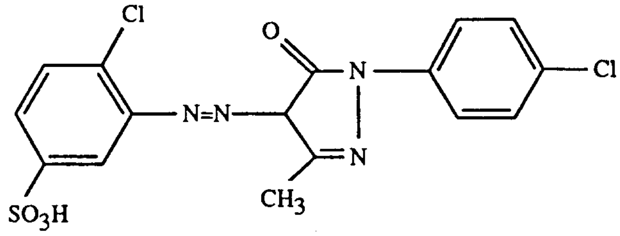

(12d) .

Besonders wichtig ist eine Farbstoffmischung, die einen Farbstoff der Formel

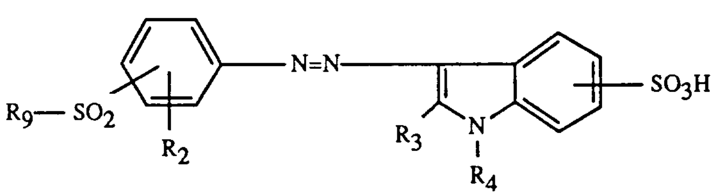

(13),

worin $R_2$, $R_3$ und $R_4$ die unter Formel (6) angegebenen Bedeutungen haben und $R_9$ ein gegebenenfalls durch $C_{1-4}$-Alkyl und Halogen substituierter Phenylrest oder Naphthyl ist, insbesondere worin $R_2$ Wasserstoff, $R_3$ Phenyl, $R_4$ Wasserstoff und $R_9$ Phenyl ist, und einen Farbstoff der Formel (7), insbesondere einen

Farbstoff der Formel (7a) bis (7y), enthält.

Ganz besonders wichtig ist eine Farbstoffmischung, die den Farbstoff der Formel

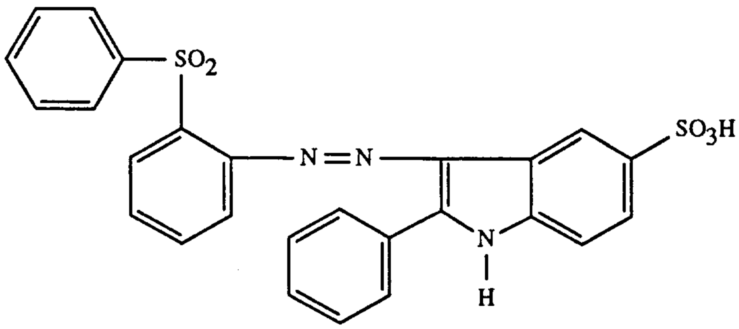

(14)

und den Farbstoff der Formel

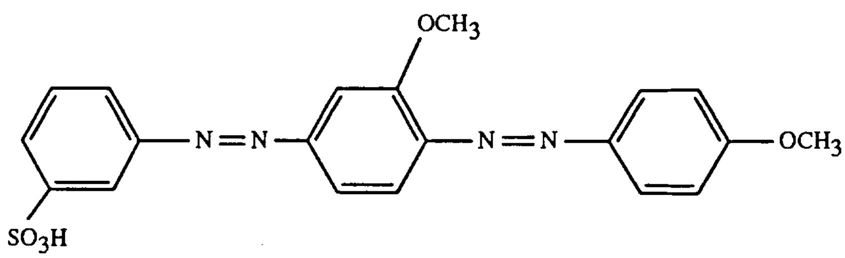

(7o)

oder den Farbstoff der Formel

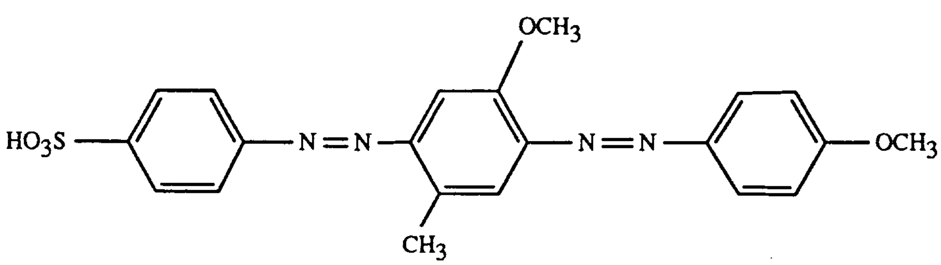

(7p)

enthält.

Besonders wichtig ist ferner eine Farbstoffmischung, die einen Farbstoff der Formel (13) und einen Farbstoff der Formel (8), (9), (10) oder (11) enthält.

Ganz besonders wichtig ist ferner eine Farbstoffmischung, die den Farbstoff der Formel (14) und den Farbstoff der Formel (8) oder den Farbstoff der Formel

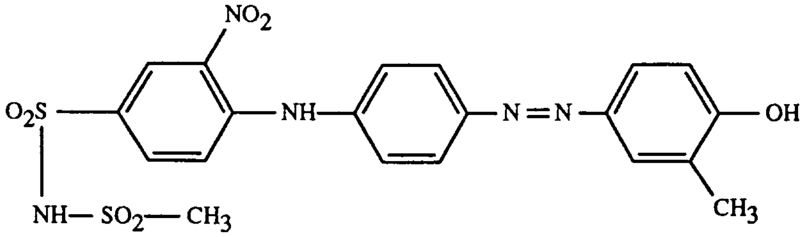

(15)

oder

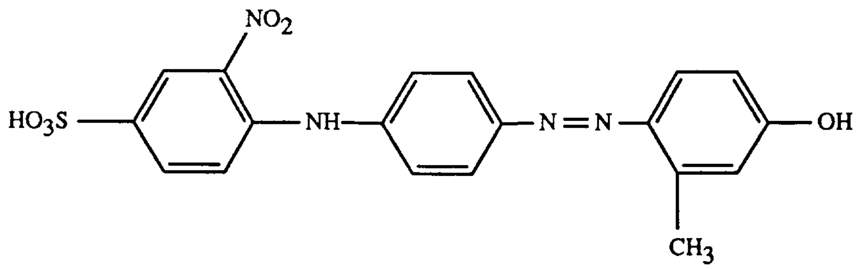

(16)

oder

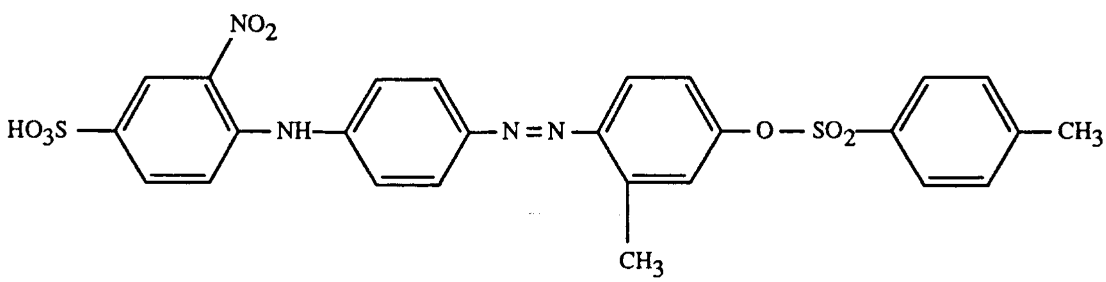

(17)

enthält.

In den erfindungsgemässen Farbstoffmischungen ist das Verhältnis der Farbstoffe der Formeln (1) und (2) oder (3) oder (1) und (4) oder (5) von 20:80 bis 80:20 und insbesondere von 40:60 bis 60:40 bevorzugt. Das Verhältnis der Farbstoffe der Formeln (1) und (2) oder (1) und (3) oder (1) und (4) oder (1) und (5) und insbesondere (14) und (8), (9), (10) oder (11) und (14) und (15), (16) oder (17) und (14) und (7) und (14) und (7o) oder (7p) von 55:45 bis 45:55 ist ganz besonders bevorzugt. In den erfindungsgemässen Farbstoffmischungen die drei Farbstoffe enthalten, ist das Verhältnis des Farbstoffes der Formel (1) und der 2 Farbstoffe der Formeln (2) bis (5) 10:10:80, 10:80:10 bis 80:10:10, insbesondere 20:20:60, 20:60:20 bis 60:20:20.

Die Farbstoffe der Formeln (1), (2), (3), (4) und (5) sind bekannt.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen hergestellt werden.

Gegenstand der Erfindung ist ferner ein Verfahren zum Färben und Bedrucken von natürlichen oder synthetischen Polyamidmaterialien mit einer Farbstoffmischung, die einen Farbstoff der Formel (1) und mindestens einen Farbstoff der Formeln (2), (3), (4) bzw. (5) enthält. Als synthetische Polyamidmaterialien kommen z.B. Polyamid 6.6- oder Polyamid 6-Fasermaterialien in Betracht und als natürliche Polyamidmaterialien z.B. Wolle. Zum Färben und Bedrucken werden dabei die üblichen Färbe- bzw. Druckverfahren angewendet.

Die Farbstoffmischung mit einem Farbstoff der Formel (1) und mindestens einem Farbstoff der Formeln (2), (3), (4) und (5) eignet sich besonders zum Farben und Bedrucken in Kombination mit anderen Farbstoffen und insbesondere zum Färben und Bedrucken nach dem Trichromie-Prinzip. Unter Trichromie ist dabei die additive Farbmischung dreier passend gewählter gelb-, rot- und blaufärbender Farbstoffe in den zur Erzielung der gewünschten Nuance notwendigen Mengen zu verstehen. Besonders geeignet ist die erfindungsgemässe Farbstoffmischung zum Färben aus Kurzflotten wie z.B. bei Kontinuefärbeverfahren oder diskontinuierlichen und kontinuierlichen Schaumfärbeverfahren.

Die erfindungsgemässe Farbstoffmischung zeichnet sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen sowie gleichmässiges gutes Ziehverhalten auf unterschiedlichen Fasermaterialien aus.

Das zu färbende oder zu bedruckende Textilmaterial kann in verschiedenen Verarbeitungsformen vorliegen, wie z.B. als Faser, Garn, Gewebe oder Gewirke und insbesondere in Form von Teppichen.

In der erfindungsgemässen Farbstoffmischung liegen die Farbstoffe der Formeln (1), (2), (3), (4) und (5) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischung enthält in der Regel weitere Zusätze wie z.B. Kochsalz oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker wie z.B. Alginate und Celluloseäther, enthalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1A: Zur Herstellung der Farbstoffmischung, die einen Farbstoff der Formel

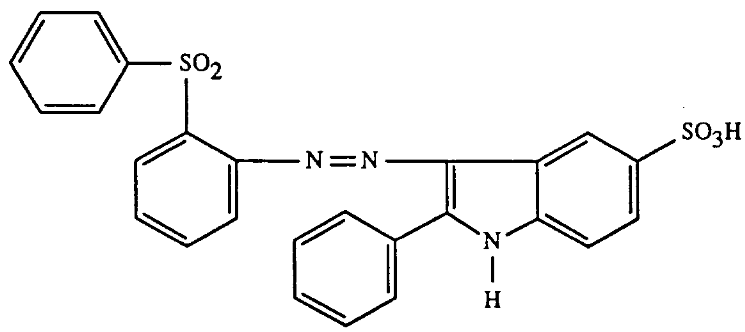

(101)

und einen Farbstoff der Formel

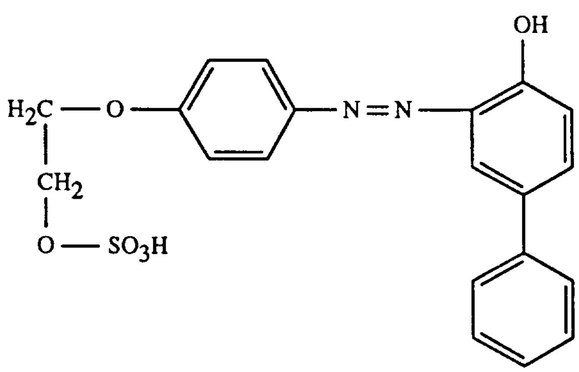

(102)

oder

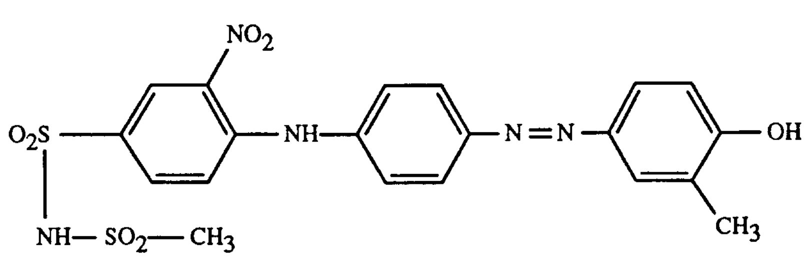

(103)

oder

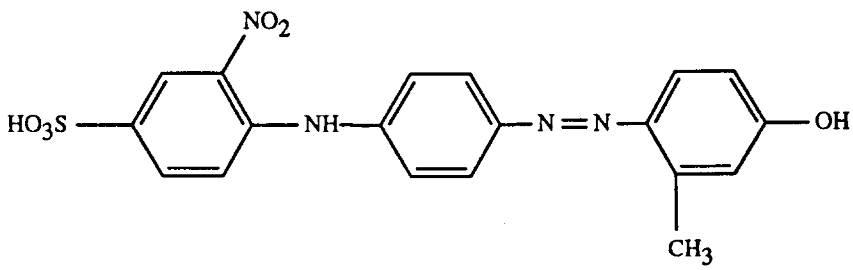

(104)

oder

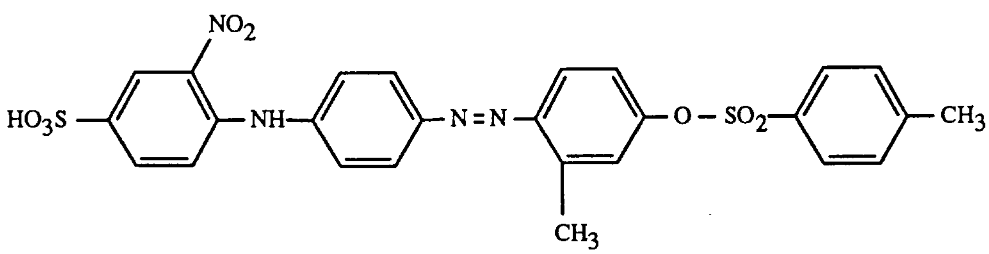

(105)

enthält, werden in einem Mixer

a) 30 Teile des Farbstoffs der Formel (101) und 70 Teile des Farbstoffs der Formel (102) homogen gemischt und ergeben 100 Teile der Mischung, die im folgenden als Farbstoffmischung A bezeichnet wird;

b) 60 Teile des Farbstoffs der Formel (101) und 40 Teile des Farbstoffs der Formel (102) homogen gemischt und ergeben 100 Teile der Mischung, die im folgenden als Farbstoffmischung B bezeichnet wird;

c) 80 Teile des Farbstoffs der Formel (101) und 20 Teile des Farbstoffs der Formel (104) homogen gemischt und ergeben 100 Teile der Mischung, die im folgenden als Farbstoffmischung C bezeichnet wird;

d) 30 Teile des Farbstoffs der Formel (105) und 70 Teile des Farbstoffs der Formel (101) homogen gemischt und ergeben 100 Teile der Mischung, die im folgenden als Farbstoffmischung D bezeichnet wird;

e) 60 Teile des Farbstoffs der Formel (103) und 40 Teile des Farbstoffs der Formel (101) homogen gemischt und ergeben 100 Teile der Mischung, die im folgenden als Farbstoffmischung E bezeichnet wird;

f) 80 Teile des Farbstoffs der Formel (104) und 20 Teile des Farbstoffs der Formel (101) homogen gemischt und ergeben 100 Teile der Mischung, die im folgenden als Farbstoffmischung F bezeichnet wird.

Beispiel 1B: Zur Herstellung der Farbstoffmischung, die einen Farbstoff der Formel

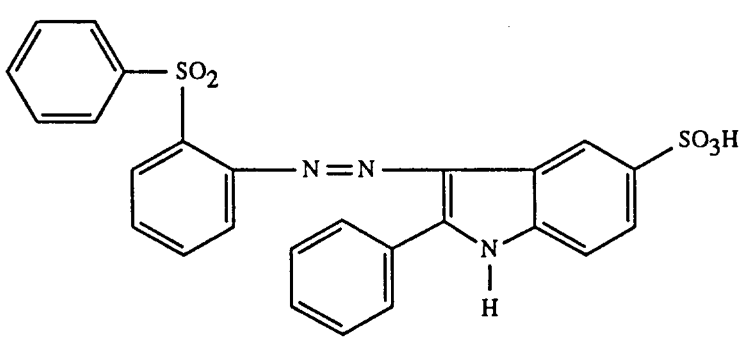

(101)

und einen Farbstoff der Formel

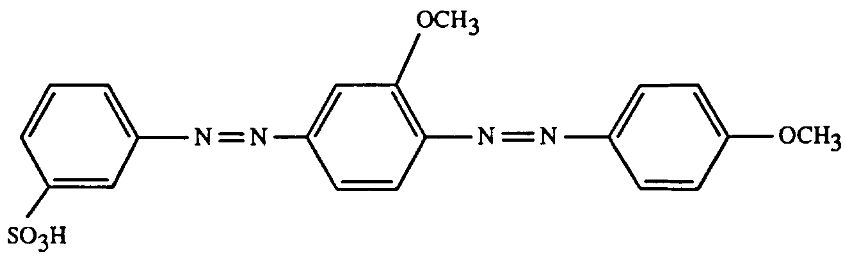

(106)

oder einen Farbstoff der Formel

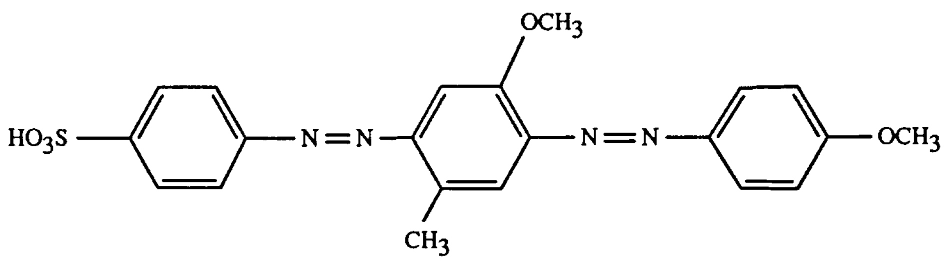

(107)

enthält, werden in einem Mixer

g) 30 Teile des Farbstoffs der Formel (101) und 70 Teile des Farbstoffs der Formel (106) homogen gemischt und ergeben 100 Teile der Mischung, die im folgenden als Farbstoffmischung G bezeichnet wird;

h) 60 Teile des Farbstoffs der Formel (101) und 40 Teile des Farbstoffs der Formel (106) homogen gemischt und ergeben 100 Teile der Mischung, die im folgenden als Farbstoffmischung H bezeichnet wird;

i) 80 Teile des Farbstoffs der Formel (101) und 20 Teile des Farbstoffs der Formel (106) homogen gemischt und ergeben 100 Teile der Mischung, die im folgenden als Farbstoffmischung I bezeichnet wird;

j) 30 Teile des Farbstoffs der Formel (107) und 70 Teile des Farbstoffs der Formel (101) homogen gemischt und ergeben 100 Teile der Mischung, die im folgenden als Farbstoffmischung J bezeichnet wird;

k) 60 Teile des Farbstoffs der Formel (107) und 40 Teile des Farbstoffs der Formel (101) homogen gemischt und ergeben 100 Teile der Mischung, die im folgenden als Farbstoffmischung K bezeichnet wird;

l) 80 Teile des Farbstoffs der Formel (107) und 20 Teile des Farbstoffs der Formel (101) homogen gemischt und ergeben 100 Teile der Mischung, die im folgenden als Farbstoffmischung L bezeichnet wird.

Beispiel 2: Man färbt 10 Teile Polyamid 6.6-Fasermaterial (Helancatrikot) in 500 Teilen einer wässrigen Flotte, die 2 g/l Ammonacetat enthält und mit Essigsäure auf pH 5 gestellt wird. Als Farbstoffe werden 0,27 % der gelben Farbstoffmischung A gemäss Beispiel 1a), 0,12 % des roten Farbstoffs der Formel

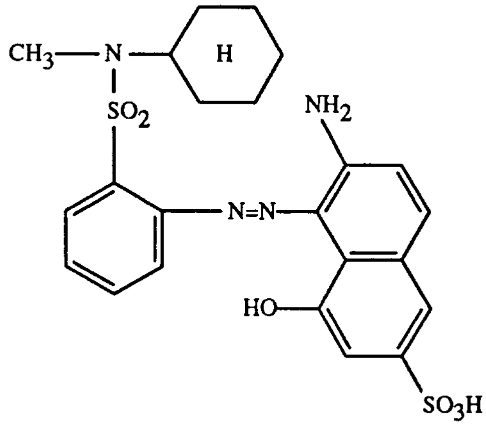

(108)

und 0,13 % des Farbstoffs der Formel

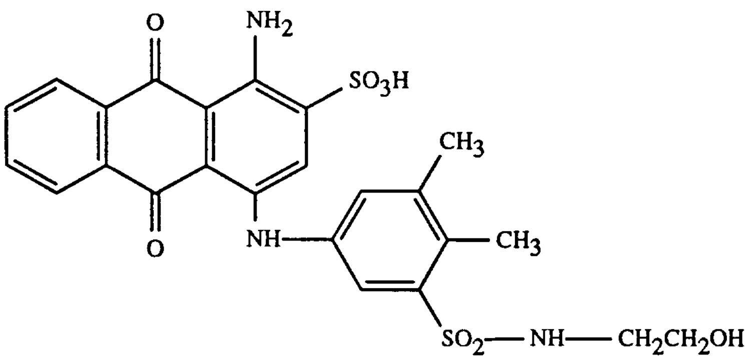

(109)

verwendet, wobei sich die Mengenangaben auf das Fasergewicht beziehen. Die Färbedauer bei einer Temperatur von 60 bis 98° beträgt 30 bis 90 Minuten. Das gefärbte Polyamid 6.6-Fasermaterial wird anschliessend herausgenommen und wie üblich gespült und getrocknet. Man erhält ein in neutral braunem Farbton völlig egal gefärbtes Gewebestück, das keinerlei materialbedingte Streifigkeit aufweist.

Verwendet man anstelle von 0,27 % der gelben Farbstoffmischung A und 0,12 % des roten Farbstoffs der Formel (108) sowie 0,13 % des blauen Farbstoffs der Formel (109) die in der folgenden Tabelle 1 angegebenen Farbstoffe der Formeln (108) und (109) sowie die Farbstoffmischungen aus Beispiel 1, so erhält man die in dem angegebenen Farbton völlig egal gefärbten Gewebestücke.

Tabelle 1

| Beispiel | verwendete Farbstoffe | Farbton |
|---|---|---|
| 3 | 0,18 % der Farbstoffmischung B<br>0,18 % des Farbstoffs der Formel (108)<br>0,077 % des Farbstoffs der Formel (109) | rotstichig braun |
| 4 | 0,25 % der Farbstoffmischung C<br>0,04 % des Farbstoffs der Formel (108)<br>0,14 % des Farbstoffs der Formel (109) | oliv |
| 5 | 0,27 % der Farbstoffmischung D<br>0,12 % des Farbstoffs der Formel (108)<br>0,13 % des Farbstoffs der Formel (109) | neutrales braun |
| 6 | 0,18 % der Farbstoffmischung E<br>0,17 % des Farbstoffs der Formel (108)<br>0,07 % des Farbstoffs der Formel (109) | rotstichig braun |
| 7 | 0,25 % der Farbstoffmischung F<br>0,036 % des Farbstoffs der Formel (108)<br>0,124 % des Farbstoffs der Formel (109) | oliv |
| 8 | 0,18 % der Farbstoffmischung H<br>0,18 % des Farbstoffs der Formel (108)<br>0,077 % des Farbstoffs der Formel (109) | rotstichig braun |
| 9 | 0,25 % der Farbstoffmischung I<br>0,04 % des Farbstoffs der Formel (108)<br>0,14 % des Farbstoffs der Formel (109) | oliv |
| 10 | 0,27 % der Farbstoffmischung J<br>0,12 % des Farbstoffs der Formel (108)<br>0,13 % des Farbstoffs der Formel (109) | neutrales braun |

| | | |
|---|---|---|
| 11 | 0,18 % der Farbstoffmischung K<br>0,17 % des Farbstoffs der Formel (108)<br>0,07 % des Farbstoffs der Formel (109) | rotstichig braun |
| 12 | 0,25 % der Farbstoffmischung L<br>0,036 % des Farbstoffs der Formel (108)<br>0,124 % des Farbstoffs der Formel (109) | oliv |
| 13 | 0,27 % der Farbstoffmischung G<br>0,12 % des Farbstoffs der Formel (108<br>0,13 % des Farbstoffs der Formel (109) | braun |

Beispiel 14: Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27 % der Farbstoffmischung H, 0,12 % des Farbstoffs der Formel (108) und 0,13 % des Farbstoffs der Formel (109) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

Verwendet man anstelle der Farbstoffmischung H 0,27 % der Farbstoffmischung B, so erhält man ebenfalls ein in neutral braunem Farbton gefärbtes Garn.

Beispiel 15: (Teppichausziehverfahren):

Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Öffnen der entsprechenden Ventile (Nebenkessel, bzw. Verbindungsleitungen, Pumpe/Färbekessel) strömt die Flotte aus dem Nebenkessel mit eigenem Gefälle in den Färbekessel, dabei fliesst die verdrängte Luft durch Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fliessrichtung) eine Bohrung angebracht und eine kombinierte Glaselektrode eingeführt. Die Färbeflotte zirkuliert während des gesamten Färbeprozesses von innen nach aussen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml Wasser, innerhalb von 5 Minuten in den Nebenkessel zugegeben.

Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g der gelben Farbstoffmischung H und 1,8 g des blauen Farbstoffs der Formel (109), beide gelöst in 200 ml heissem Wasser, innerhalb von 10 Minuten aus einem Tropftrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml 1n Schwefelsäure zudosiert.

Der pH-Wert beträgt nach weiteren 10 Minuten 3,8. Das Färbebad ist erschöpft, d.h. die Farbstoffe sind zu über 99 % auf das Färbegut aufgezogen. Die Beheizung wird abgestellt und mit Hilfe der indirekten Kühlung der Färbeflotte auf 60° gekühlt. Während dieser Zeit erhöht sich der pH-Wert auf 3,9. Die fast wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal grün gefärbt.

Wenn man wie in Beispiel 15 angegeben vorgeht und anstelle der dort verwendeten Farbstoffmischung H die gleiche Menge einer Farbstoffmischung aus 50 Gewichtsprozent des Farbstoffs der Formel (101) und 50 Gewichtsprozent eines der in der folgenden Tabelle angegebenen Farbstoffs verwendet, so erhält man ebenfalls flächenegal grün gefärbte Polyamid-6-Schlingen-Teppichware.

Tabelle

Beispiel

16 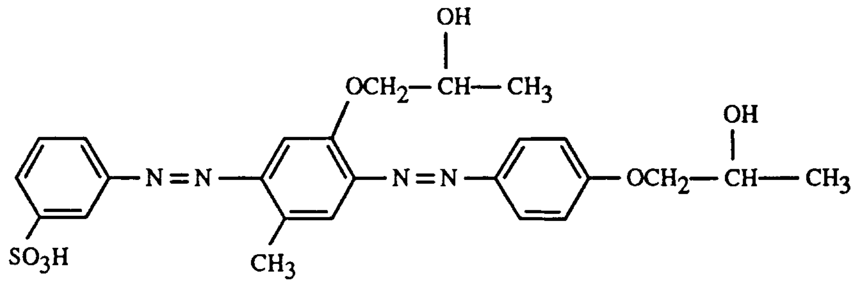 (110)

17 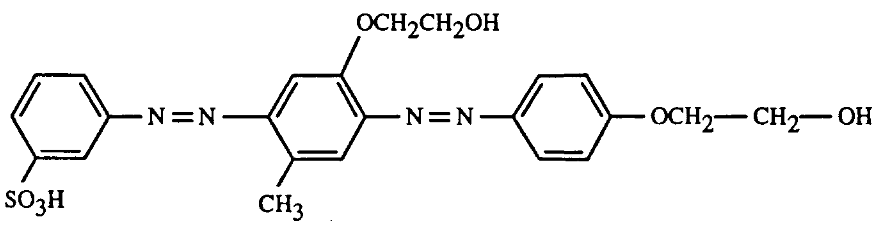 (111)

18 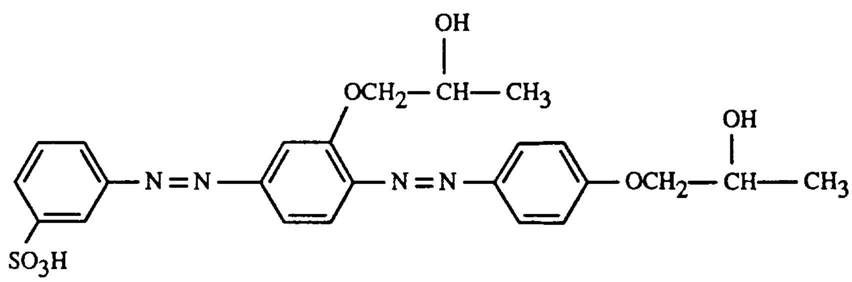 (112)

19 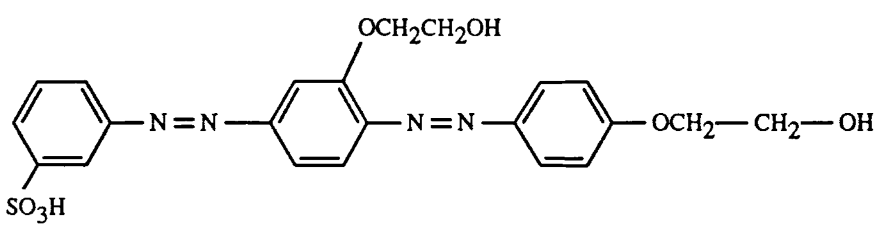 (113)

20 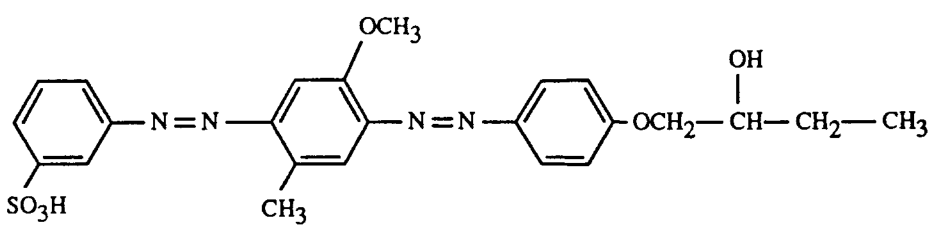 (114)

21 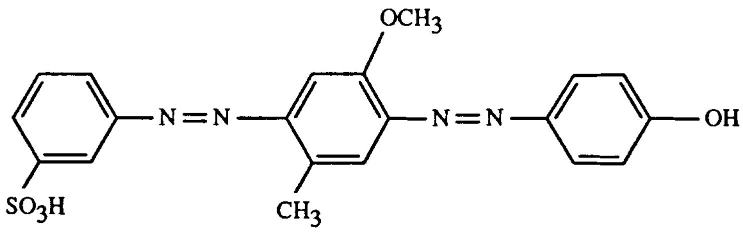 (115)

22 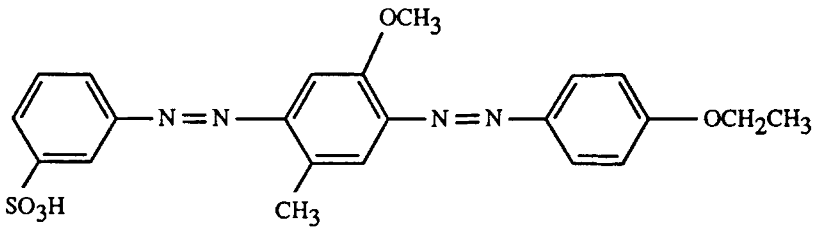 (116)

23 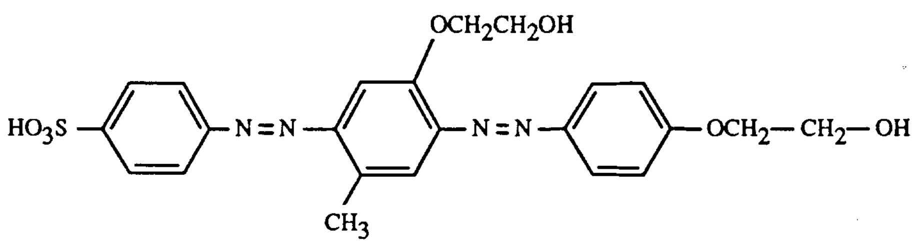 (117)

24 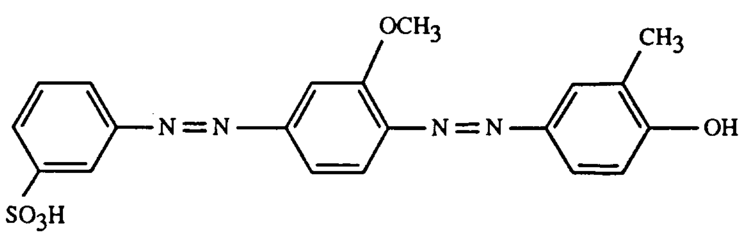 (118)

25 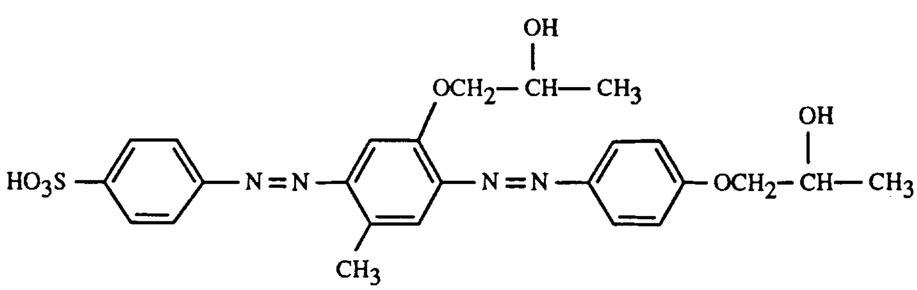 (119)

26 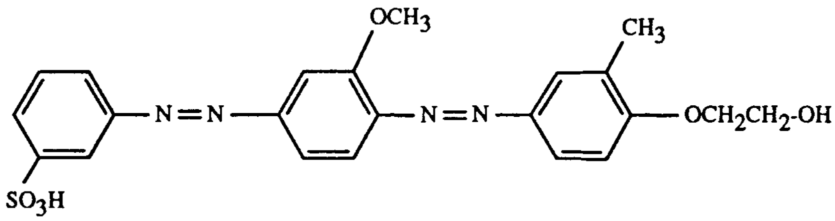 (120)

27 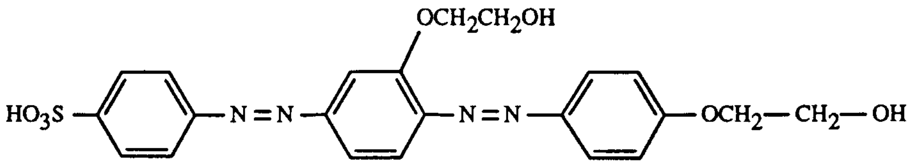 (121)

28 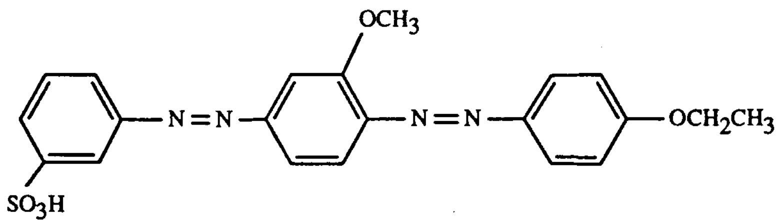 (122)

29 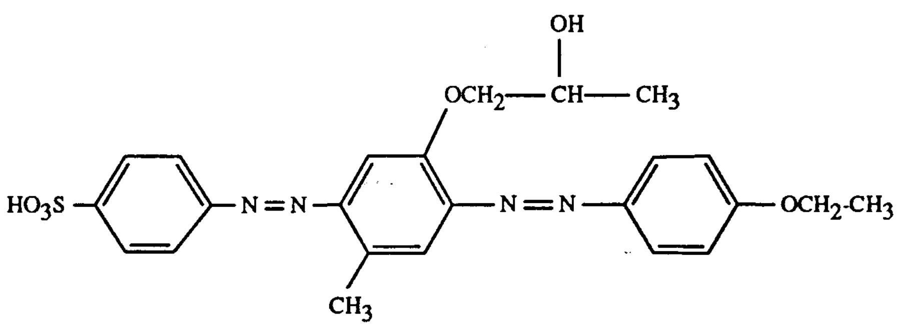 (123)

30 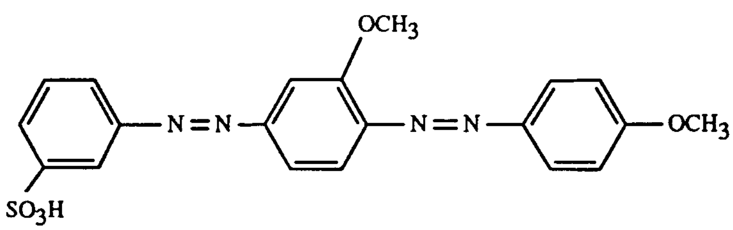 (106)

31 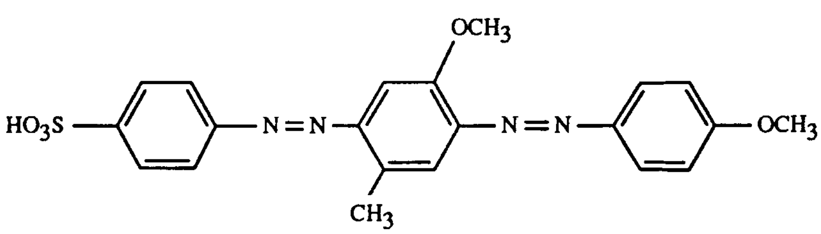 (107)

32 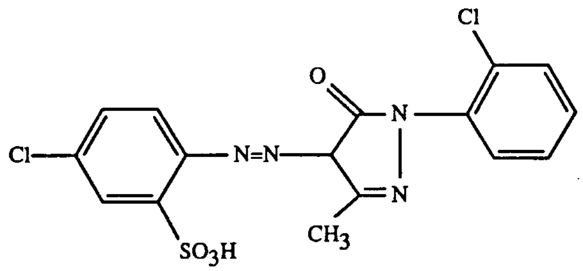 (124)

33 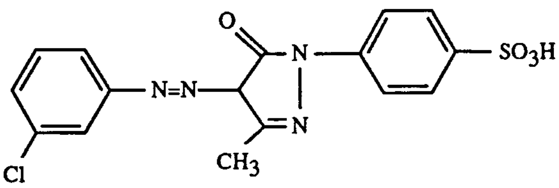 (125)

34 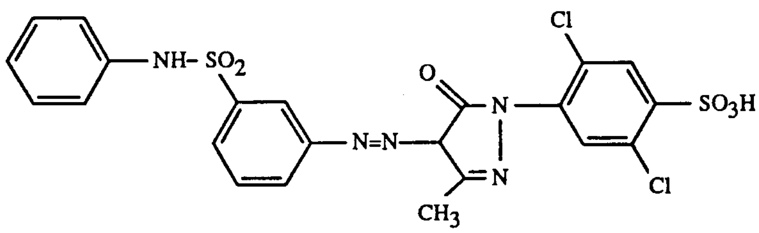 (126)

35 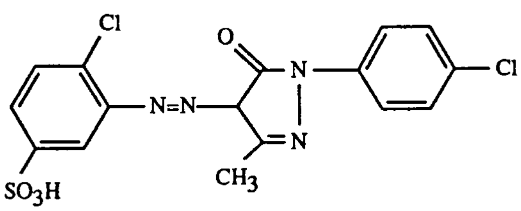 (127)

36 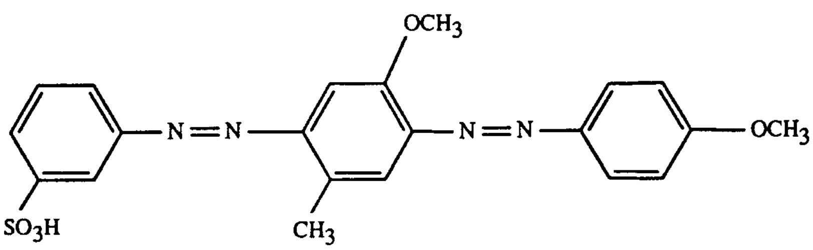 (128)

37 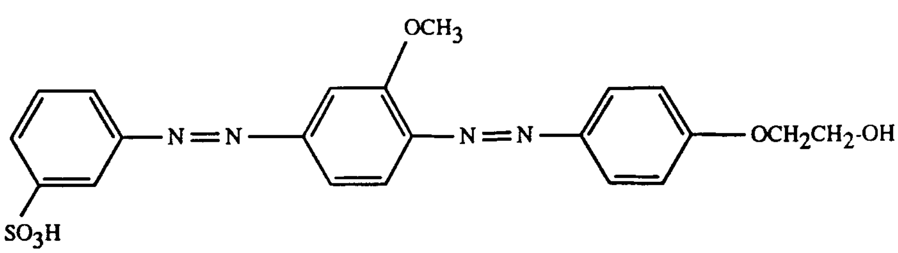 (129)

38 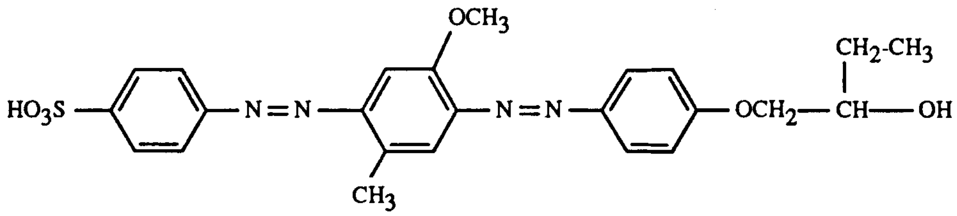 (130)

39 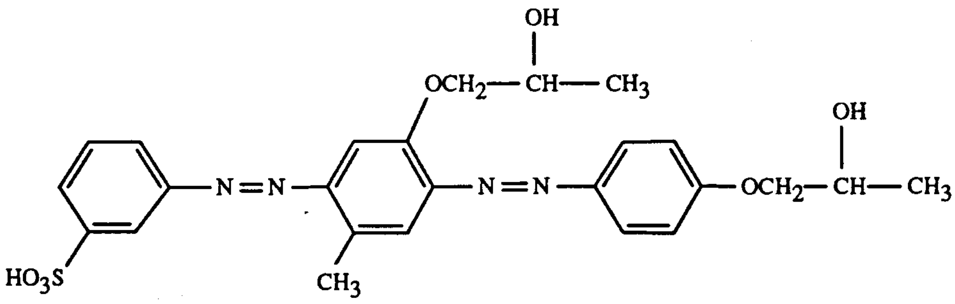 (131)

40 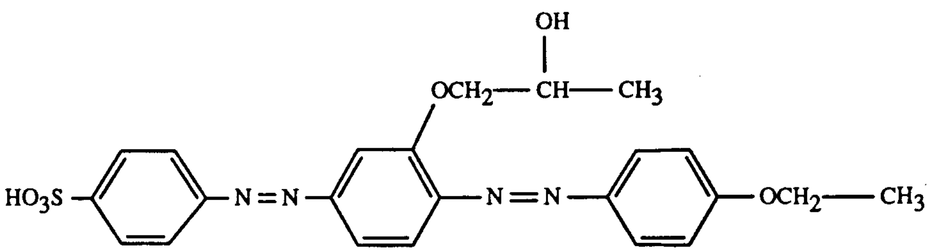 (132)

41 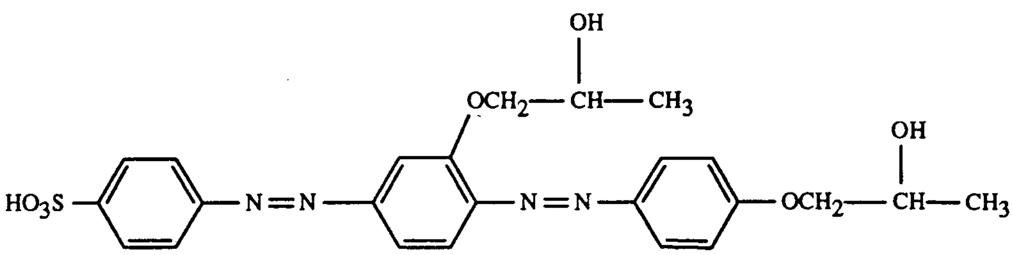 (133)

42 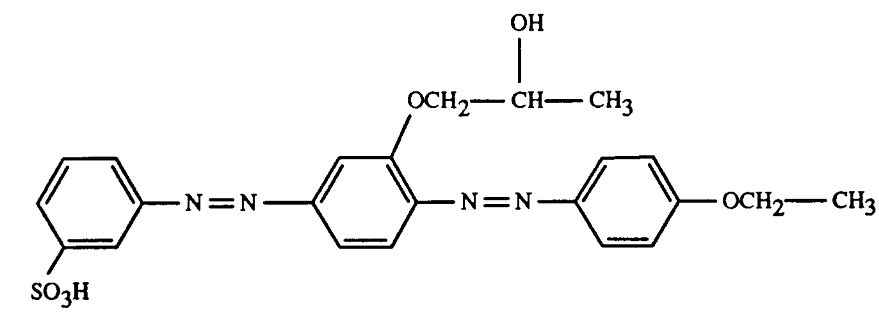 (134)

43 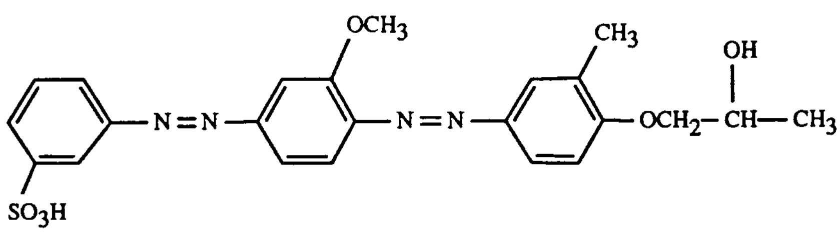 (135)

44 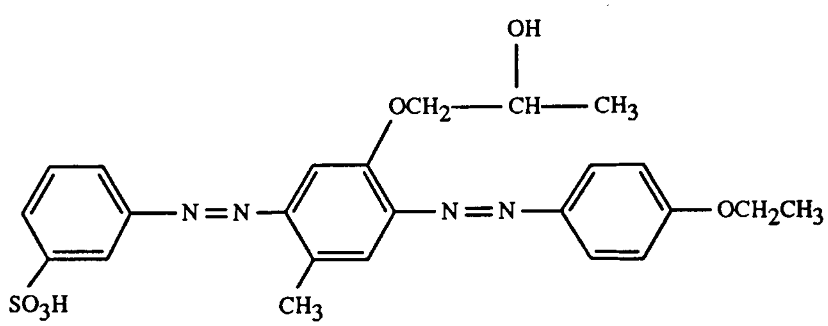 (136).

Beispiel 45: Zur Herstellung einer Farbstoffmischung, die einen Farbstoff der Formel (101) und einen Farbstoff der Formel (106) und einen Farbstoff der Formel (107) enthält, werden in einem Mixer 30 Teile des Farbstoffes der Formel (101), 35 Teile des Farbstoffes der Formel (106) und 35 Teile des Farbstoffes der Formel (107) homogen gemischt.

Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27 % der oben angegebenen Farbstoffmischung, 0,12 % des Farbstoffs der Formel (108) und 0,13 % des Farbstoffs der Formel (109) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

Beispiel 46: Zur Herstellung einer Farbstoffmischung, die einen Farbstoff der Formel (101) und einen Farbstoff der Formel (102) und einen Farbstoff der Formel (104) enthält, werden in einem Mixer 30 Teile des Farbstoffes der Formel (101), 35 Teile des Farbstoffes der Formel (102) und 35 Teile des Farbstoffes der Formel (104) homogen gemischt.

Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27 % der oben angegebenen Farbstoffmischung, 0,12 % des Farbstoffs der Formel (108) und 0,13 % des Farbstoffs der Formel (109) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

**Patentansprüche**

**Patentansprüche für folgende Vertragsstaaten : BE, CH, DE, DK, FR, GB, IT, LI, NL**

**1.** Farbstoffmischung, dadurch gekennzeichnet, dass sie einen Farbstoff der Formel

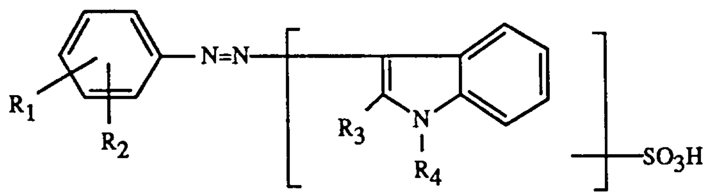

(1),

worin $R_1$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $R_2$ Wasserstoff, Halogen, ein gegebenenfalls substituierter Alkyl-, Aryloxy- oder Aryloxysulfonylrest oder ein Rest der Formel

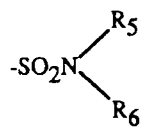

oder

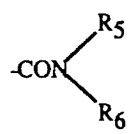

,

$R_3$ ein gegebenenfalls substituierter Alkyl- oder Arylrest, $R_4$ Wasserstoff oder Alkyl und $R_5$ und $R_6$ unabhängig voneinander Wasserstoff oder ein gegebenenfalls substituierter Alkyl-, Cycloalkyl- oder Arylrest ist,

und mindestens einen Farbstoff der Formeln (2) bis (5)

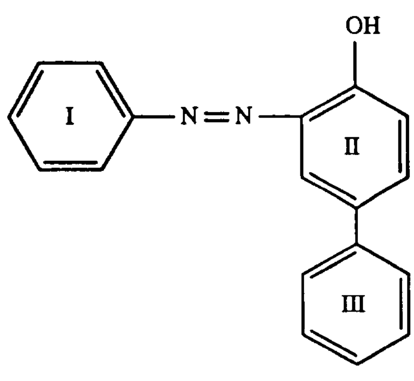

(2),

worin die Benzringe I, II und III substituiert sein können,

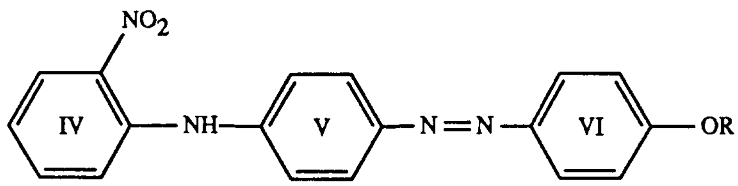

(3),

worin die Benzringe IV, V und VI substituiert sein können und R Wasserstoff oder Arylsulfonyl ist,

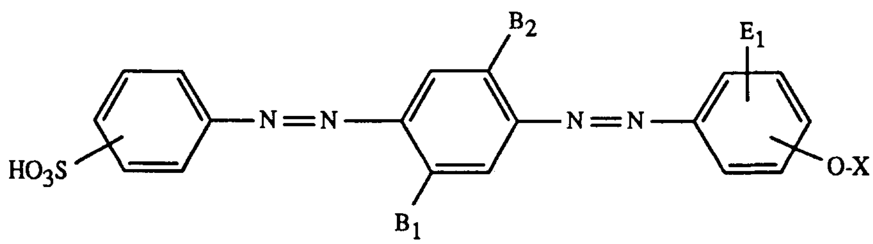

(4),

worin $B_1$, $B_2$ und $E_1$ Wasserstoff, $C_{1-4}$-Alkyl, $C_{1-4}$-Alkoxy oder $C_{2-4}$-Hydroxyalkoxy und X geradkettiges oder verzweigtes $C_{1-4}$-Alkyl oder geradkettiges oder verzweigtes $C_{2-4}$-Hydroxylalkyl bedeuten, und

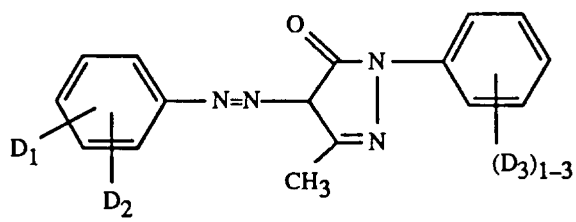

(5),

worin $D_1$ die für $R_1$ in Formel (1) angegebene Bedeutung, und $D_2$ die für $R_2$ in Formel (1) angegebene Bedeutung hat und $(D_3)_{1-3}$ für 1 bis 3 Substituenten $D_3$ steht und $D_3$ Wasserstoff, Halogen, $C_{1-4}$-Alkyl, $C_{1-4}$-Alkoxy oder Sulfo ist, enthält.

**2.** Farbstoffmischung gemäss Anspruch 1, dadurch gekennzeichnet, dass sie einen Farbstoff der Formel (1), worin $R_1$ Wasserstoff, $C_{1-4}$-Alkyl, $C_{1-4}$-Alkoxy, Halogen, $C_{2-4}$-Alkanoylamino, ein gegebenenfalls durch $C_{1-4}$-Alkyl oder Halogen substituierter Phenylsulfonyl-, Naphthylsulfonyl-, Phenyloxy- oder Phenylcarbonylrest, $R_2$ Wasserstoff, Halogen, $C_{1-4}$-Alkyl, Trifluormethyl, ein gegebenenfalls durch $C_{1-4}$-Alkyl oder Halogen substituierter Phenoxy- oder Phenoxysulfonylrest,

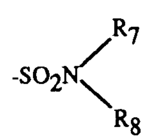

oder

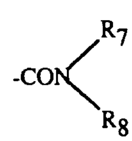

,

$R_3$ $C_{1-4}$-Alkyl oder Phenyl, $R_4$ Wasserstoff oder $C_{1-8}$-Alkyl und $R_7$ und $R_8$ unabhängig voneinander

Wasserstoff, $C_{1-4}$-Alkyl, $C_{1-4}$-Hydroxyalkyl, $C_{5-7}$-Cycloalkyl, Phenyl oder durch Halogen, Trifluormethyl oder $C_{1-4}$-Alkyl substituiertes Phenyl ist, und einen oder mehrere Farbstoffe der Formeln (2), (3), (4) oder (5) enthält.

**3.** Farbstoffmischung gemäss einem der Ansprüche 1 und 2, dadurch gekennzeichnet, dass sie als Farbstoff der Formel (1) einen Farbstoff der Formel

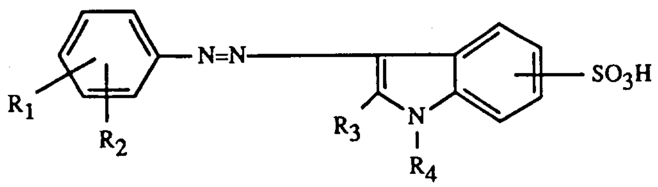

(6),

worin $R_1$ Wasserstoff, Methyl, Chlor, Methoxy, Äthoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-Methyl-N-$\beta$-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Äthyl-N-phenylaminosulfonyl, $-CONH_2$ oder $-CON(CH_3)_2$, $R_3$ Methyl oder Phenyl und $R_4$ Wasserstoff, Methyl, Äthyl oder Octyl ist, und einen oder mehrere Farbstoffe der Formeln (2), (3), (4) oder (5) enthält.

**4.** Farbstoffmischung gemäss Anspruch 3, dadurch gekennzeichnet, dass sie einen Farbstoff der Formel (6) und mindestens einen Farbstoff der Formel

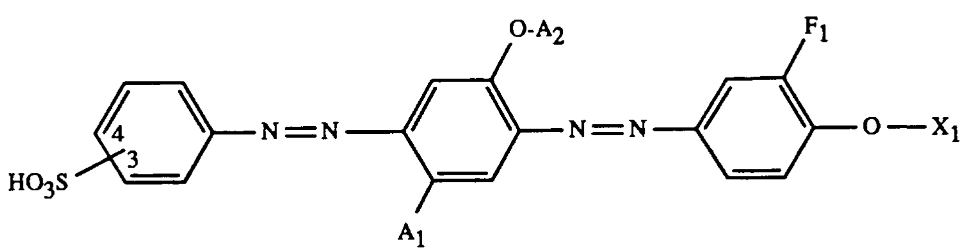

(7),

worin $A_1$ Wasserstoff oder Methyl, $F_1$ Wasserstoff oder Methyl und $A_2$ und $X_1$ unabhängig voneinander Methyl, Äthyl, $\beta$-Hydroxyäthyl, $\beta$-Hydroxypropyl, $\beta$-Hydroxybutyl oder $\alpha$-Äthyl-$\beta$-hydroxyäthyl ist, und die Sulfogruppe in 3- oder 4-Stellung gebunden ist, enthält.

**5.** Farbstoffmischung gemäss Anspruch 4, dadurch gekennzeichnet, dass sie als Farbstoff der Formel (7) mindestens einen der Farbstoffe der Formeln (7a) bis (7y)

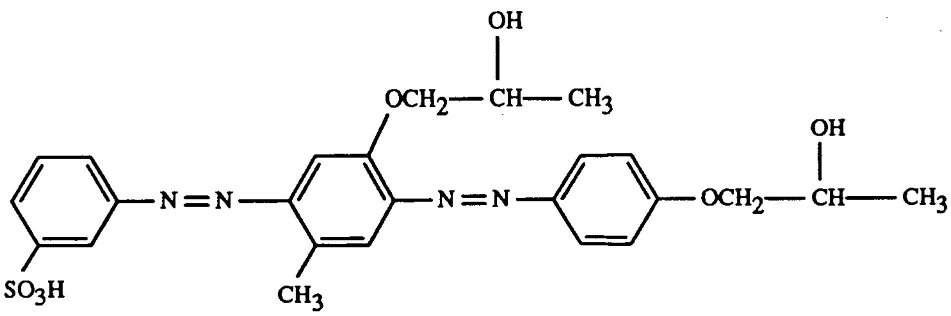

(7a)

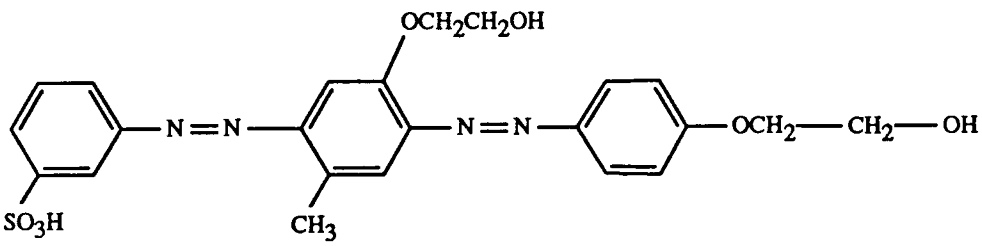

(7b)

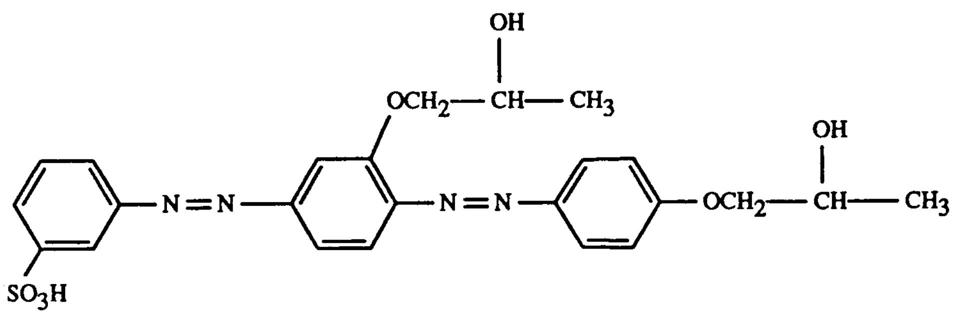

(7c)

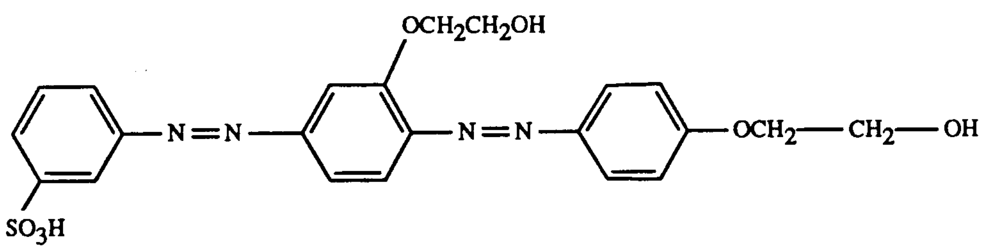

(7d)

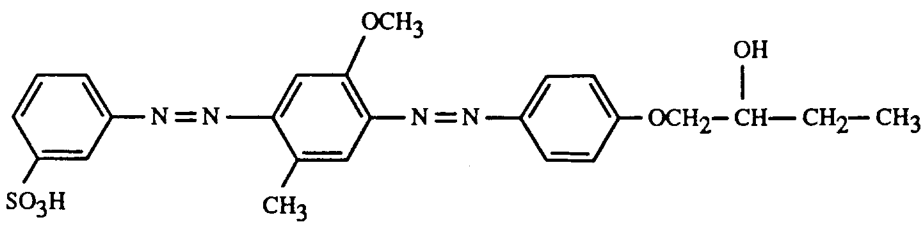

(7e)

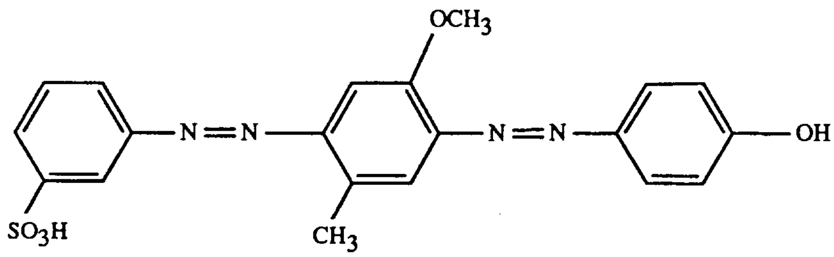

(7f)

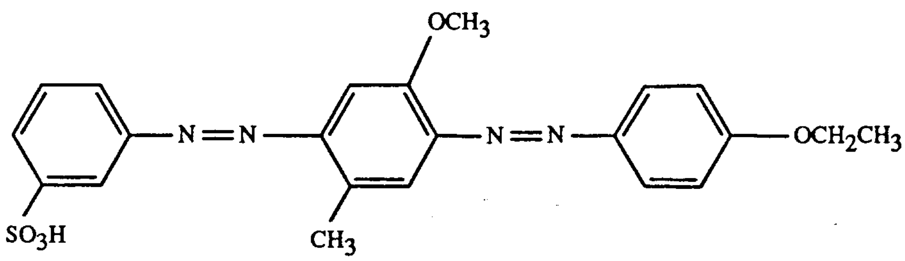

(7g)

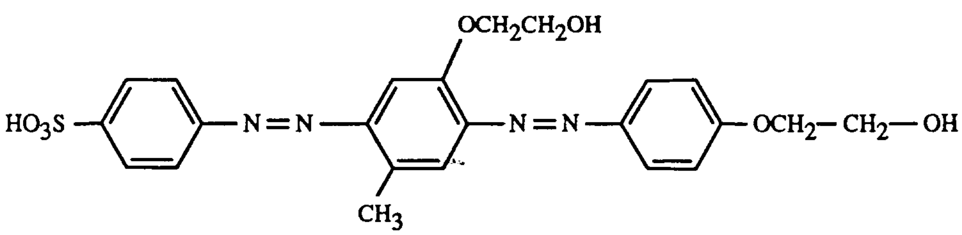

(7h)

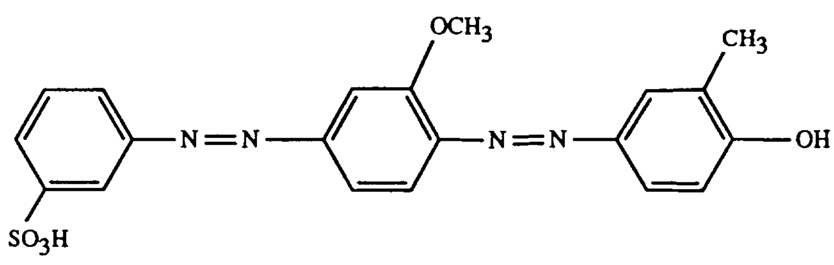

(7i)

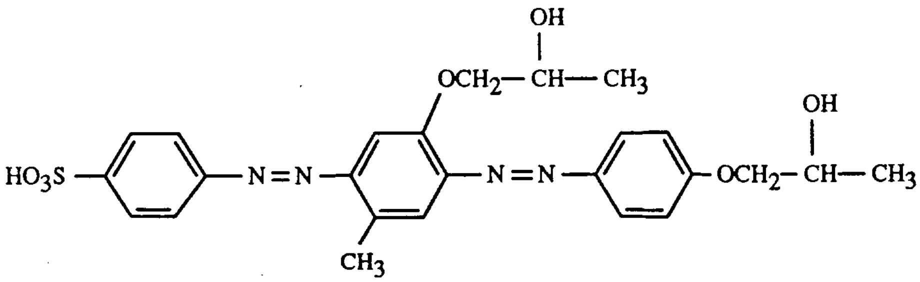

(7j)

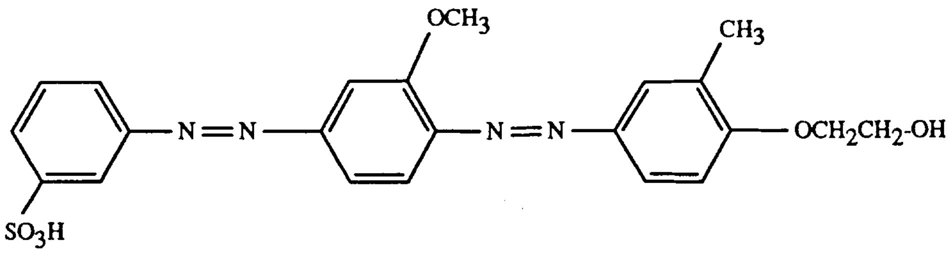

(7k)

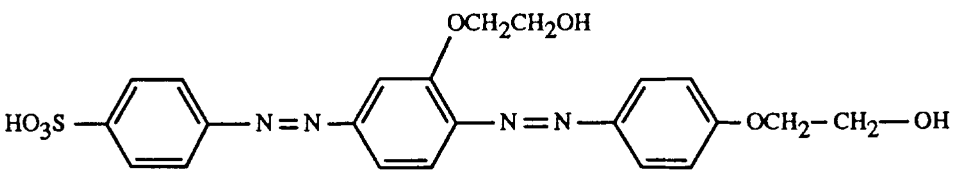

(7l)

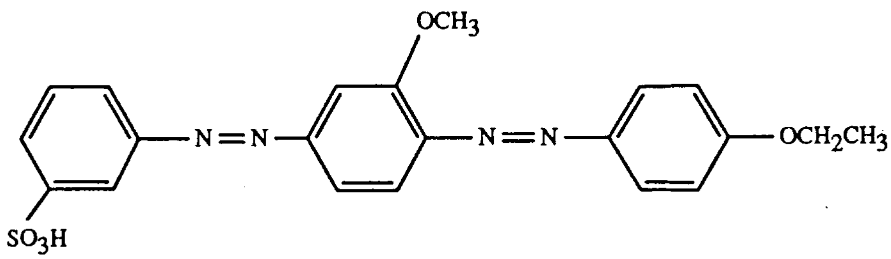

(7m)

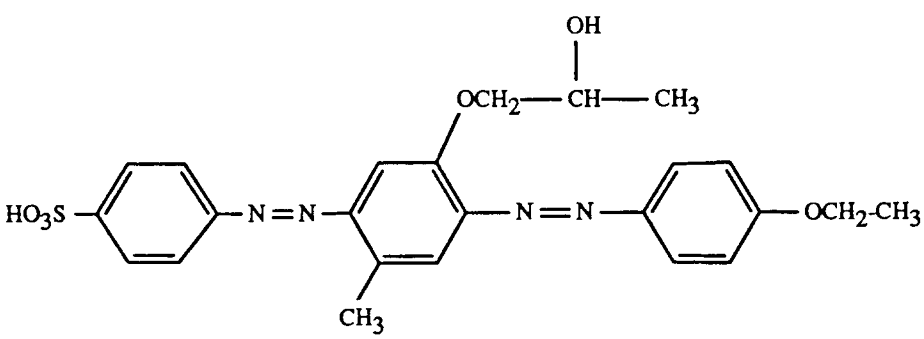

(7n)

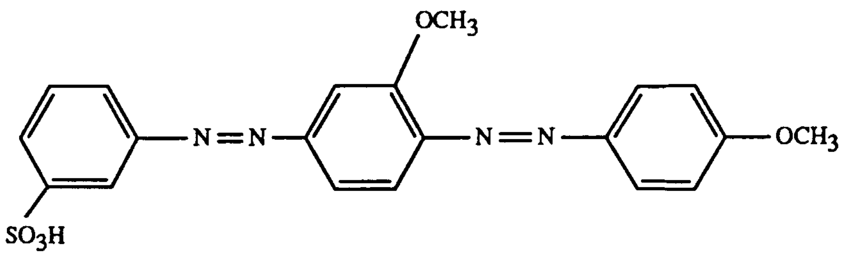

(7o)

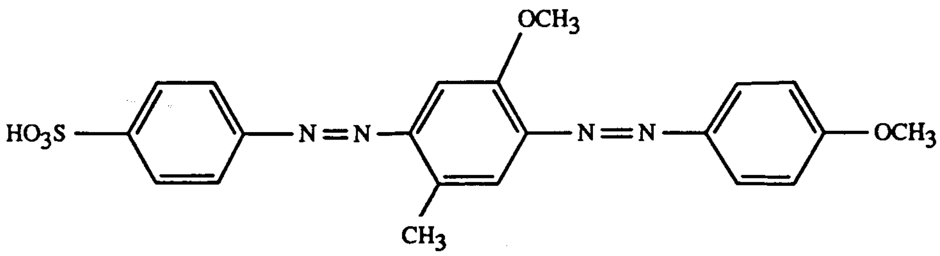

(7p)

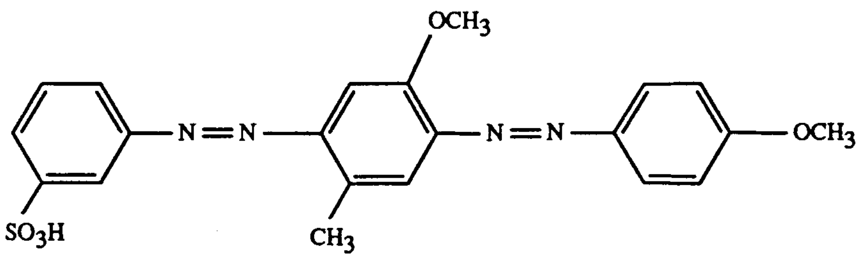

(7q)

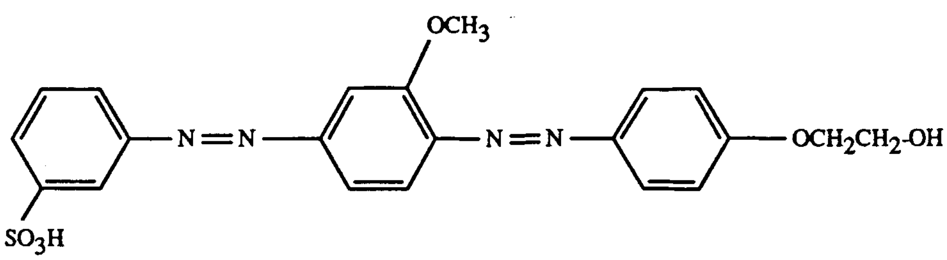

(7r)

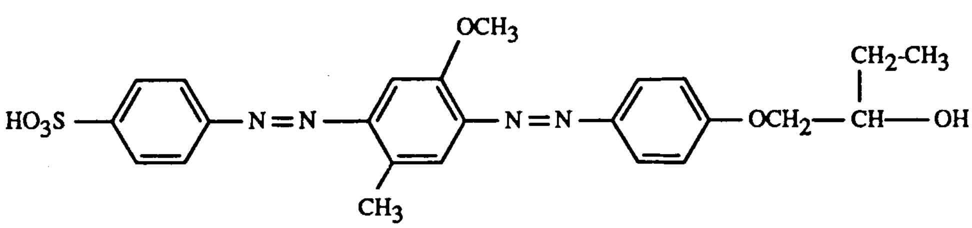

(7s)

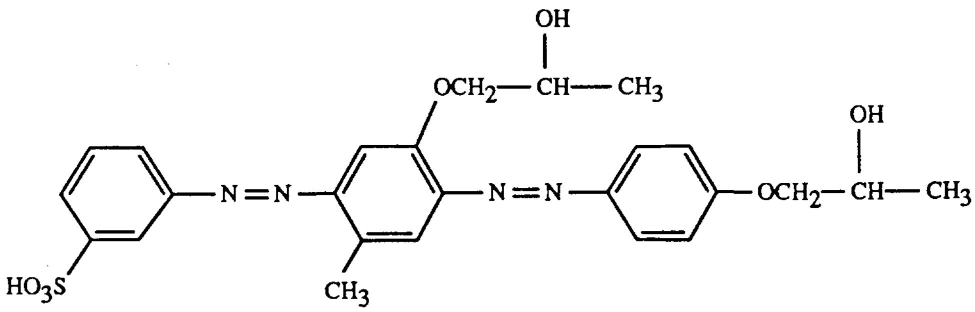

(7t)

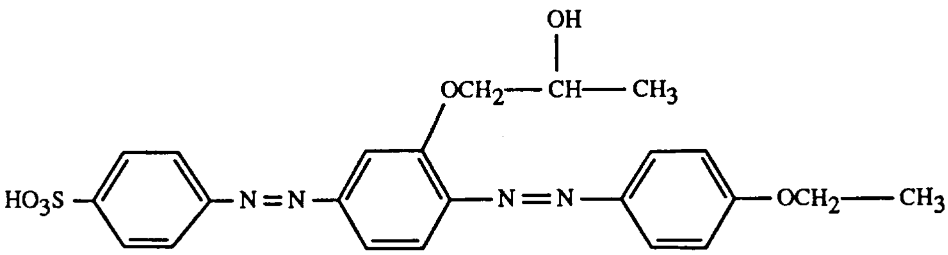

(7u)

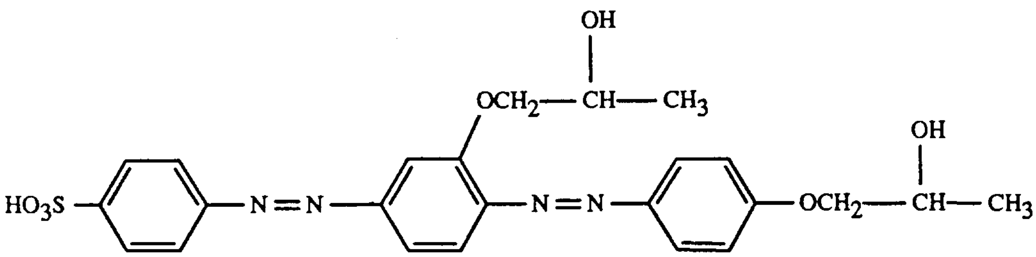

(7v)

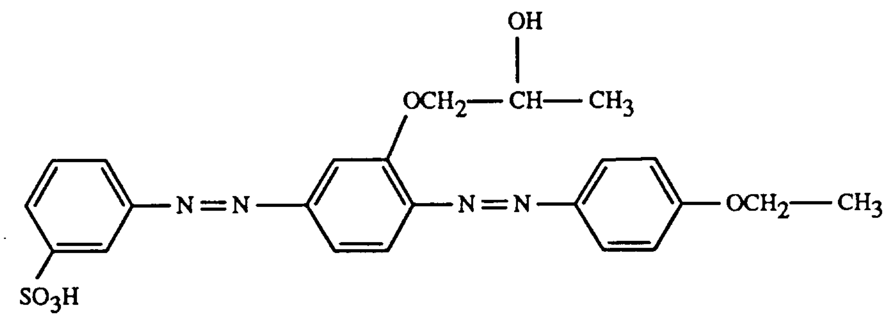

(7w)

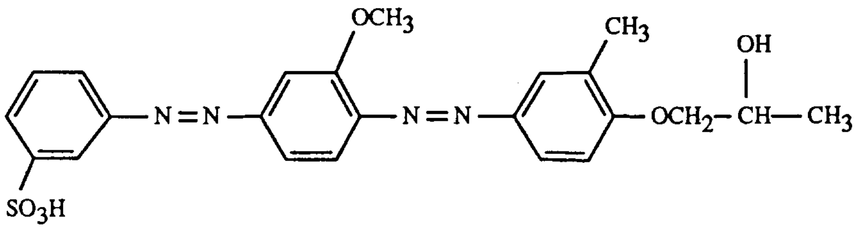

(7x)

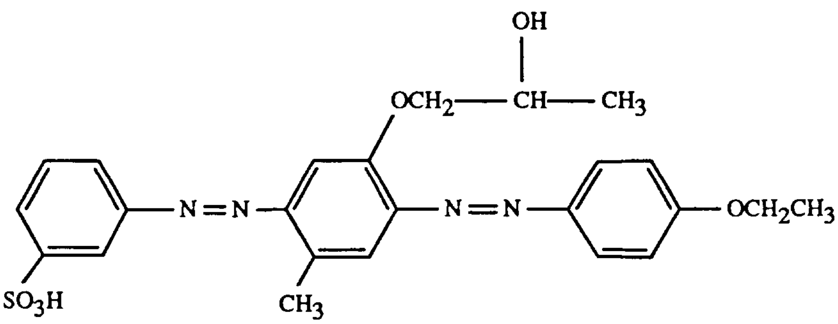

(7y)

und einen Farbstoff der Formel (6) enthält.

**6.** Farbstoffmischung gemäss Anspruch 3, dadurch gekennzeichnet, dass sie einen Farbstoff der Formel (6) und mindestens einen Farbstoff der Formeln (8), (9), (10) und (11)

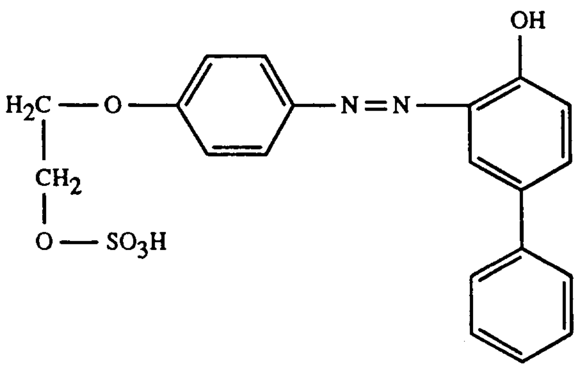

(8)

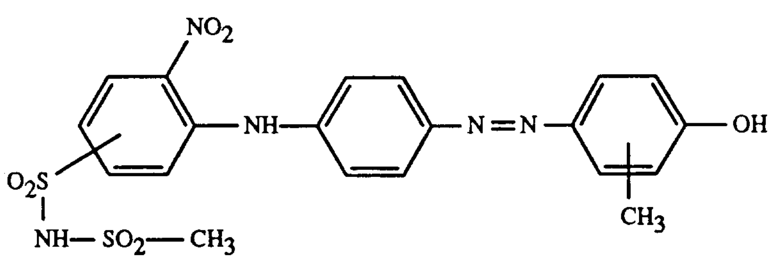

(9)

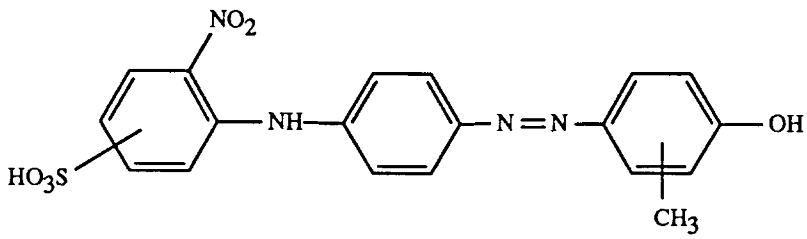

(10)

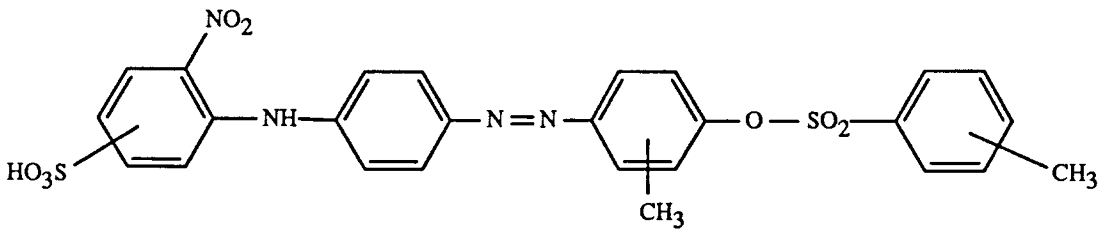

(11)

enthält.

**7.** Farbstoffmischung gemäss Anspruch 3, dadurch gekennzeichnet, dass sie einen Farbstoff der Formel (6) und einen Farbstoff der Formel

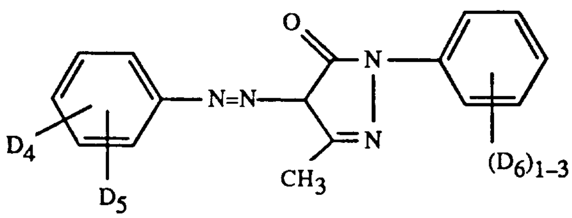

(12),

worin $D_4$ Chlor oder Phenylaminosulfonyl und $D_5$ Wasserstoff oder Sulfo ist und $(D_6)_{1-3}$ für 1 bis 3 Substituenten $D_6$ steht und $D_6$ Wasserstoff, Chlor oder Sulfo ist, enthält.

**8.** Farbstoffmischung gemäss Anspruch 7, dadurch gekennzeichnet, dass sie als Farbstoff der Formel (12) einen der Farbstoffe der Formeln (12a) bis (12d)

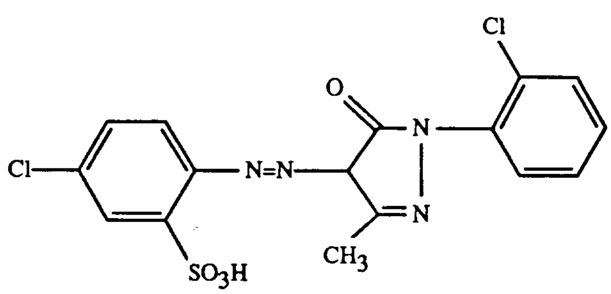

(12a),

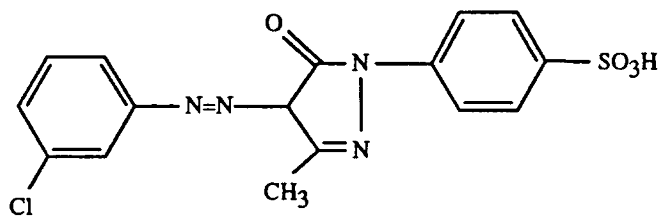

(12b),

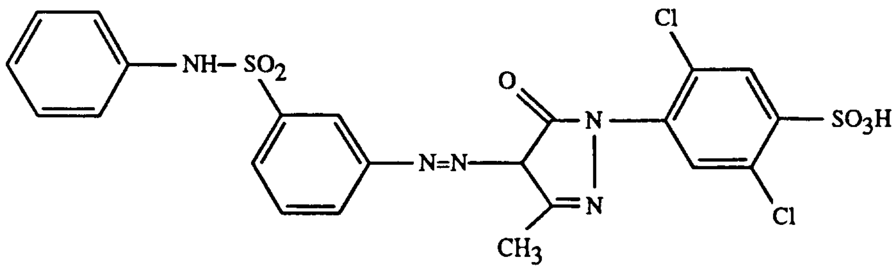

(12c)

oder

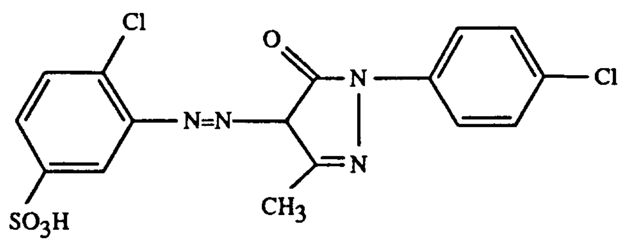

(12d)

enthält.

**9.** Farbstoffmischung gemäss einem der Ansprüche 4 und 5, dadurch gekennzeichnet, dass sie als Farbstoff der Formel (6) einen Farbstoff der Formel

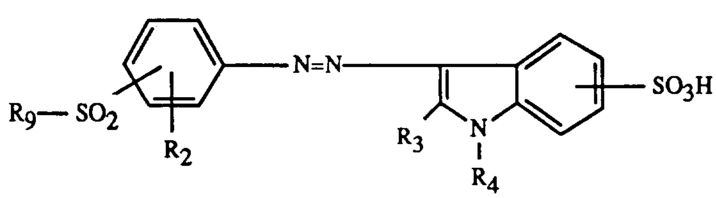

(13),

worin $R_2$, $R_3$ und $R_4$ die unter Formel (4) angegebenen Bedeutungen haben und $R_9$ ein gegebenenfalls durch $C_{1-4}$-Alkyl und Halogen substituierter Phenylrest oder Naphthyl ist, insbesondere worin $R_2$ Wasserstoff, $R_3$ Phenyl, $R_4$ Wasserstoff und $R_9$ Phenyl ist, und einen Farbstoff der Formel (7), insbesondere einen Farbstoff der Formel (7a) bis (7y), enthält.

**10.** Farbstoffmischung gemäss einem der Ansprüche 1 bis 5 und 9, dadurch gekennzeichnet, dass sie eine Farbstoffmischung, die den Farbstoff der Formel

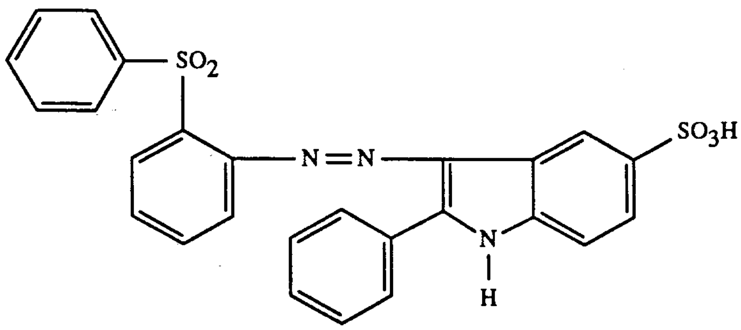

(14)

und den Farbstoff der Formel

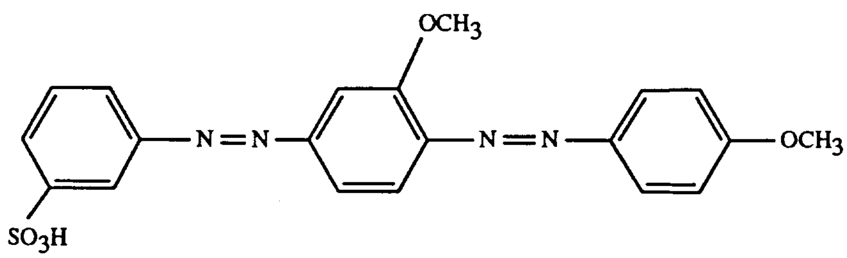

(7o)

oder den Farbstoff der Formel

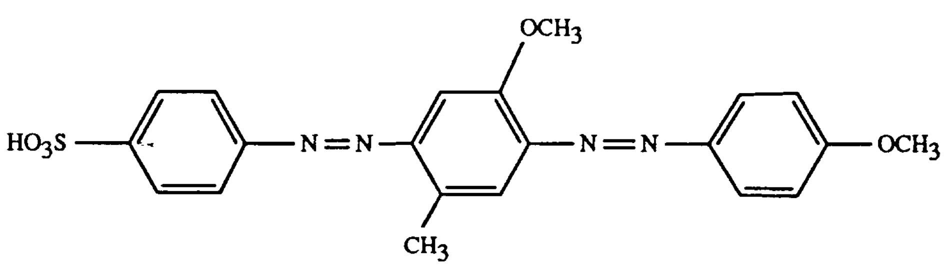

(7p)

enthält.

**11.** Farbstoffmischung gemäss Anspruch 6, dadurch gekennzeichnet, dass sie als Farbstoff der Formel (6) einen Farbstoff der Formel

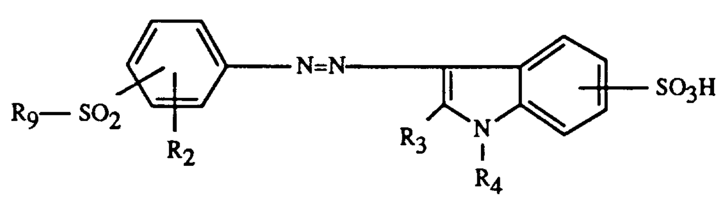

(13),

worin $R_2$, $R_3$ und $R_4$ die unter Formel (4) angegebenen Bedeutungen haben und $R_9$ ein gegebenenfalls durch $C_{1-4}$-Alkyl und Halogen substituierter Phenylrest oder Naphthyl ist, insbesondere worin $R_2$ Wasserstoff, $R_3$ Phenyl, $R_4$ Wasserstoff und $R_9$ Phenyl ist, und einen Farbstoff der Formel (8), (9), (10) oder (11) enthält.

**12.** Farbstoffmischung, gemäss einem der Ansprüche 1 bis 3, 6 und 11, dadurch gekennzeichnet, dass sie eine Farbstoffmischung, die den Farbstoff der Formel

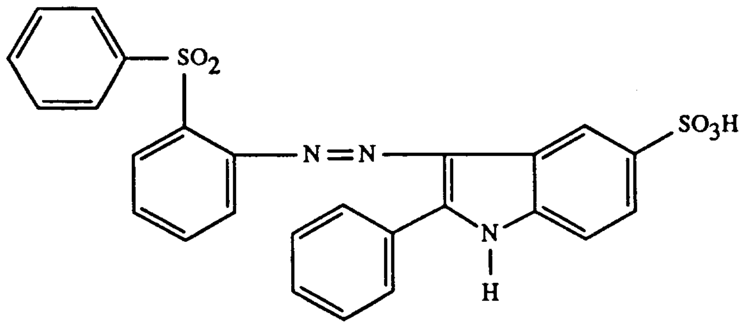

(14)

und den Farbstoff der Formel

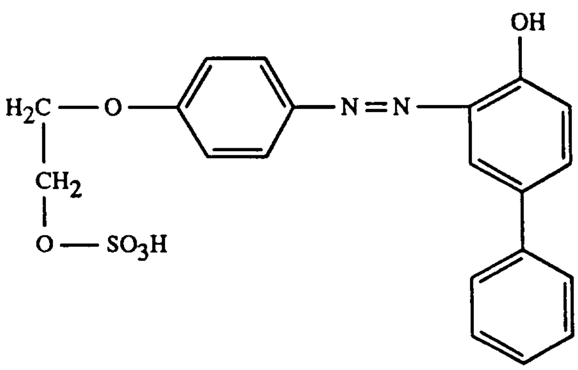

(8)

oder

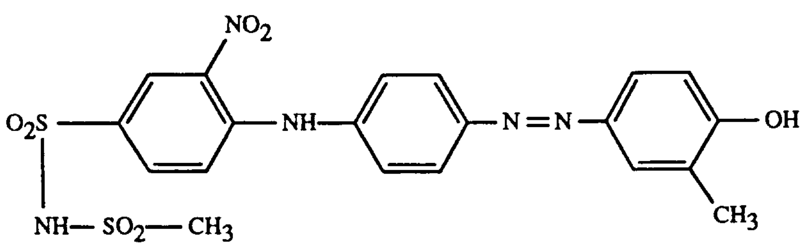

(15)

oder

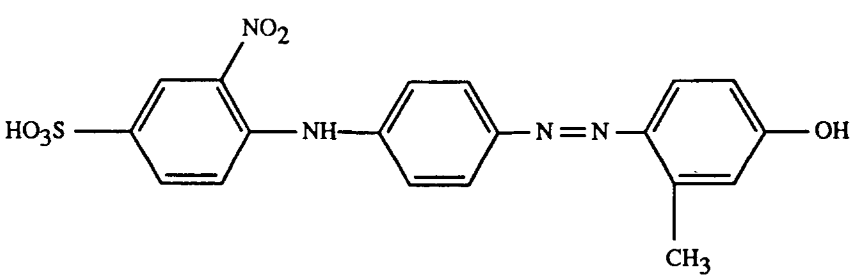

(16)

oder

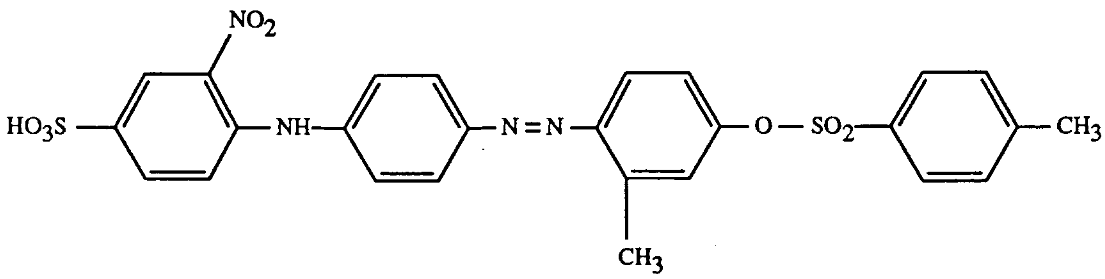
(17)

enthält.

13. Farbstoffmischung gemäss einem der Ansprüche 1 bis 12, dadurch gekennzeichnet, dass das Verhältnis der Farbstoffe der Formeln (1) und (2) oder (1) und (3) oder (1) und (4) oder (1) und (5) 20:80 bis 80:20 und insbesondere 40:60 bis 60:40 ist.

14. Verfahren zum Färben und Bedrucken von natürlichen und synthetischen Polyamidmaterialien mit einer Farbstoffmischung, dadurch gekennzeichnet, dass man eine Farbstoffmischung gemäss einem der Ansprüche 1 bis 13 verwendet.

15. Verfahren zum Färben und Bedrucken von natürlichen und synthetischen Polyamidmaterialien unter Verwendung der Farbstoffmischung gemäss einem der Ansprüche 1 bis 13 in Kombination mit anderen Farbstoffen.

16. Verfahren gemäss Anspruch 15 zum Trichromie-Färben oder -Bedrucken, dadurch gekennzeichnet, dass man eine Farbstoffmischung gemäss einem der Ansprüche 1 bis 13 in Kombination mit mindestens einem roten Farbstoff und mindestens einem blauen Farbstoff verwendet.

17. Verwendung der Farbstoffmischung gemäss Anspruch 1 zum Färben und Bedrucken.

18. Färbe- bzw. Druckpräparate, die eine Farbstoffmischung gemäss den Ansprüchen 1 bis 13 enthalten.

**Patentansprüche für folgenden Vertragsstaat : ES**

1. Verfahren zur Herstellung einer Farbstoffmischung durch Mischen eines Farbstoffes A mit mindestens einem der Farbstoffe B, C, D und E, dadurch gekennzeichnet, dass als Farbstoff A ein Farbstoff der Formel

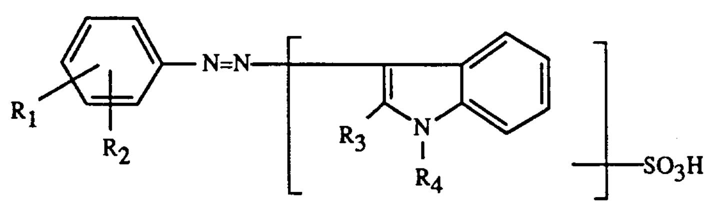
(1),

worin $R_1$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $R_2$ Wasserstoff, Halogen, ein gegebenenfalls substituierter Alkyl-, Aryloxy- oder Aryloxysulfonylrest oder ein Rest der Formel

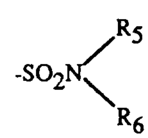

oder

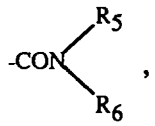

$R_3$ ein gegebenenfalls substituierter Alkyl- oder Arylrest, $R_4$ Wasserstoff oder Alkyl und $R_5$ und $R_6$ unabhängig voneinander Wasserstoff oder ein gegebenenfalls substituierter Alkyl-, Cycloalkyl- oder Arylrest ist,
und als Farbstoff B, C, D und E mindestens einen Farbstoff der Formeln (2) bis (5)

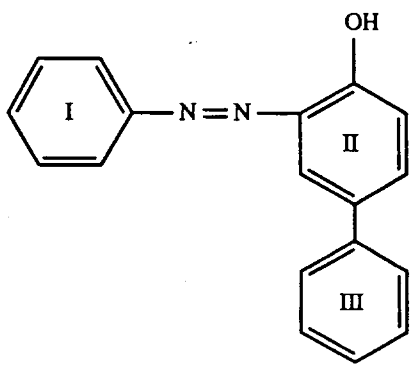

(2),

worin die Benzringe I, II und III substituiert sein können,

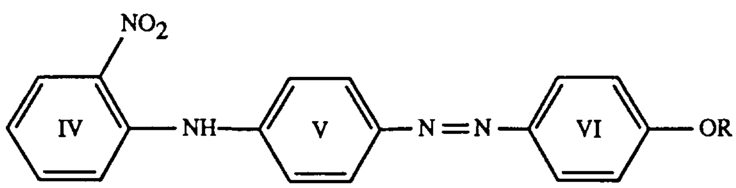

(3),

worin die Benzringe IV, V und VI substituiert sein können und R Wasserstoff oder Arylsulfonyl ist,

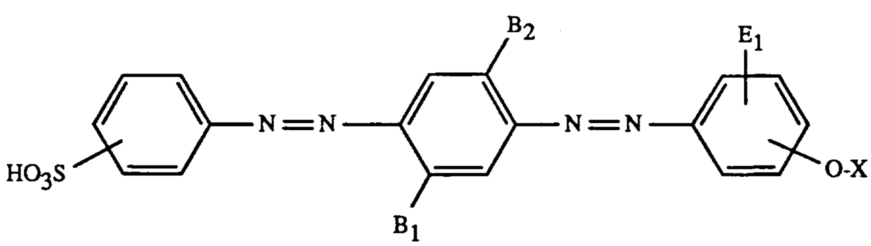

(4),

worin $B_1$, $B_2$ und $E_1$ Wasserstoff, $C_{1-4}$-Alkyl, $C_{1-4}$-Alkoxy oder $C_{2-4}$-Hydroxyalkoxy und X geradkettiges oder verzweigtes $C_{1-4}$-Alkyl oder geradkettiges oder verzweigtes $C_{2-4}$-Hydroxylalkyl bedeuten, und

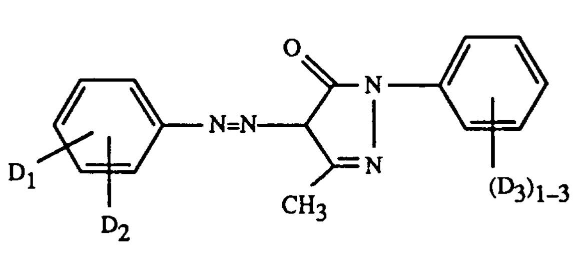

(5),

worin $D_1$ die für $R_1$ in Formel (1) angegebene Bedeutung, und $D_2$ die für $R_2$ in Formel (1) angegebene Bedeutung hat und $(D_3)_{1-3}$ für 1 bis 3 Substituenten $D_3$ steht und $D_3$ Wasserstoff, Halogen, $C_{1-4}$-Alkyl, $C_{1-4}$-Alkoxy oder Sulfo ist, verwendet wird.

**2.** Verfahren gemäss Anspruch 1, dadurch gekennzeichnet, dass man einen Farbstoff der Formel (1), worin $R_1$ Wasserstoff, $C_{1-4}$-Alkyl, $C_{1-4}$-Alkoxy, Halogen, $C_{2-4}$-Alkanoylamino, ein gegebenenfalls durch $C_{1-4}$-Alkyl oder Halogen substituierter Phenylsulfonyl-, Naphthylsulfonyl-, Phenyloxy- oder Phenylcarbonylrest, $R_2$ Wasserstoff, Halogen, $C_{1-4}$-Alkyl, Trifluormethyl, ein gegebenenfalls durch $C_{1-4}$-Alkyl oder Halogen substituierter Phenoxy- oder Phenoxysulfonylrest,

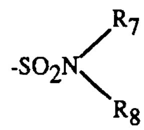

oder

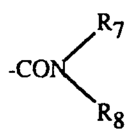

,

$R_3$ $C_{1-4}$-Alkyl oder Phenyl, $R_4$ Wasserstoff oder $C_{1-8}$-Alkyl und $R_7$ und $R_8$ unabhängig voneinander Wasserstoff, $C_{1-4}$-Alkyl, $C_{1-4}$-Hydroxyalkyl, $C_{5-7}$-Cycloalkyl, Phenyl oder durch Halogen, Trifluormethyl oder $C_{1-4}$-Alkyl substituiertes Phenyl ist, und einen oder mehrere Farbstoffe der Formeln (2), (3), (4) oder (5) verwendet.

**3.** Verfahren gemäss einem der Ansprüche 1 und 2, dadurch gekennzeichnet, dass man als Farbstoff der Formel (1) einen Farbstoff der Formel

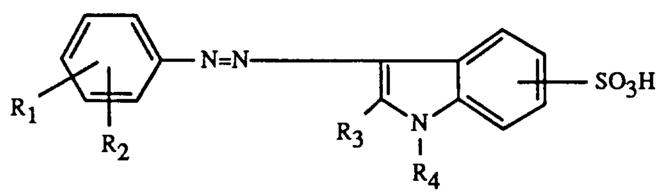

(6),

worin $R_1$ Wasserstoff, Methyl, Chlor, Methoxy, Äthoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-Methyl-N-$\beta$-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Äthyl-N-phenylaminosulfonyl, $-CONH_2$ oder $-CON(CH_3)_2$, $R_3$ Methyl oder Phenyl und $R_4$ Wasserstoff, Methyl, Äthyl oder Octyl ist, und einen oder mehrere Farbstoffe der Formeln (2), (3), (4) oder (5) verwendet.

**4.** Verfahren gemäss Anspruch 3, dadurch gekennzeichnet, dass man einen Farbstoff der Formel (6) und mindestens einen Farbstoff der Formel

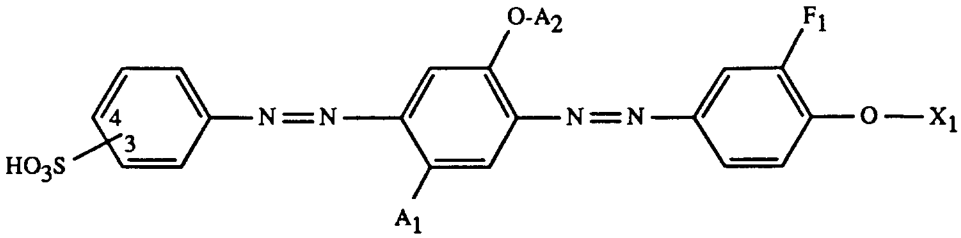 (7),

worin $A_1$ Wasserstoff oder Methyl, $F_1$ Wasserstoff oder Methyl und $A_2$ und $X_1$ unabhängig voneinander Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist, verwendet.

**5.** Verfahren gemäss Anspruch 4, dadurch gekennzeichnet, dass man als Farbstoff der Formel (7) mindestens einen der Farbstoffe der Formeln (7a) bis (7y)

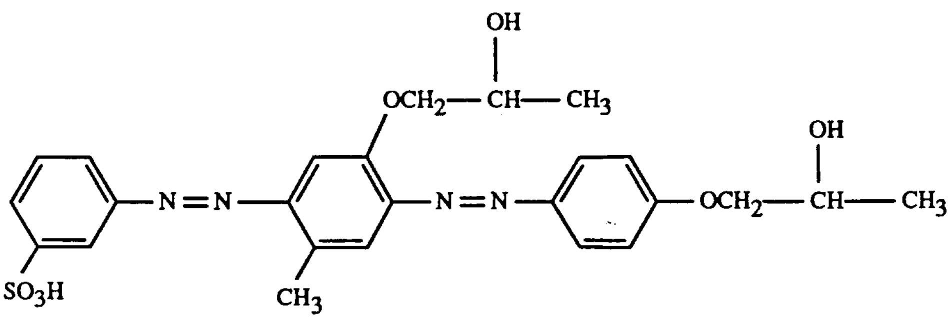 (7a)

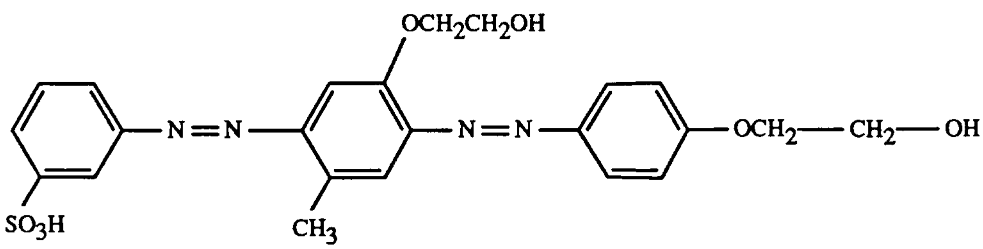 (7b)

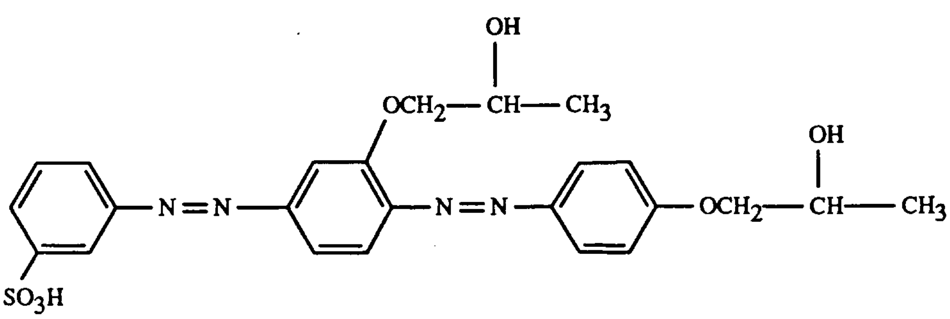 (7c)

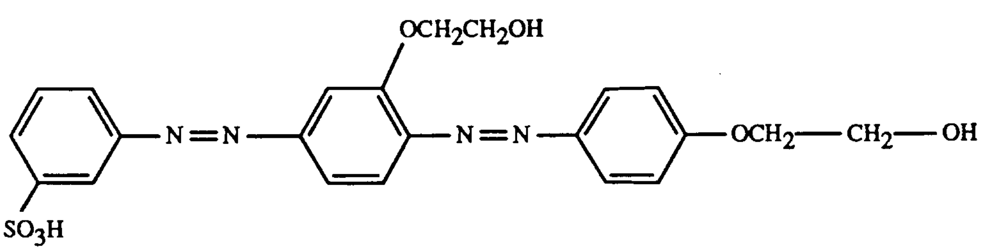 (7d)

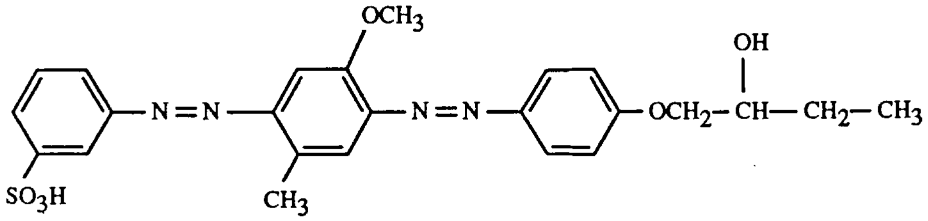

(7e)

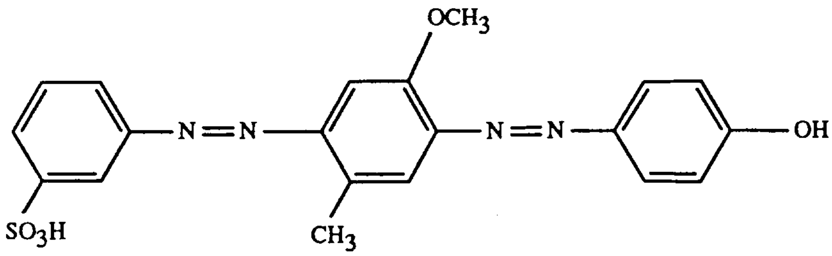

(7f)

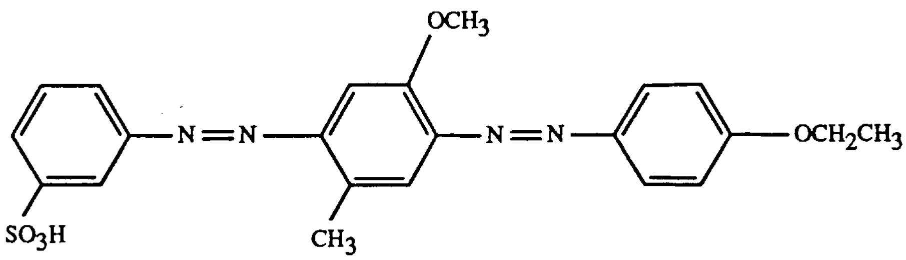

(7g)

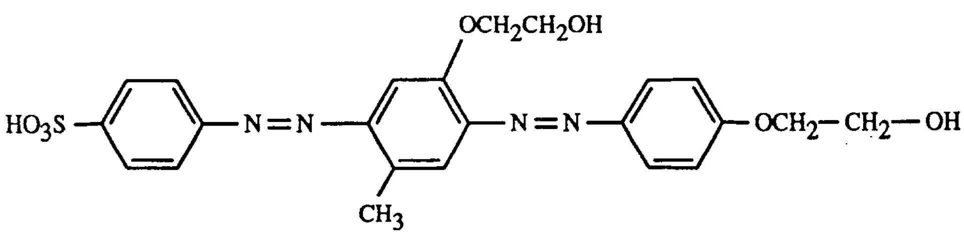

(7h)

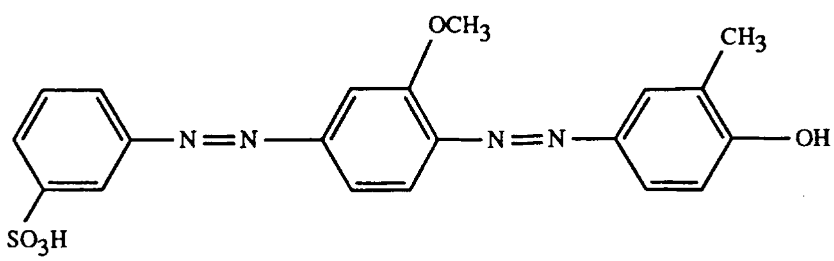

(7i)

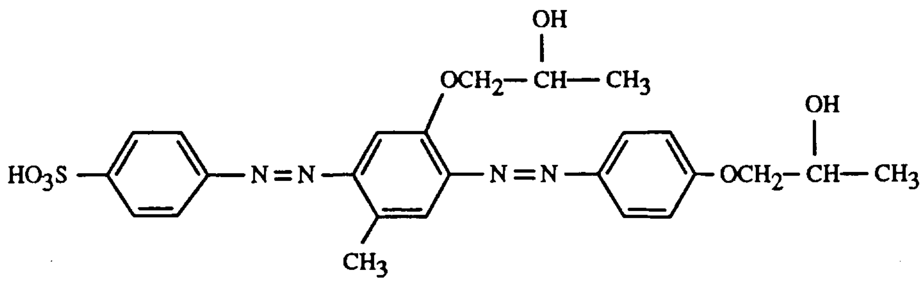

(7j)

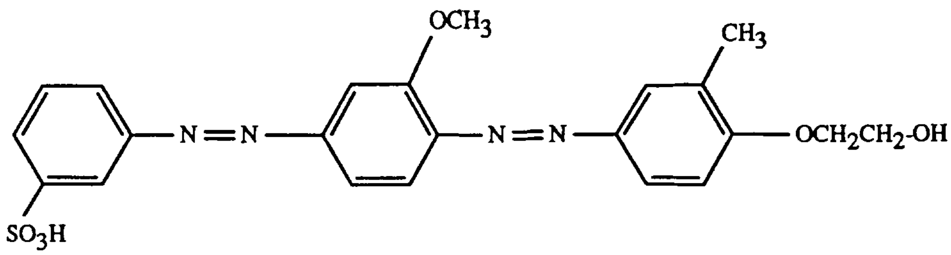

(7k)

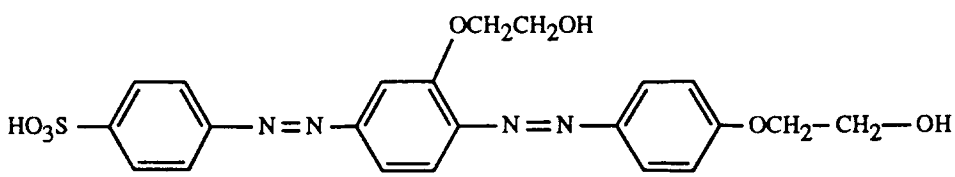

(7l)

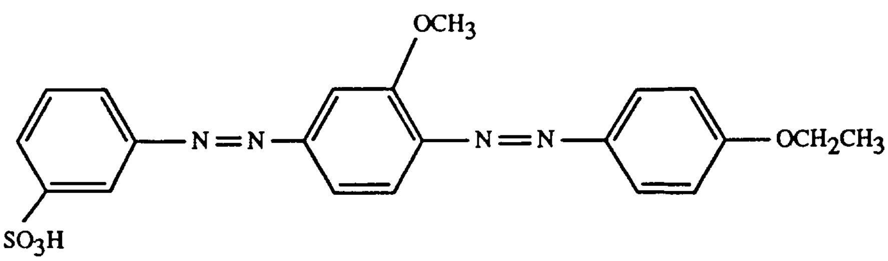

(7m)

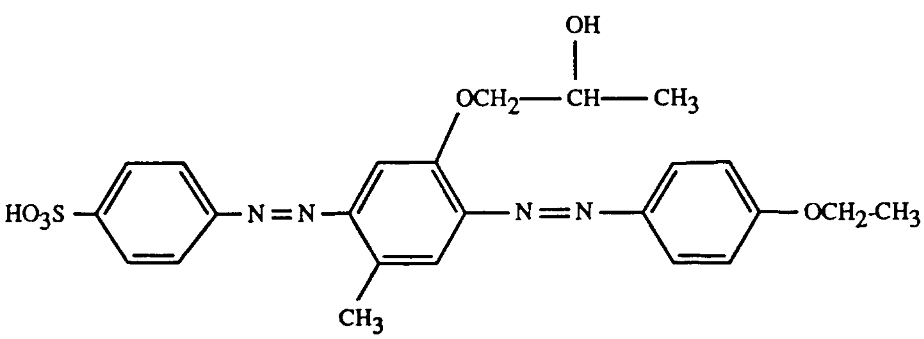

(7n)

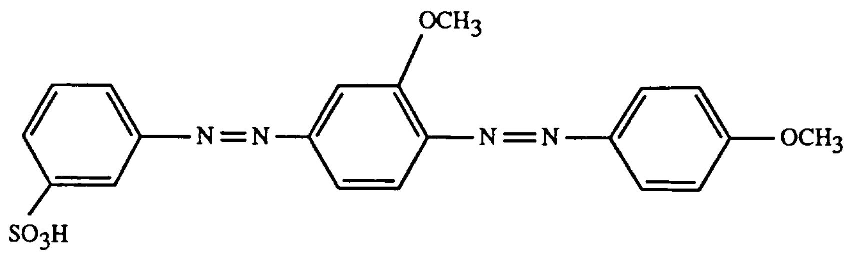

(7o)

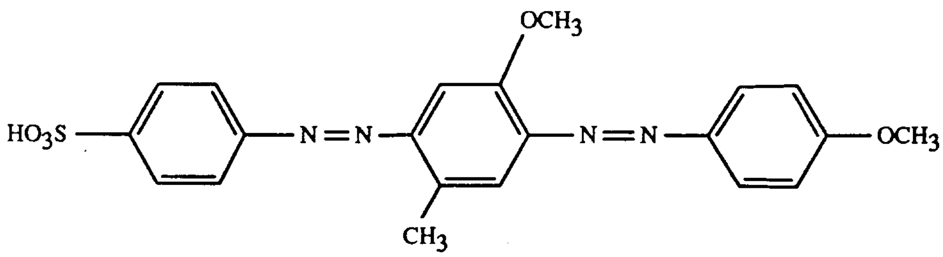

(7p)

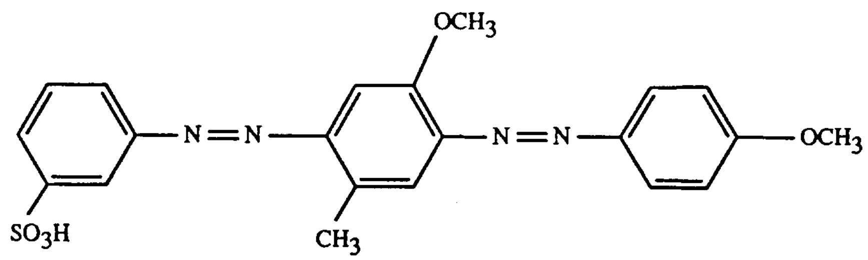

(7q)

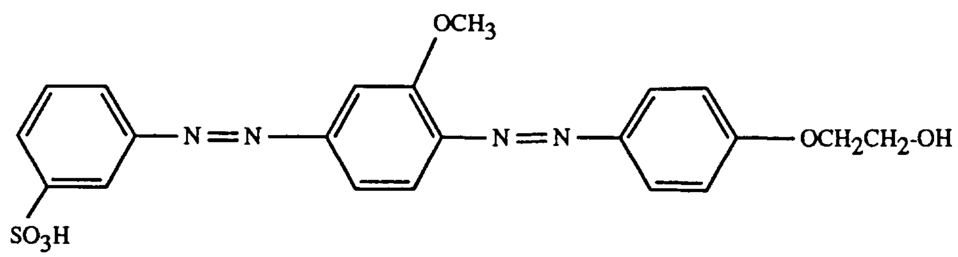

(7r)

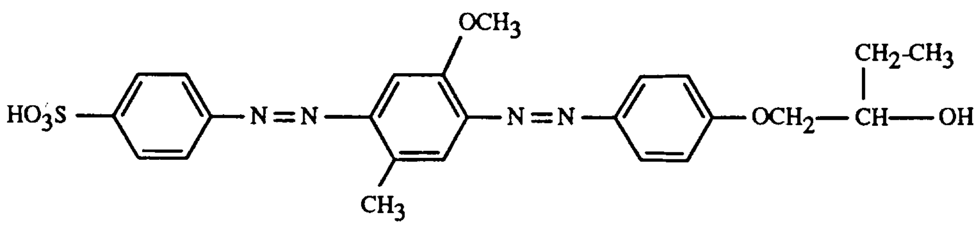

(7s)

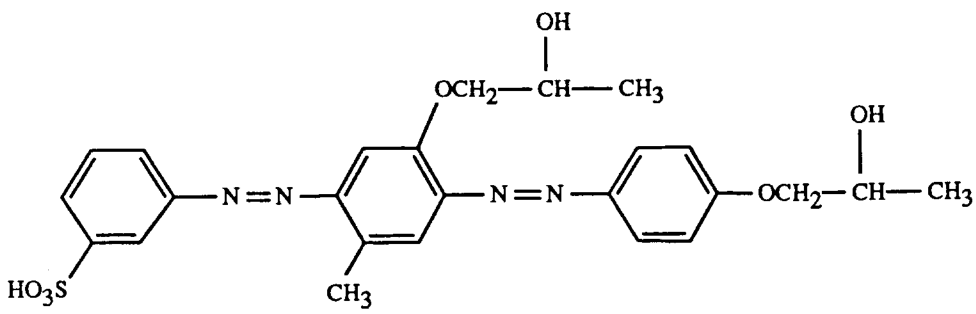

(7t)

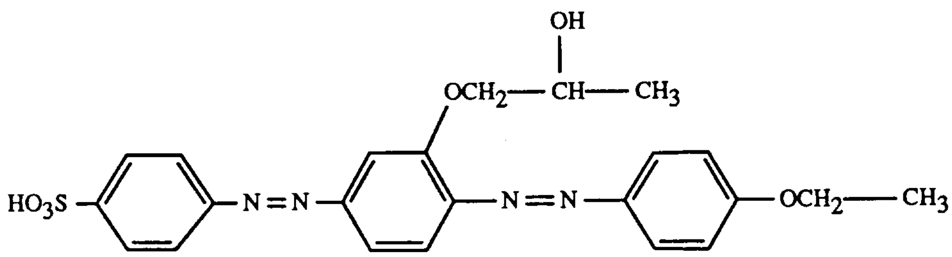

(7u)

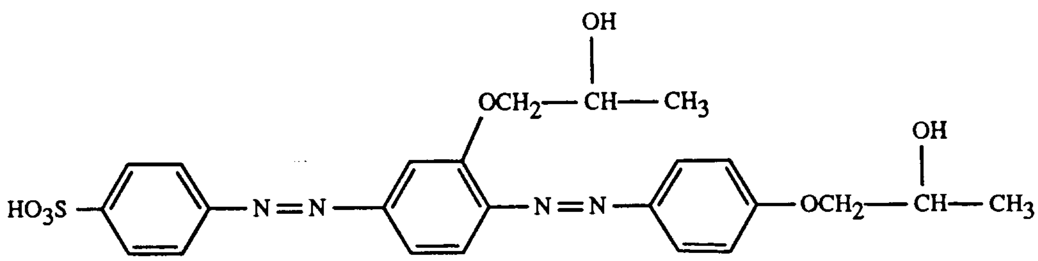

(7v)

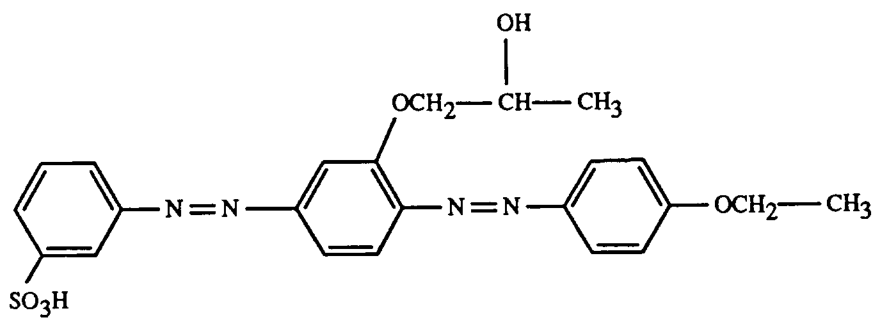

(7w)

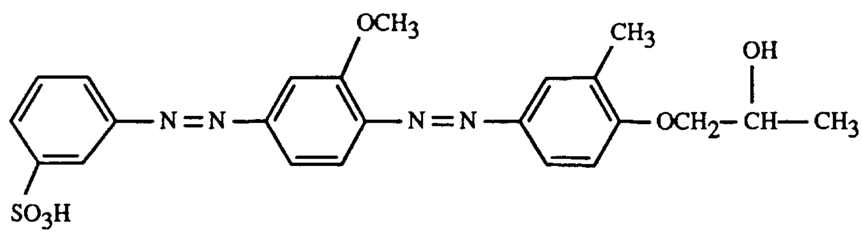

(7x)

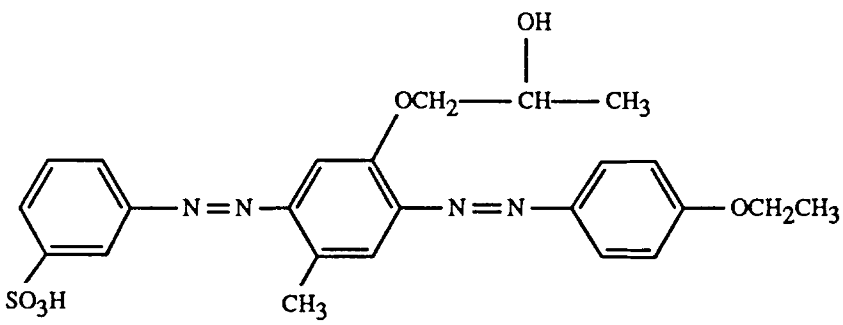

(7y)

und einen Farbstoff der Formel (6) verwendet.

**6.** Verfahren gemäss Anspruch 3, dadurch gekennzeichnet, dass man einen Farbstoff der Formel (6) und mindestens einen Farbstoff der Formeln (8), (9), (10) und (11)

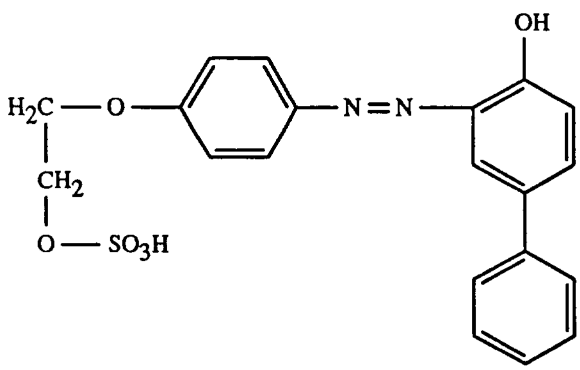

(8)

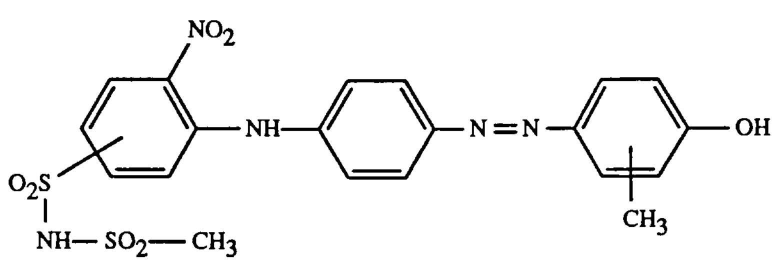

(9)

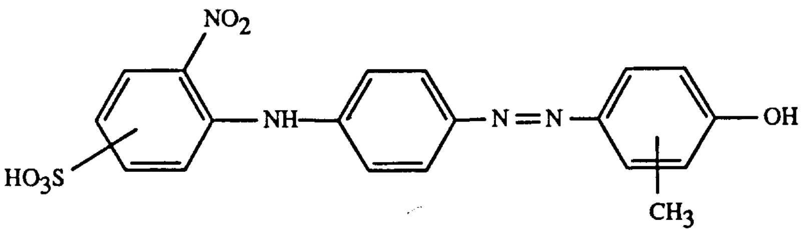

(10)

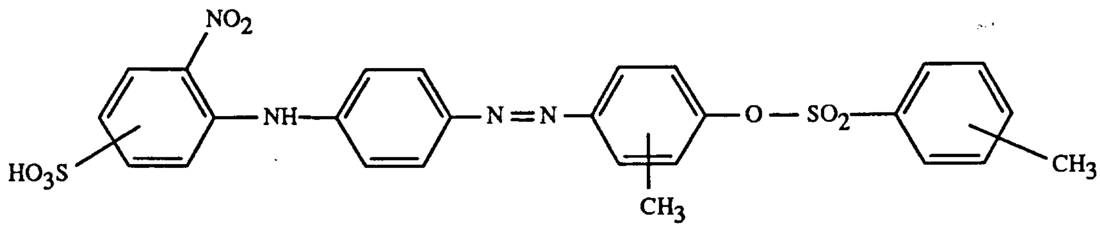

(11)

verwendet.

**7.** Verfahren gemäss Anspruch 3, dadurch gekennzeichnet, dass man einen Farbstoff der Formel (6) und einen Farbstoff der Formel

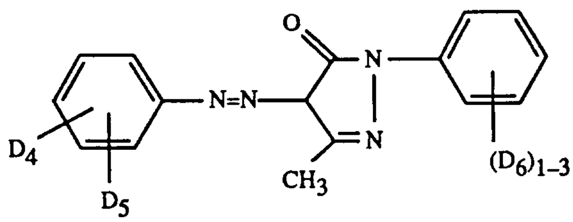

(12),

worin $D_4$ Chlor oder Phenylaminosulfonyl und $D_5$ Wasserstoff oder Sulfo ist und $(D_6)_{1-3}$ für 1 bis 3 Substituenten $D_6$ steht und $D_6$ Wasserstoff, Chlor oder Sulfo ist, verwendet.

**8.** Verfahren gemäss Anspruch 7, dadurch gekennzeichnet, dass man als Farbstoff der Formel (12) einen der Farbstoffe der Formeln (12a) bis (12d)

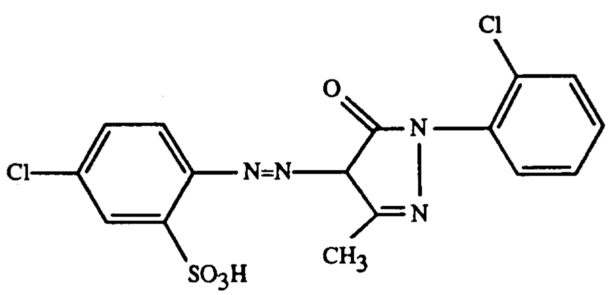

(12a),

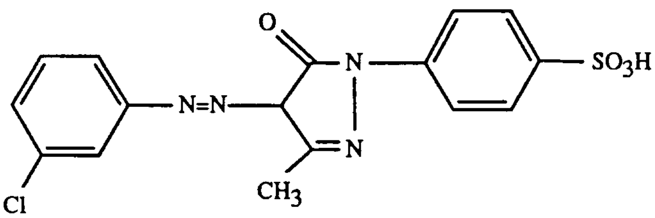

(12b),

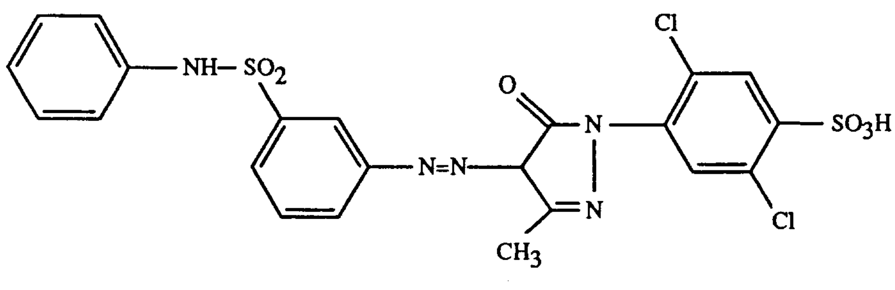

(12c)

oder

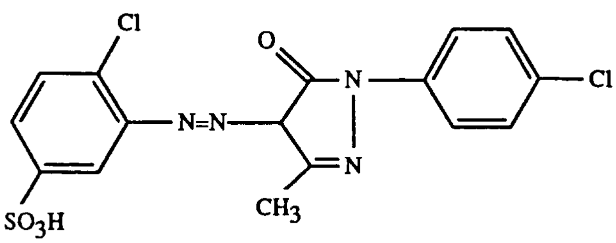

(12d)

verwendet.

**9.** Verfahren gemäss einem der Ansprüche 4 und 5, dadurch gekennzeichnet, dass man als Farbstoff der Formel (6) einen Farbstoff der Formel

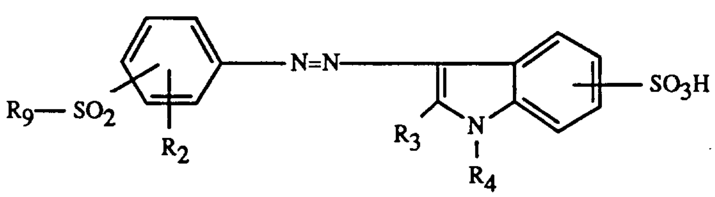

(13),

worin $R_2$, $R_3$ und $R_4$ die unter Formel (4) angegebenen Bedeutungen haben und $R_9$ ein gegebenenfalls durch $C_{1-4}$-Alkyl und Halogen substituierter Phenylrest oder Naphthyl ist, insbesondere worin $R_2$ Wasserstoff, $R_3$ Phenyl, $R_4$ Wasserstoff und $R_9$ Phenyl ist, und einen Farbstoff der Formel (7), insbesondere einen Farbstoff der Formel (7a) bis (7y), verwendet.

**10.** Verfahren gemäss einem der Ansprüche 1 bis 5 und 9, dadurch gekennzeichnet, dass man eine Farbstoffmischung, die den Farbstoff der Formel

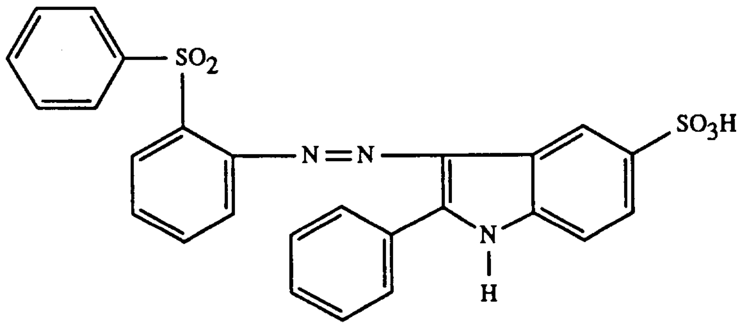

(14)

und den Farbstoff der Formel

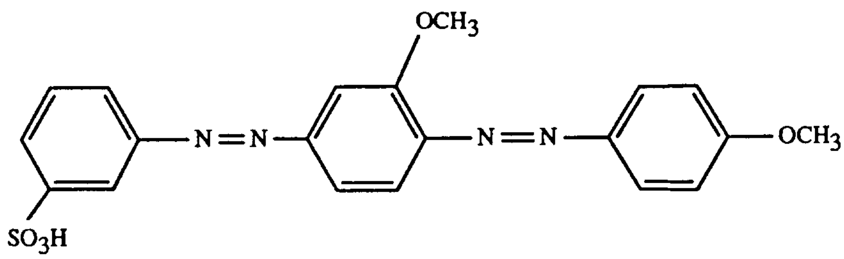

(7o)

oder den Farbstoff der Formel

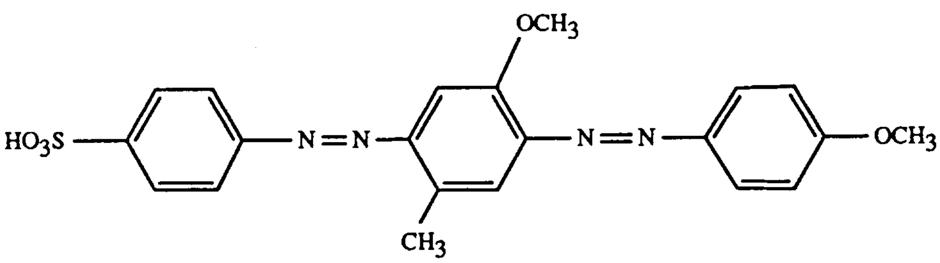

(7p)

enthält, verwendet.

**11.** Verfahren gemäss Anspruch 6, dadurch gekennzeichnet, dass man als Farbstoff der Formel (6) einen Farbstoff der Formel

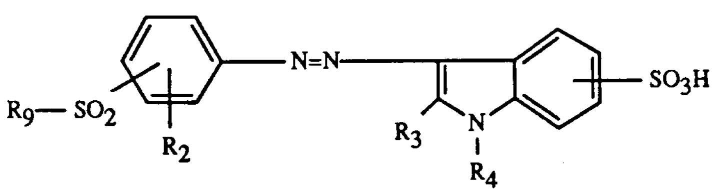

(13),

worin $R_2$, $R_3$ und $R_4$ die unter Formel (4) angegebenen Bedeutungen haben und $R_9$ ein gegebenenfalls durch $C_{1-4}$-Alkyl und Halogen substituierter Phenylrest oder Naphthyl ist, insbesondere worin $R_2$ Wasserstoff, $R_3$ Phenyl, $R_4$ Wasserstoff und $R_9$ Phenyl ist, und einen Farbstoff der Formel (8), (9), (10) oder (11) verwendet.

**12.** Verfahren gemäss einem der Ansprüche 1 bis 3, 6 und 11, dadurch gekennzeichnet, dass man eine Farbstoffmischung, die den Farbstoff der Formel

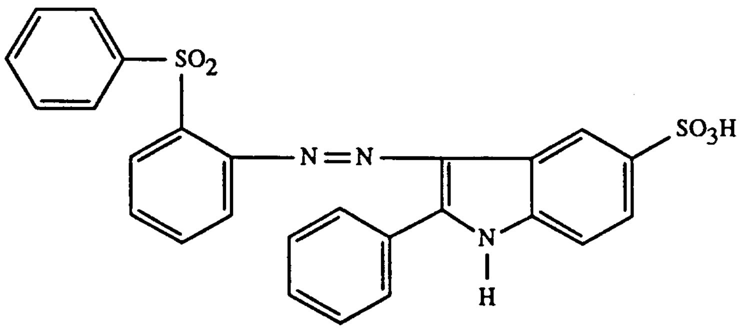

(14)

und den Farbstoff der Formel

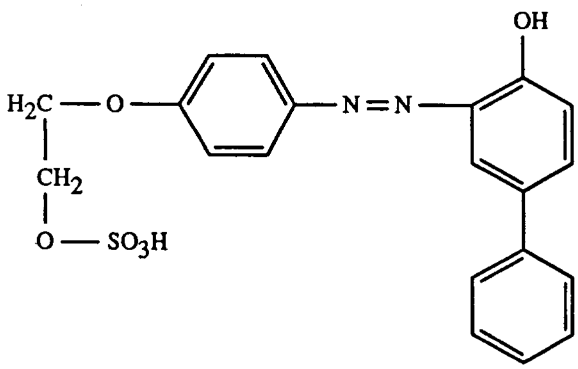

(8)

oder

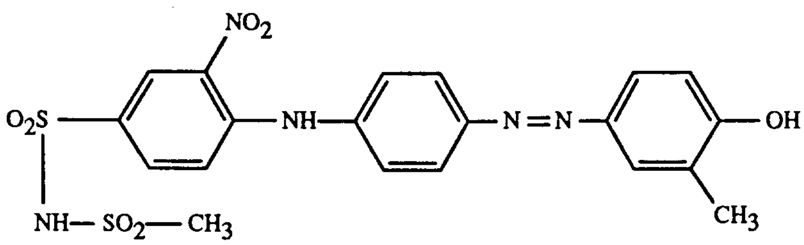

(15)

oder

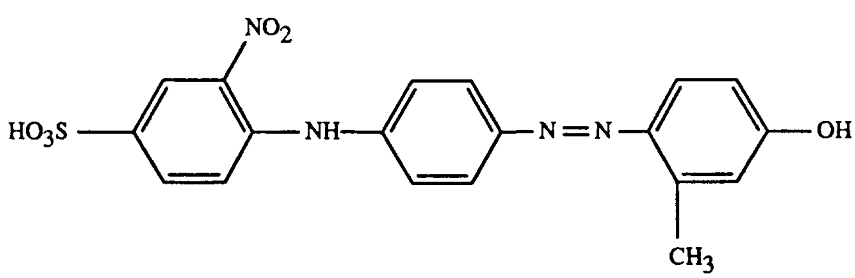

(16)

oder

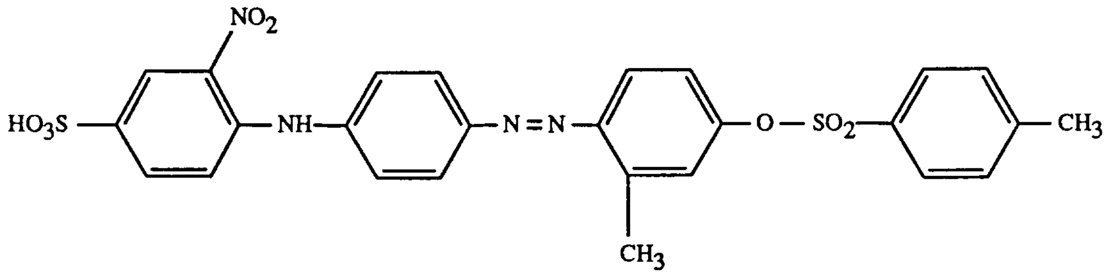

(17)

enthält, verwendet.

**13.** Verfahren gemäss einem der Ansprüche 1 bis 12, dadurch gekennzeichnet, dass das Verhältnis der verwendeten Farbstoffe der Formeln (1) und (2) oder (1) und (3) oder (1) und (4) oder (1) und (5) 20:80 bis 80:20 und insbesondere 40:60 bis 60:40 ist.

**14.** Verfahren zum Färben und Bedrucken von natürlichen und synthetischen Polyamidmaterialien mit einer Farbstoffmischung, dadurch gekennzeichnet, dass man eine Farbstoffmischung gemäss einem der Ansprüche 1 bis 13 verwendet.

**15.** Verfahren zum Färben und Bedrucken von natürlichen und synthetischen Polyamidmaterialien unter Verwendung der Farbstoffmischung gemäss einem der Ansprüche 1 bis 13 in Kombination mit anderen Farbstoffen.

**16.** Verfahren gemäss Anspruch 15 zum Trichromie-Färben oder -Bedrucken, dadurch gekennzeichnet, dass man eine Farbstoffmischung erhältlich gemäss einem der Ansprüche 1 bis 13 in Kombination mit mindestens einem roten Farbstoff und mindestens einem blauen Farbstoff verwendet.

**17.** Verwendung der Farbstoffmischung gemäss Anspruch 1 zum Färben und Bedrucken.

**Claims**
**Claims for the following Contracting States : BE, CH, DE, DK, FR, GB, IT, LI, NL**

**1.** A dye mixture containing a dye of the formula

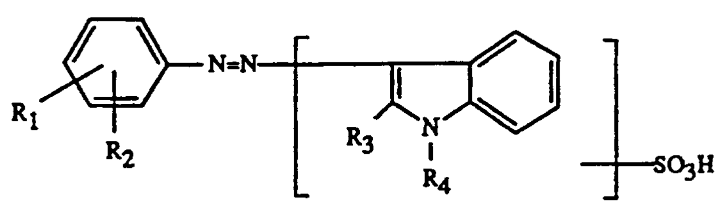

(1),

in which $R_1$ is hydrogen, $C_{1-4}$alkyl, $C_{1-4}$alkoxy, halogen, $C_{2-4}$alkanoylamino or an unsubstituted or substituted arylsulfonyl, aryloxy or arylcarbonyl radical, $R_2$ is hydrogen, halogen, an unsubstituted or substituted alkyl, aryloxy or aryloxysulfonyl radical or a radical of the formula

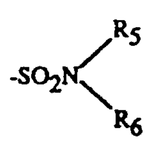

or

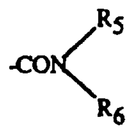

R3 is an unsubstituted or substituted alkyl or aryl radical, $R_4$ is hydrogen or alkyl and $R_5$ and $R_6$ independently of one another are hydrogen or an unsubstituted or substituted alkyl, cycloalkyl or aryl radical, and at least one dye of the formulae (2) to (5)

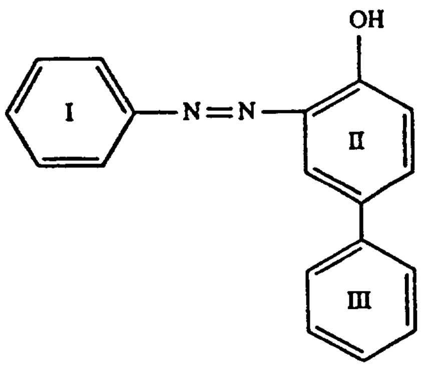

(2),

in which the benzene rings I, II and III can be substituted,

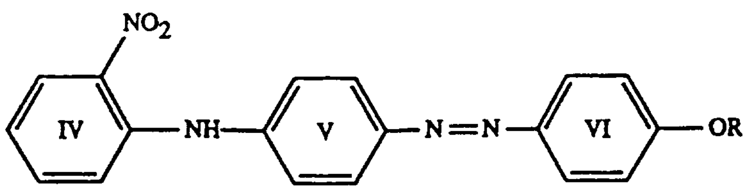

(3),

in which the benzene rings IV, V and VI can be substituted and R is hydrogen or arylsulfonyl,

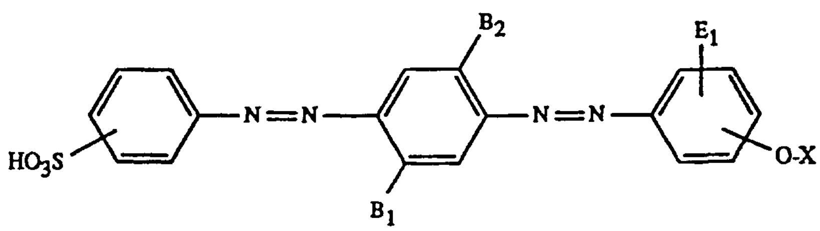

(4),

in which $B_1$, $B_2$ and $E_1$ are hydrogen, $C_{1-4}$alkyl, $C_{1-4}$alkoxy or $C_{2-4}$hydroxyalkoxy and X is straight-chain or branched $C_{1-4}$alkyl or straight-chain or branched $C_{2-4}$hydroxyalkyl, and

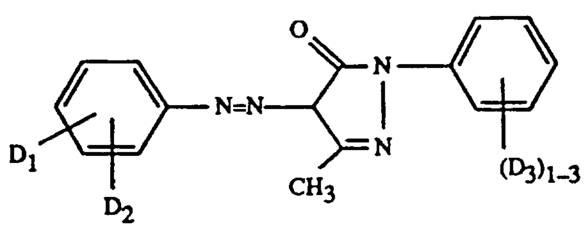

(5),

in which $D_1$ is as defined for $R_1$ in formula (1), $D_2$ is as defined for $R_2$ in formula (1) and $(D_3)_{1-3}$ is 1 to

3 substituents $D_3$, and $D_3$ is hydrogen, halogen, $C_{1-4}$alkyl, $C_{1-4}$alkoxy or sulfo.

2. A dye mixture according to claim 1, containing a dye of the formula (1) in which $R_1$ is hydrogen, $C_{1-4}$alkyl, $C_{1-4}$alkoxy, halogen, $C_{2-4}$alkanoylamino or a phenylsulfonyl, naphthylsulfonyl, phenyloxy or phenylcarbonyl radical which is unsubstituted or substituted by $C_{1-4}$alkyl or halogen, $R_2$ is hydrogen, halogen, $C_{1-4}$alkyl, trifluoromethyl, a phenoxy or phenoxysulfonyl radical which is unsubstituted or substituted by
$C_{1-4}$alkyl or halogen, or is

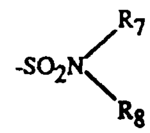

or

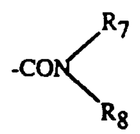

,

$R_3$ is $C_{1-4}$alkyl or phenyl, $R_4$ is hydrogen or $C_{1-8}$alkyl and $R_7$ and $R_8$ independently of one another are hydrogen, $C_{1-4}$alkyl, $C_{1-4}$hydroxyalkyl, $C_{5-7}$cycloalkyl, phenyl or phenyl which is substituted by halogen, trifluoromethyl or $C_{1-4}$alkyl, and one or more dyes of the formulae (2), (3), (4) or (5).

3. A dye mixture according to any one of claims 1 and 2, which contains, as the dye of the formula (1), a dye of the formula

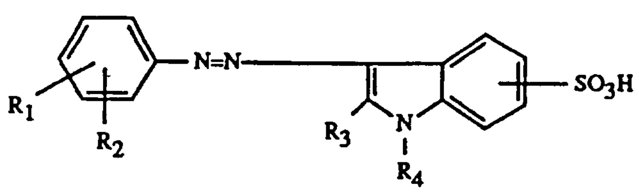

(6),

in which $R_1$ is hydrogen, methyl, chlorine, methoxy, ethoxy, o-methylphenoxy, phenoxy, acetylamino, phenylsulfonyl, p-methylphenylsulfonyl, p-chlorophenylsulfonyl, naphthylsulfonyl, p-methylbenzoyl or p-chlorobenzoyl, $R_2$ is hydrogen, chlorine, methyl, trifluoromethyl, o-methylphenoxy, o-chlorophenoxy, o-chlorophenoxysulfonyl, $-SO_2NH_2$, N-$C_{1-2}$alkylaminosulfonyl, N,N-dimethylaminosulfonyl, N-methyl-N-$\beta$-hydroxyethylaminosulfonyl, N-methyl-N-cyclohexylaminosulfonyl, N-phenylaminosulfonyl, N-o-methylphenylaminosulfonyl N-o-chlorophenylaminosulfonyl, N-m-trifluoromethylphenylaminosulfonyl N-ethyl-N-phenylaminosulfonyl, $-CONH_2$ or $-CON(CH_3)_2$, $R_3$ is methyl or phenyl and $R_4$ is hydrogen, methyl, ethyl or octyl, and one or more dyes of the formulae (2), (3), (4) or (5).

4. A dye mixture according to claim 3, containing a dye of the formula (6) and at least one dye of the formula

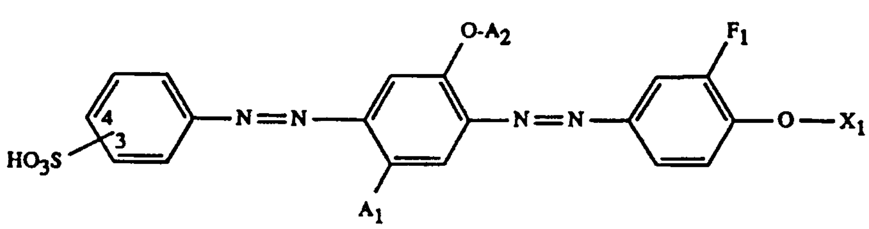

(7),

in which $A_1$ is hydrogen or methyl, $F_1$ is hydrogen or methyl, $A_2$ and $X_1$ independently of one another are methyl, ethyl, β-hydroxyethyl, β-hydroxypropyl, β-hydroxybutyl or α-ethyl-β-hydroxyethyl and the sulfo group is bonded in the 3- or 4-position.

**5.** A dye mixture according to claim 4, which contains, as the dye of the formula (7), at least one of the dyes of the formulae (7a) to (7y)

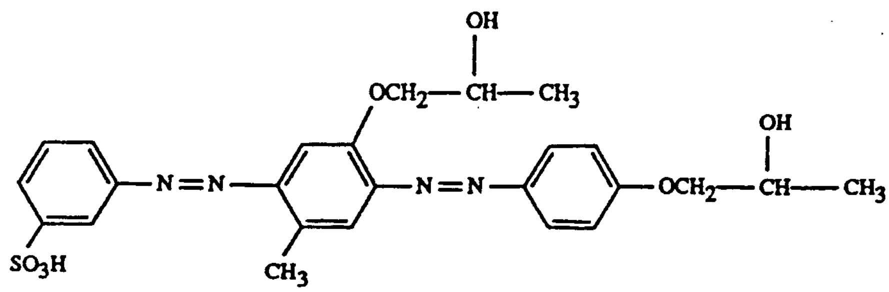

(7a)

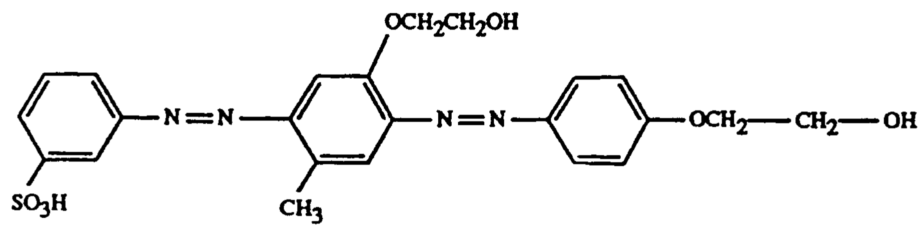

(7b)

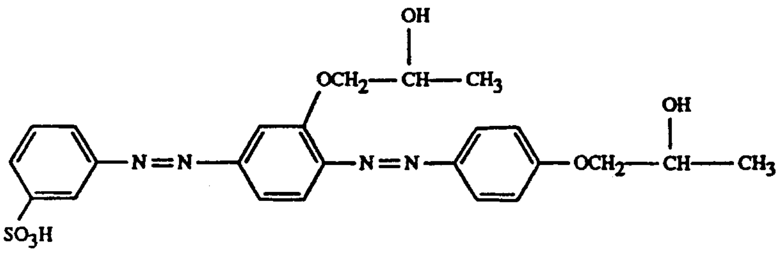

(7c)

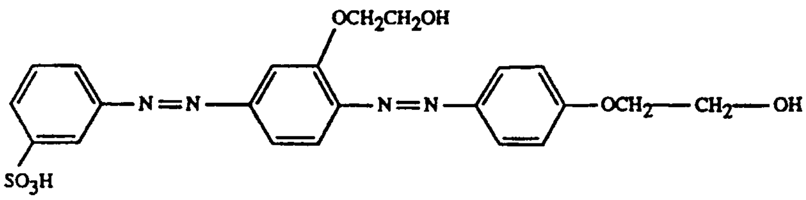

(7d)

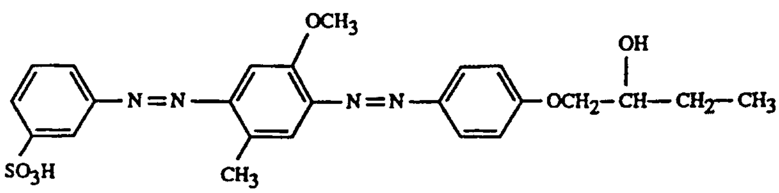

(7e)

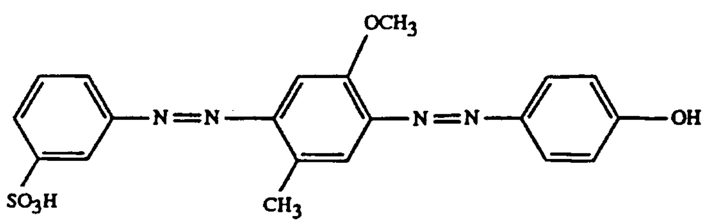

(7f)

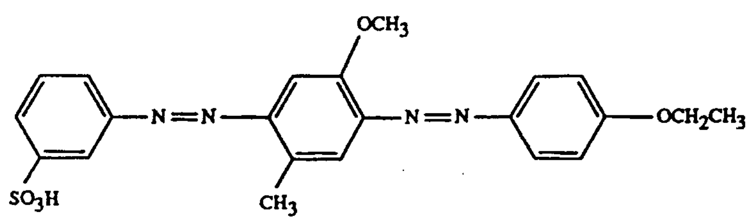

(7g)

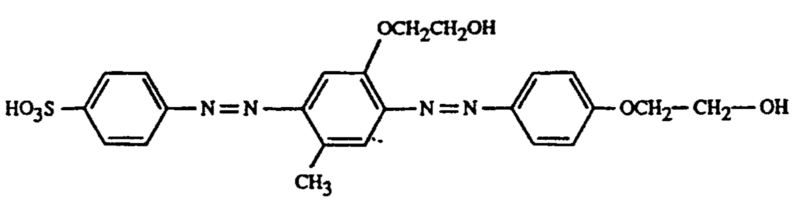

(7h)

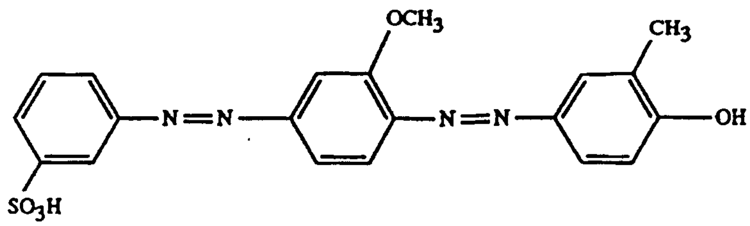

(7i)

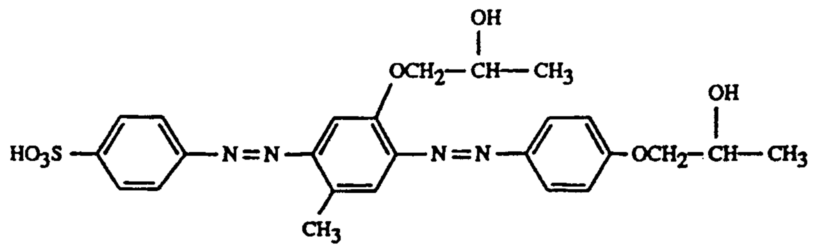

(7j)

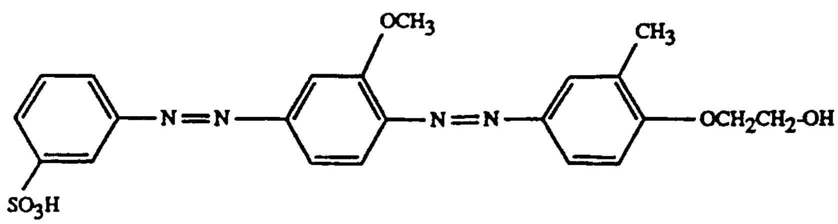

(7k)

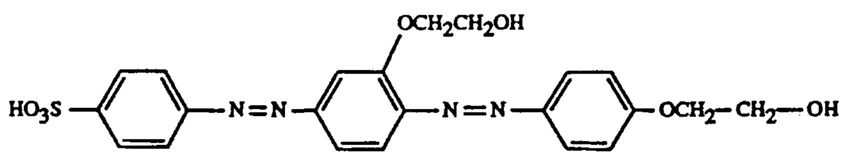

(7l)

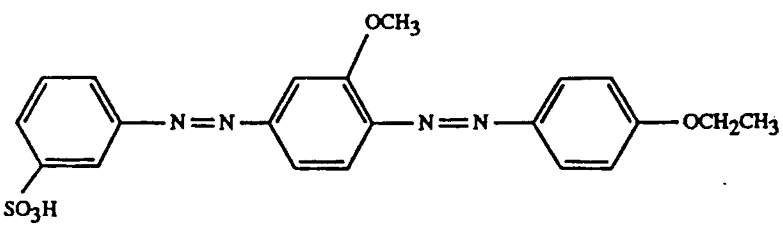

(7m)

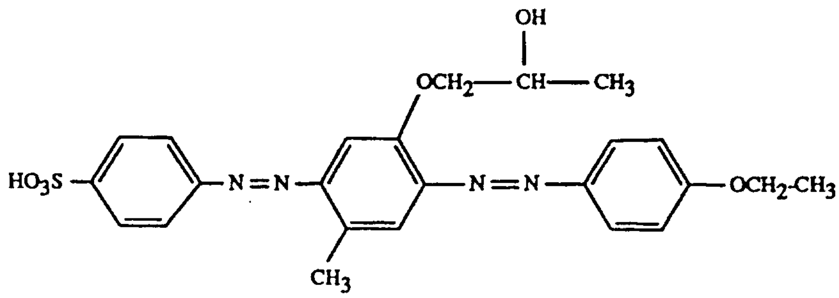

(7n)

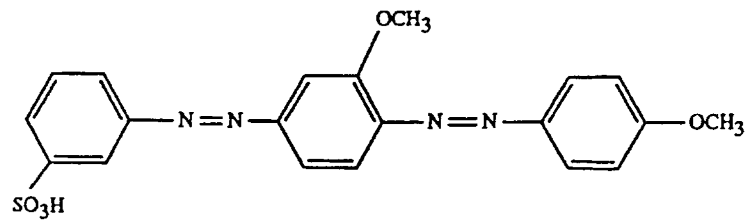

(7o)

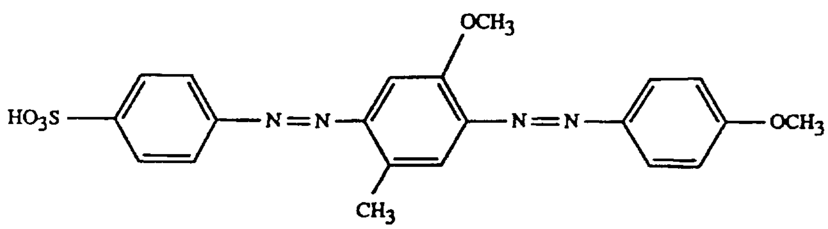

(7p)

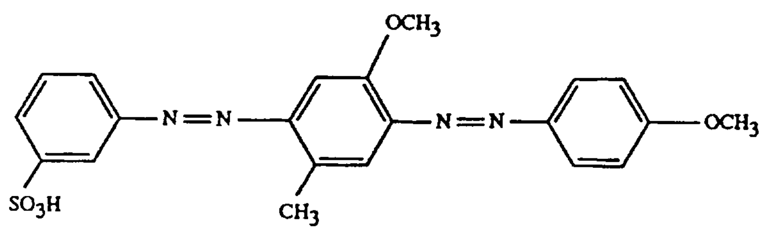

(7q)

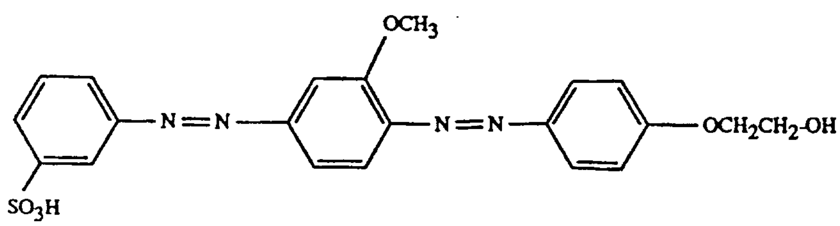

(7r)

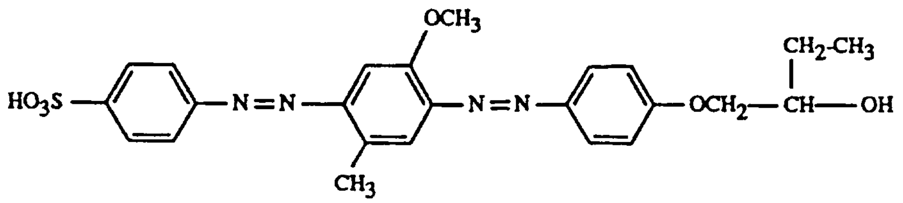
(7s)

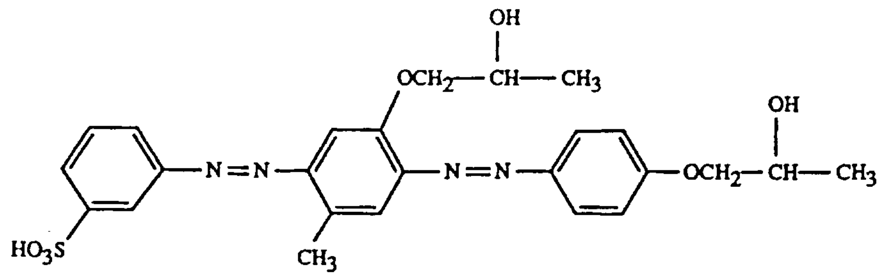
(7t)

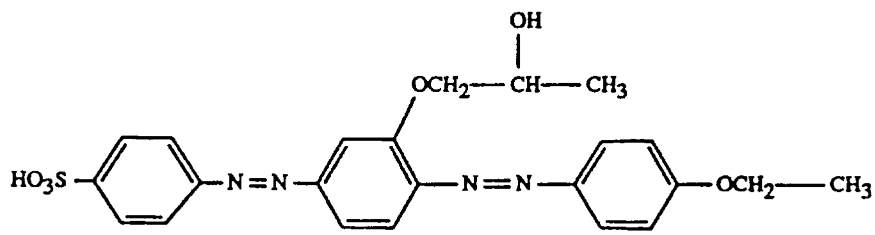
(7u)

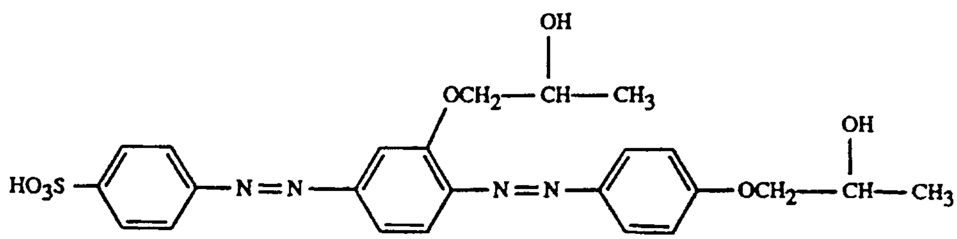
(7v)

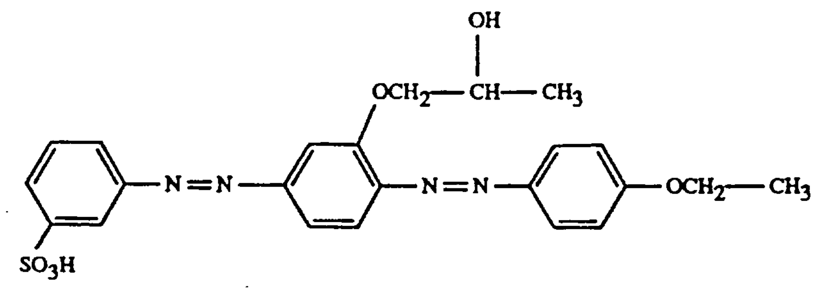
(7w)

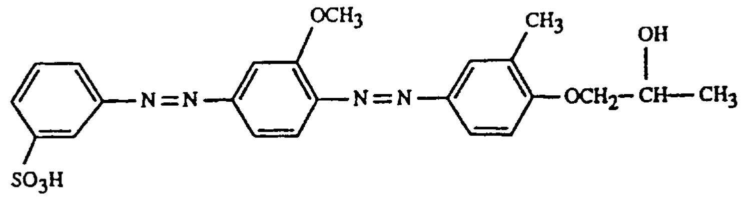

(7x)

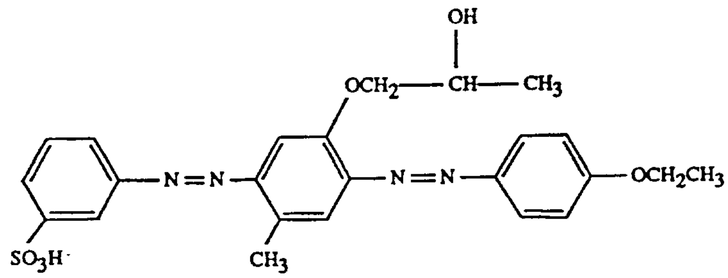

(7y)

and a dye of the formula (6).

**6.** A dye mixture according to claim 3, containing a dye of the formula (6) and at least one dye of the formulae (8), (9), (10) and (11)

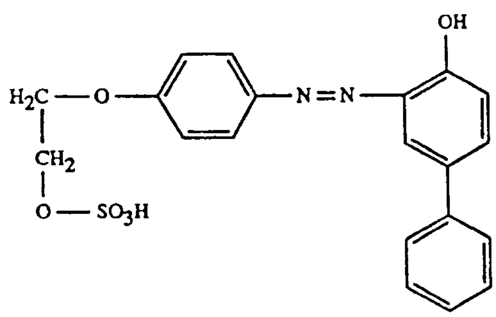

(8)

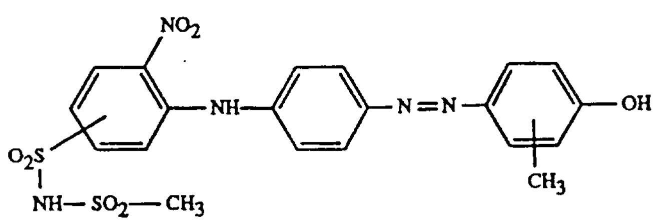

(9)

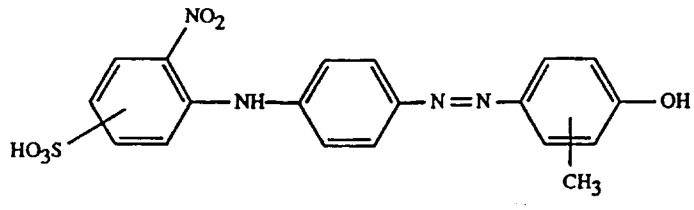

(10)

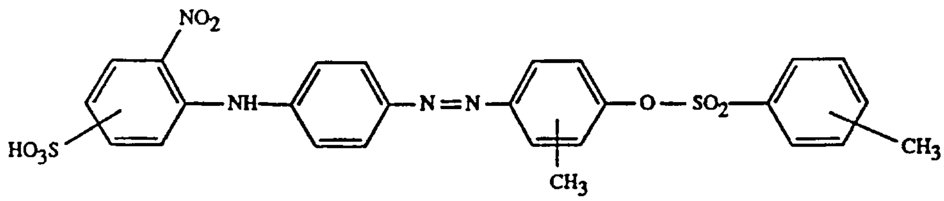

(11)

7. A dye mixture according to claim 3, containing a dye of the formula (6) and a dye of the formula

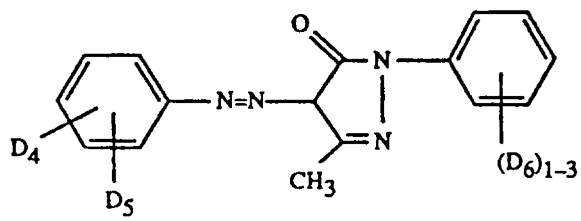

(12),

in which $D_4$ is chlorine or phenylaminosulfonyl, $D_5$ is hydrogen or sulfo and $(D_6)_{1-3}$ is 1 to 3 substituents $D_6$, and $D_6$ is hydrogen, chlorine or sulfo.

8. A dye mixture according to claim 7, which contains, as the dye of the formula (12), one of the dyes of the formulae (12a) to (12d)

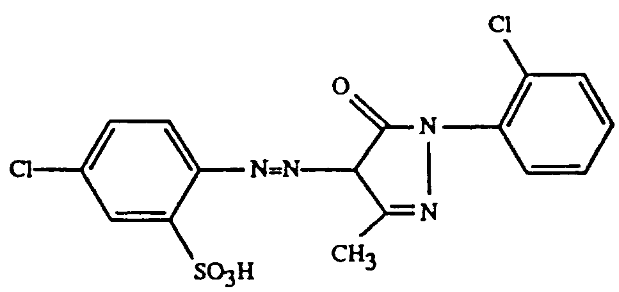

(12a),

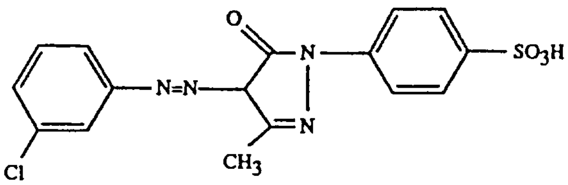

(12b),

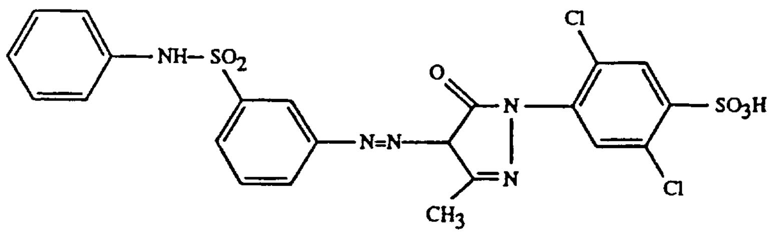

(12c)

or

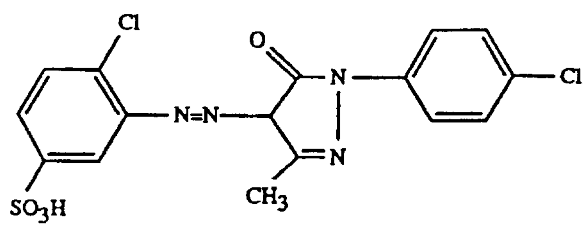

(12d)

**9.** A dye mixture according to any one of claims 4 and 5, which contains as the dye of the formula (6), a dye of the formula

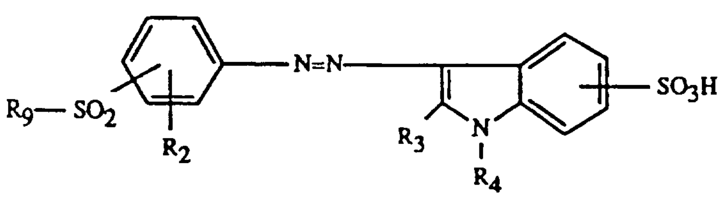

(13),

in which $R_2$, $R_3$ and $R_4$ are as defined under formula (4) and $R_9$ is a phenyl radical which is unsubstituted or substituted by $C_{1-4}$alkyl and halogen, or naphthyl, in particular in which $R_2$ is hydrogen, $R_3$ is phenyl, $R_4$ is hydrogen and $R_9$ is phenyl, and a dye of the formula (7), in particular a dye of the formula (7a) to (7y).

**10.** A dye mixture according to any one of claims 1 to 5 and 9, which is a dye mixture containing the dye of the formula

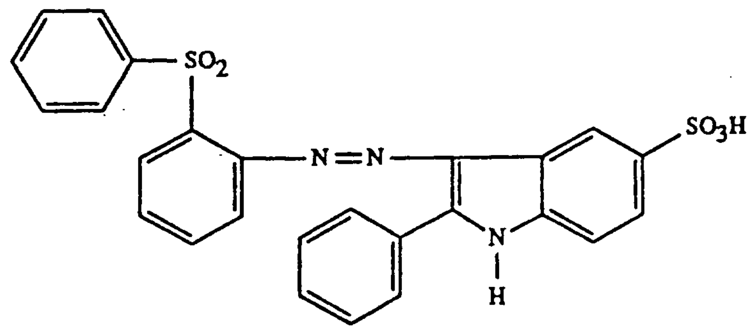

(14)

and the dye of the formula

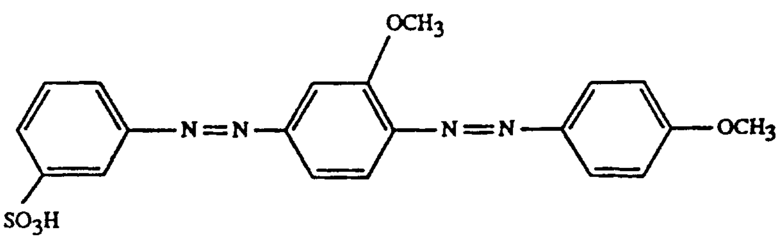

(7o)

or the dye of the formula

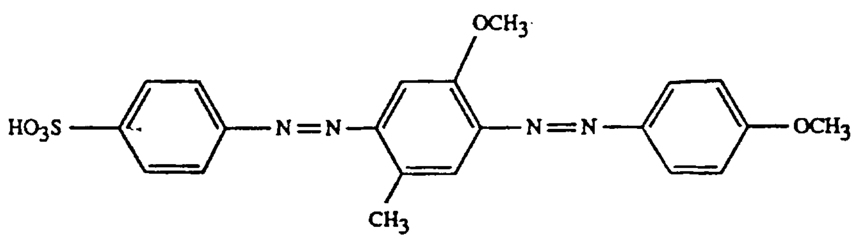

(7p)

**11.** A dye mixture according to claim 6, which contains, as the dye of the formula (6), a dye of the formula

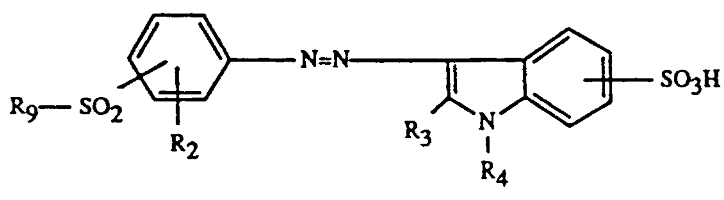

(13),

in which $R_2$, $R_3$ and $R_4$ are as defined under formula (4) and $R_9$ is a phenyl radical which is unsubstituted or substituted by $C_{1-4}$alkyl and halogen, or naphthyl, in particular in which $R_2$ is hydrogen, $R_3$ is phenyl, $R_4$ is hydrogen and $R_9$ is phenyl, and a dye of the formula (8), (9), (10) or (11).

**12.** A dye mixture according to any one of claims 1 to 3, 6 and 11, which is a dye mixture containing the dye of the formula

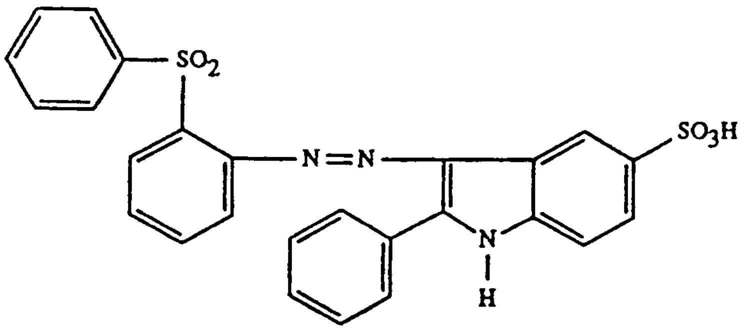

(14)

and the dye of the formula

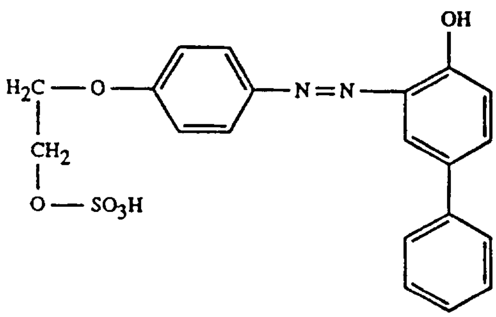

(8)

or

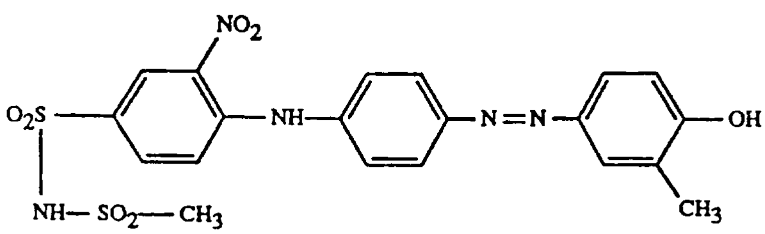

(15)

or

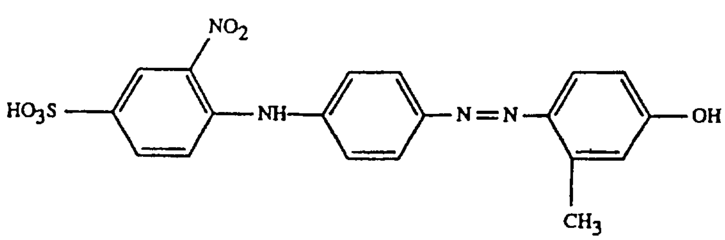

(16)

or

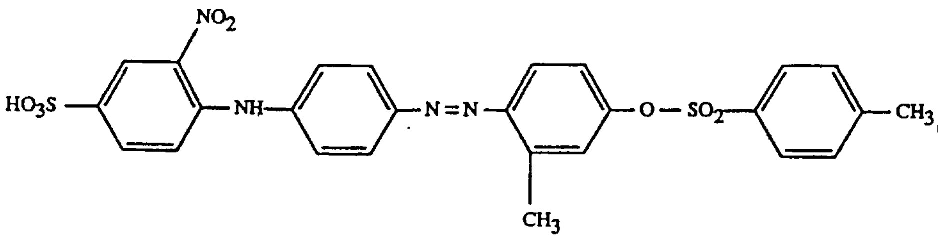

(17)

13. A dye mixture according to any one of claims 1 to 12, wherein the ratio of the dyes of the formulae (1) and (2) or (1) and (3) or (1) and (4) and (5) is 20:80 to 80:20, and in particular 40:60 to 60:40.

14. A process for dyeing and printing naturally occurring and synthetic polyamide materials with a dye mixture, which comprises using a dye mixture according to any one of claims 1 to 13.

15. A process for dyeing and printing naturally occurring and synthetic polyamide materials using the dye mixture according to any one of claims 1 to 13 in combination with other dyes.

16. A process according to claim 15 for trichromatic dyeing or printing, which comprises using a dye mixture according to any one of claims 1 to 13 in combination with at least one red dye and at least one blue dye.

17. The use of the dye mixture according to claim 1 for dyeing and printing.

18. Dyeing and printing preparations containing a dye mixture according to claims 1 to 13.

**Claims for the following Contracting State : ES**

1. A process for preparing a dye mixture by mixing a dye A with at least one of dyes B, C, D and E, which comprises using as dye A a dye of the formula

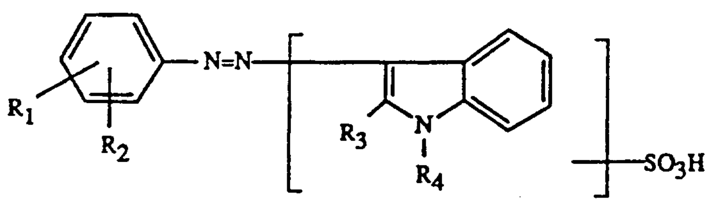

(1),

in which $R_1$ is hydrogen, $C_{1-4}$alkyl, $C_{1-4}$alkoxy, halogen, $C_{2-4}$alkanoylamino or an unsubstituted or substituted arylsulfonyl, aryloxy or arylcarbonyl radical, $R_2$ is hydrogen, halogen, an unsubstituted or substituted alkyl, aryloxy or aryloxysulfonyl radical or a radical of the formula

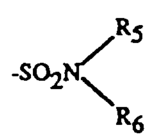

or

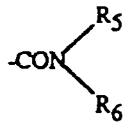

,

$R_3$ is an unsubstituted or substituted alkyl or aryl radical, $R_4$ is hydrogen or alkyl and $R_5$ and $R_6$ independently of one another are hydrogen or an unsubstituted or substituted alkyl, cycloalkyl or aryl radical, and as dyes B, C, D and E at least one dye of the formulae (2) to (5)

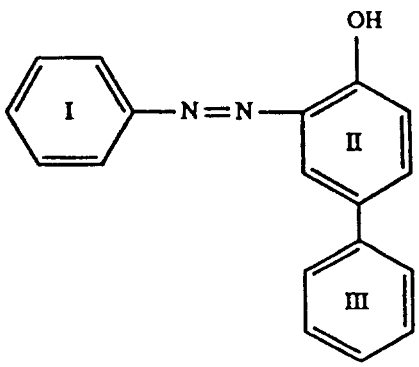

(2),

in which the benzene rings I, II and III can be substituted,

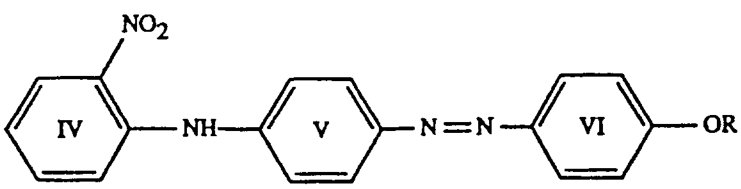

(3),

in which the benzene rings IV, V and VI can be substituted and R is hydrogen or arylsulfonyl,

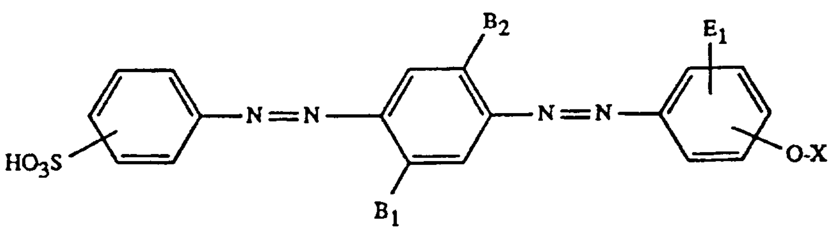

(4),

in which $B_1$, $B_2$ and $E_1$ are hydrogen, $C_{1-4}$alkyl, $C_{1-4}$alkoxy or $C_{2-4}$hydroxyalkoxy and X is straight-chain or branched $C_{1-4}$alkyl or straight-chain or branched $C_{2-4}$hydroxyalkyl, and

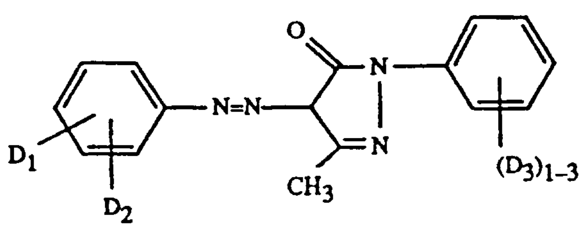

(5),

in which $D_1$ is as defined for $R_1$ in formula (1), $D_2$ is as defined for $R_2$ in formula (1) and $(D_3)_{1-3}$ is 1 to 3 substituents $D_3$, and $D_3$ is hydrogen, halogen, $C_{1-4}$alkyl, $C_{1-4}$alkoxy or sulfo.

**2.** A process according to claim 1, wherein a dye of the formula (1) is used in which $R_1$ is hydrogen $C_{1-4}$alkyl, $C_{1-4}$alkoxy, halogen, $C_{2-4}$alkanoylamino or a phenylsulfonyl, naphthylsulfonyl, phenyloxy or phenylcarbonyl radical which is unsubstituted or substituted by $C_{1-4}$alkyl or halogen, $R_2$ is hydrogen, halogen, $C_{1-4}$alkyl, trifluoromethyl, a phenoxy or phenoxysulfonyl radical which is unsubstituted or substituted by $C_{1-4}$alkyl or halogen, or is

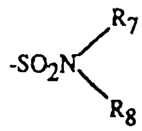

or

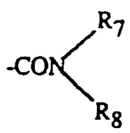
,

$R_3$ is $C_{1-4}$alkyl or phenyl, $R_4$ is hydrogen or $C_{1-8}$alkyl and $R_7$ and $R_8$ independently of one another are hydrogen, $C_{1-4}$alkyl, $C_{1-4}$hydroxyalkyl, $C_{5-7}$cycloalkyl, phenyl or phenyl which is substituted by halogen, trifluoromethyl or $C_{1-4}$alkyl, and one or more dyes of the formulae (2), (3), (4) or (5).

**3.** A process according to any one of claims 1 and 2, wherein, as the dye of the formula (1), a dye of the formula

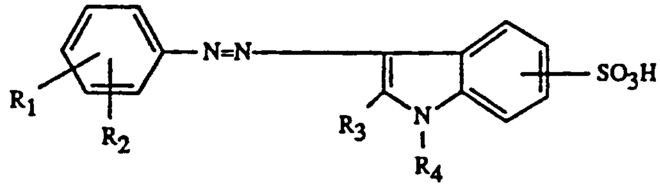
(6),

in which R is hydrogen, methyl, chlorine, methoxy, ethoxy, o-methylphenoxy, phenoxy, acetylamino, phenylsulfonyl, p-methylphenylsulfonyl, p-chlorophenylsulfonyl, naphthylsulfonyl, p-methylbenzoyl or p-chlorobenzoyl, $R_2$ is hydrogen, chlorine, methyl, trifluoromethyl, o-methylphenoxy, o-chlorophenoxy, o-chlorophenoxysulfonyl, $-SO_2NH_2$, N-$C_{1-2}$alkylaminosulfonyl, N,N-dimethylaminosulfonyl, N-methyl-N-$\beta$-hydroxyethylaminosulfonyl, N-methyl-N-cyclohexylaminosulfonyl, N-phenylaminosulfonyl, N-o-methylphenylaminosulfonyl, N-o-chlorophenylaminosulfonyl, N-m-trifluoromethylphenylaminosulfonyl, N-ethyl-N-phenylaminosulfonyl, $-CONH_2$ or $-CON(CH_3)_2$, $R_3$ is methyl or phenyl and $R_4$ is hydrogen, methyl, ethyl or octyl, and one or more dyes of the formulae (2), (3), (4) or (5), are used.

**4.** A process according to claim 3, wherein a dye of the formula (6) and at least one dye of the formula

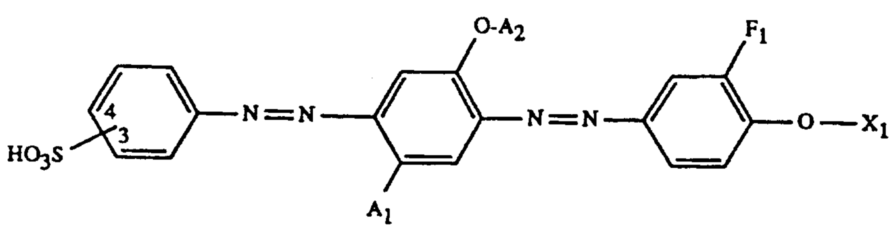
(7),

in which $A_1$ is hydrogen or methyl, $F_1$ is hydrogen or methyl, $A_2$ and $X_1$ independently of one another are methyl, ethyl, β-hydroxyethyl, β-hydroxypropyl, β-hydroxybutyl or α-ethyl-β-hydroxyethyl and the sulfo group is bonded in the 3- or 4-position, are used.

5. A process according to claim 4, wherein, as the dye of the formula (7), at least one of the dyes of the formulae (7a) to (7y)

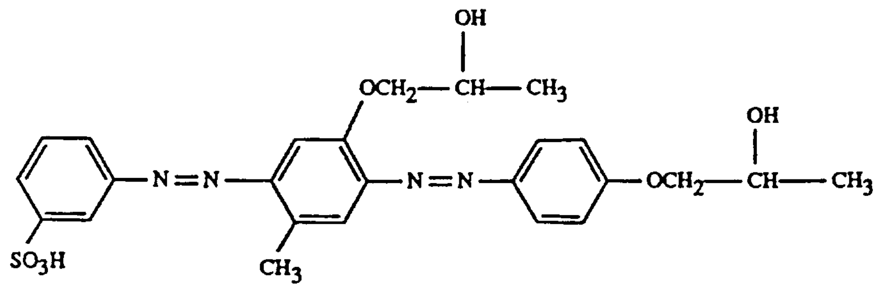

(7a)

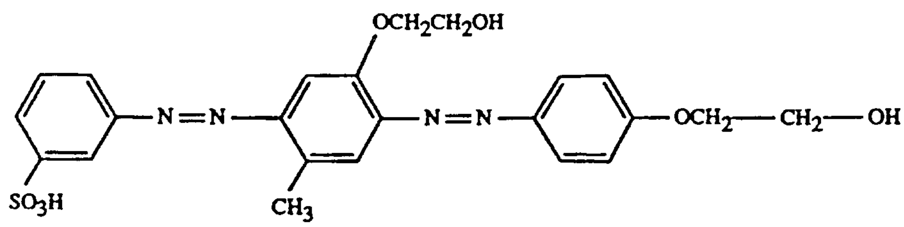

(7b)

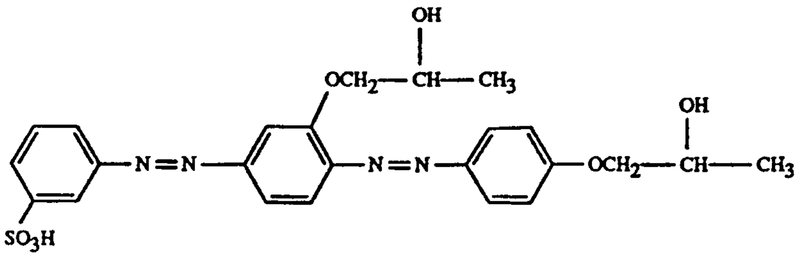

(7c)

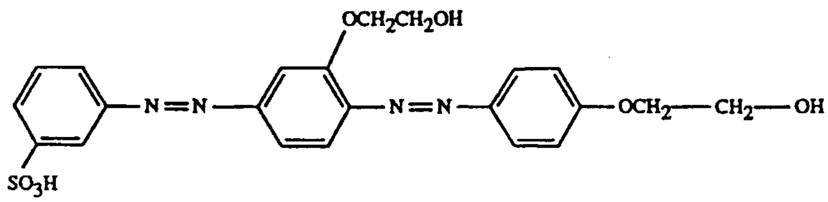

(7d)

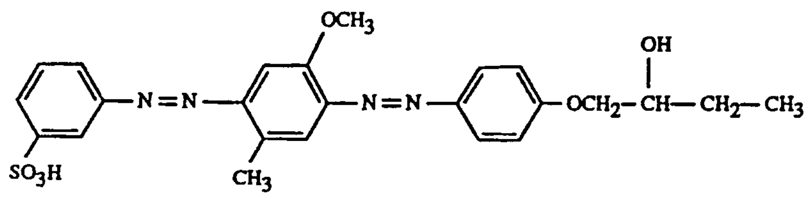

(7e)

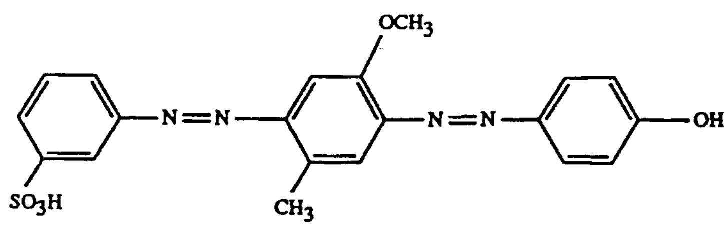

(7f)

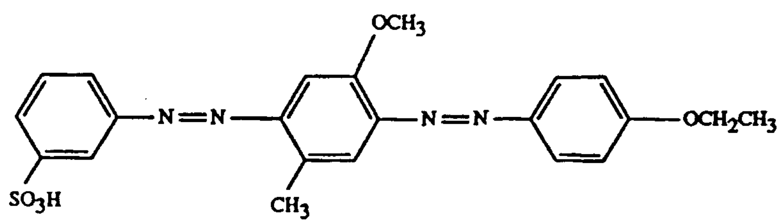

(7g)

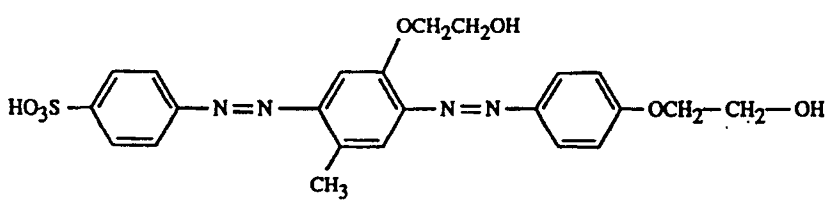

(7h)

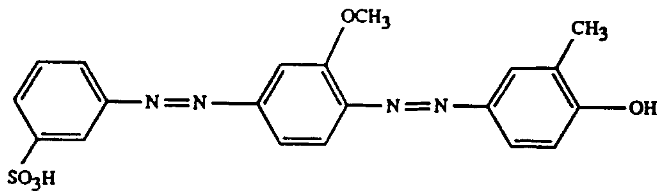

(7i)

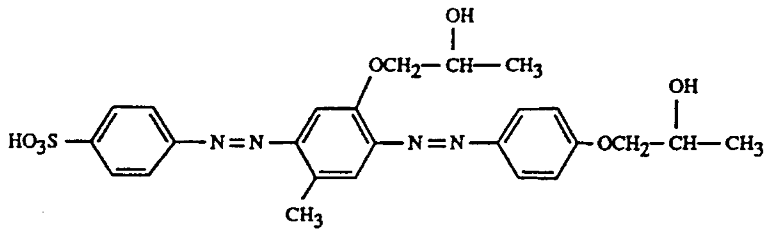

(7j)

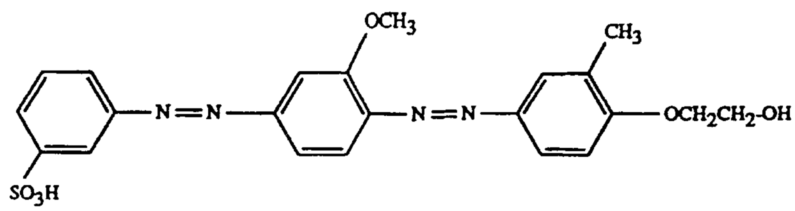

(7k)

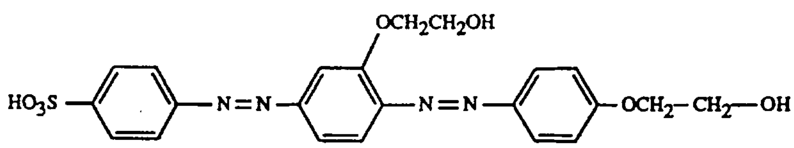

(7l)

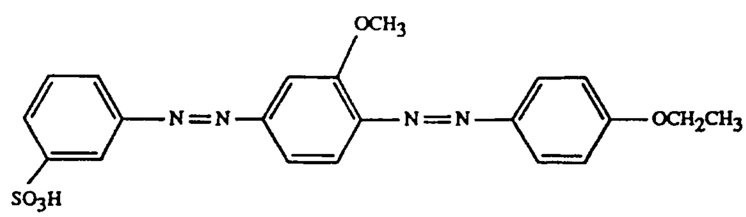

(7m)

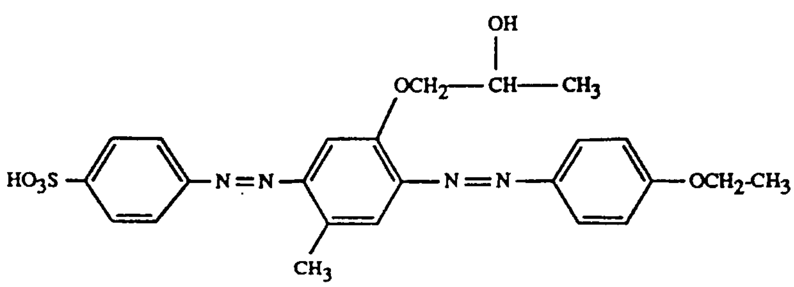

(7n)

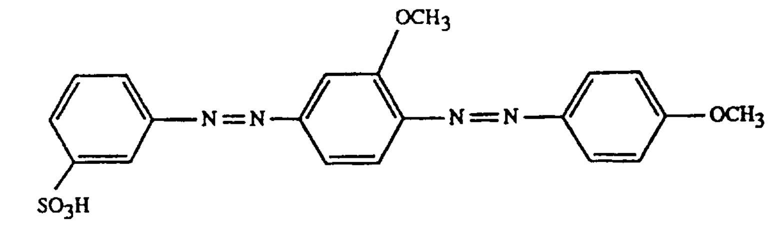

(7o)

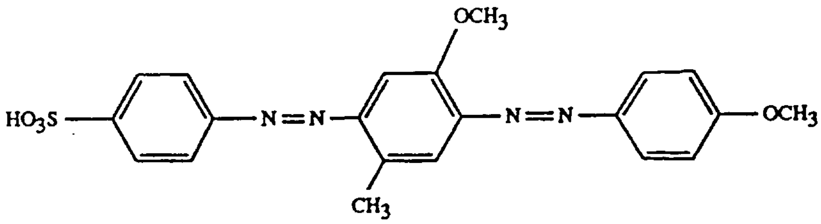

(7p)

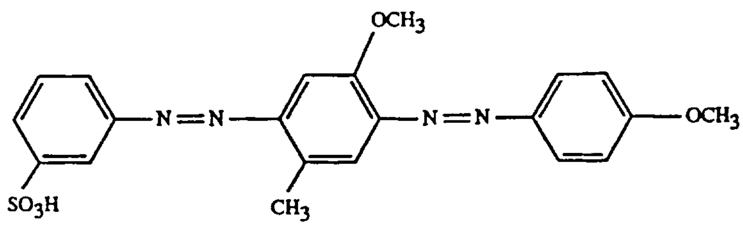

(7q)

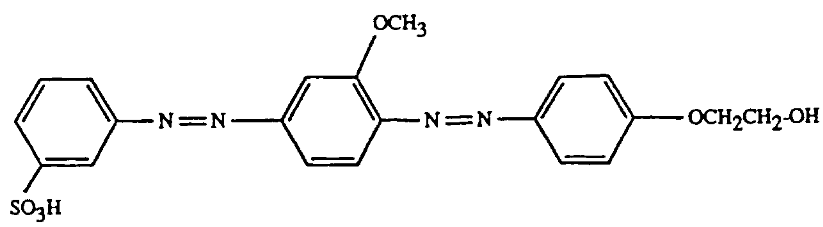

(7r)

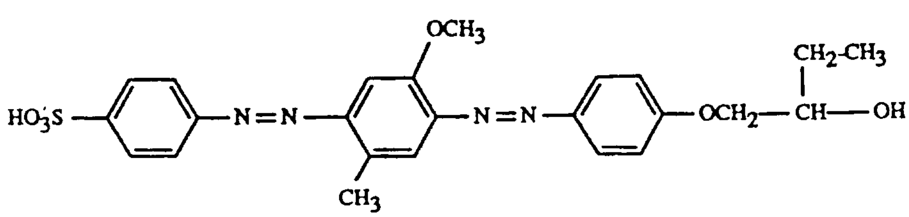

(7s)

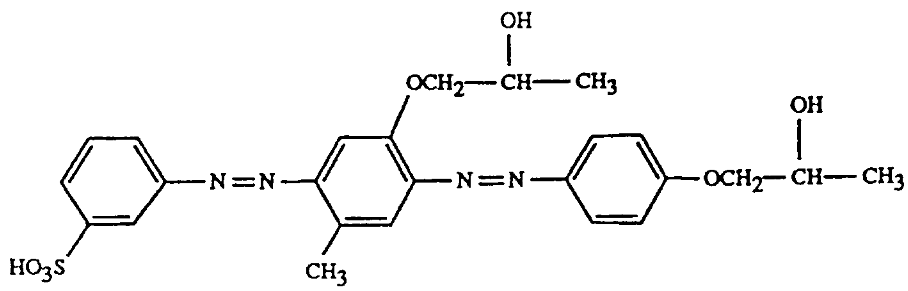

(7t)

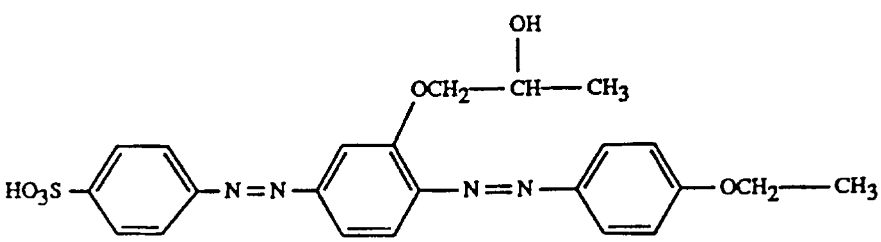

(7u)

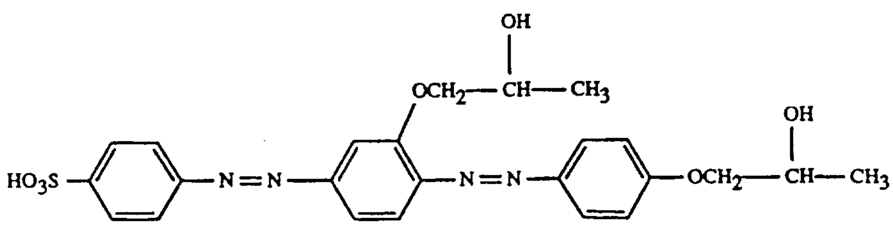

(7v)

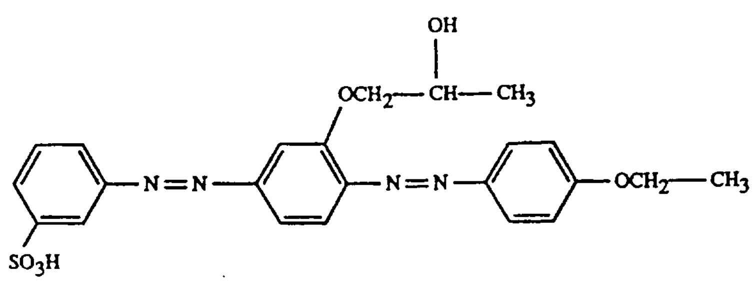

(7w)

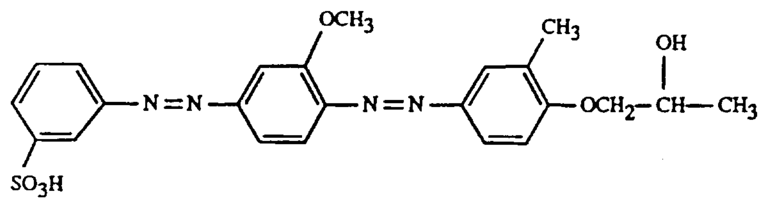

(7x)

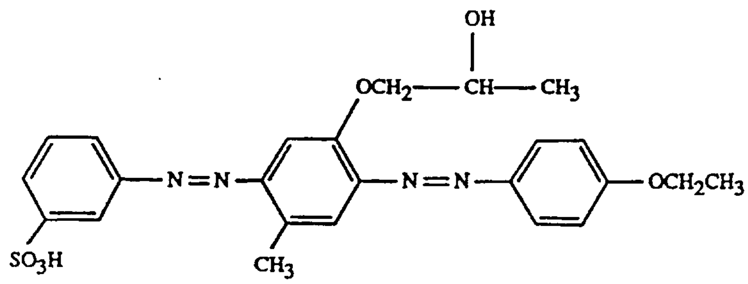

(7y)

and a dye of the formula (6) are used.

6. A process according to claim 3, wherein a dye of the formula (6) and at least one dye of the formulae (8), (9), (10) and (11)

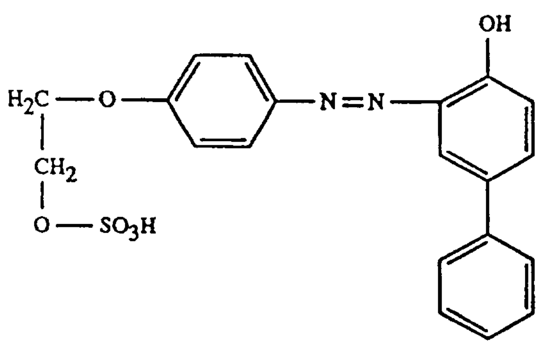

(8)

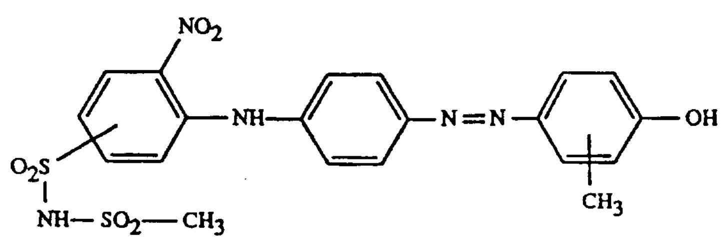

(9)

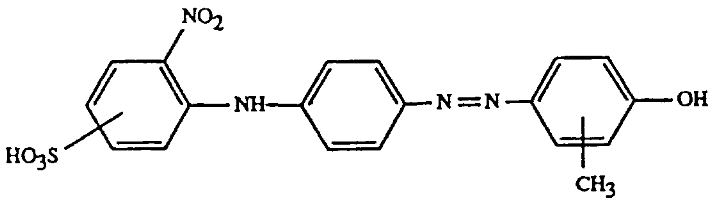

(10)

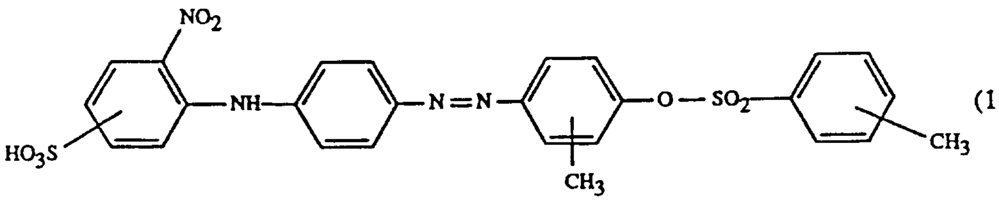

(11)

are used.

**7.** A process according to claim 3, containing a dye of the formula (6) and a dye of the formula

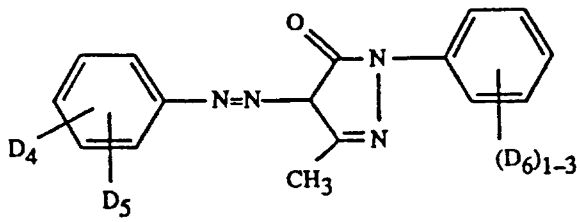

(12),

in which $D_4$ is chlorine or phenylaminosulfonyl, $D_5$ is hydrogen or sulfo and $(D_6)_{1-3}$ is 1 to 3 substituents $D_6$, and $D_6$ is hydrogen, chlorine or sulfo.

**8.** A process according to claim 7, wherein, as the dye of the formula (12), one of the dyes of the formulae (12a) to (12d)

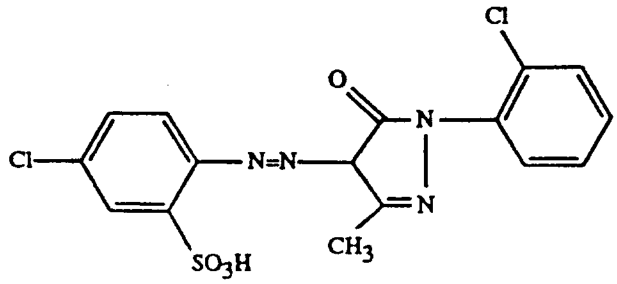

(12a),

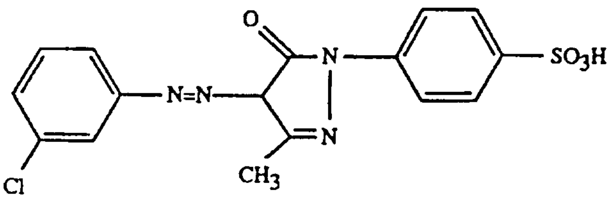

(12b),

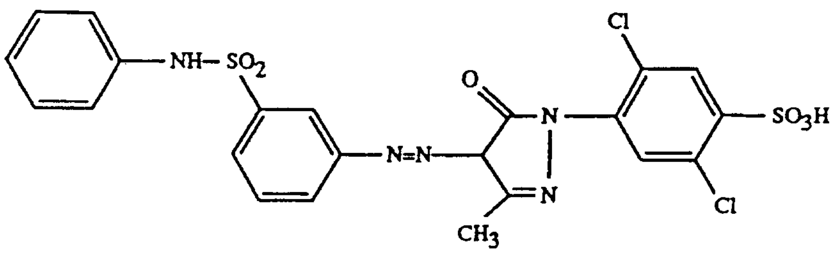

(12c)

or

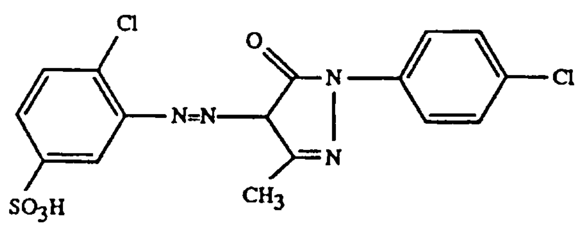

(12d)

is used.

9. A process according to any one of claims 4 and 5, wherein, as the dye of the formula (6), a dye of the formula

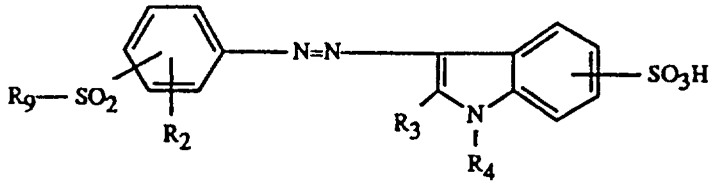

(13),

in which $R_2$, $R_3$ and $R_4$ are as defined under formula (4) and $R_9$ is a phenyl radical which is unsubstituted or substituted by $C_{1-4}$alkyl and halogen, or naphthyl, in particular in which $R_2$ is

hydrogen, $R_3$ is phenyl, $R_4$ is hydrogen and $R_9$ is phenyl, and a dye of the formula (7), in particular a dye of the formula (7a) to (7y), are used.

**10.** A process according to any one of claims 1 to 5 and 9, wherein a dye mixture containing the dye of the formula

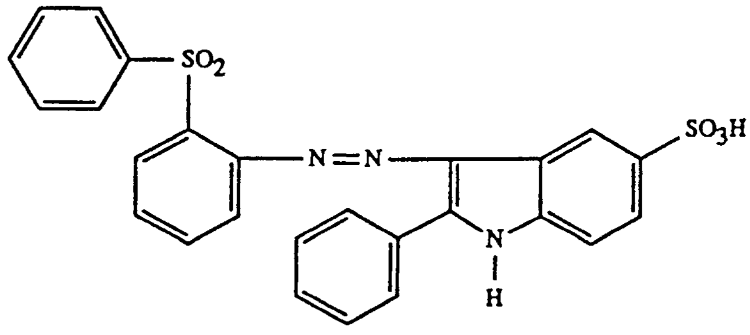

(14)

and the dye of the formula

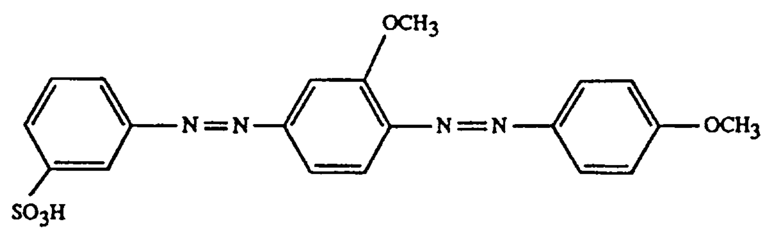

(7o)

or the dye of the formula

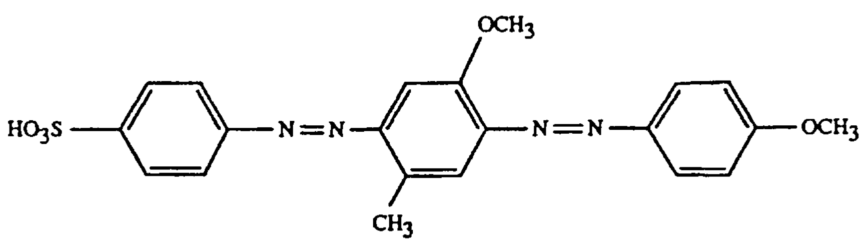

(7p)

is used.

**11.** A process according to claim 6, wherein, as the dye of the formula (6), a dye of the formula

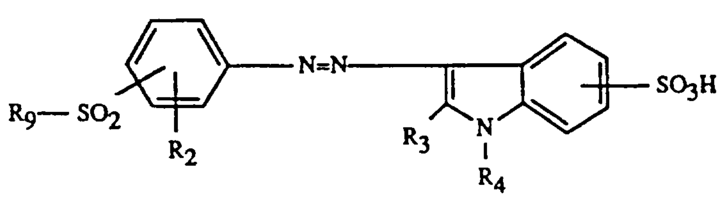

(13),

in which $R_2$, $R_3$ and $R_4$ are as defined under formula (4) and $R_9$ is a phenyl radical which is unsubstituted or substituted by $C_{1-4}$alkyl and halogen, or naphthyl, in particular in which $R_2$ is hydrogen, $R_3$ is phenyl, $R_4$ is hydrogen and $R_9$ is phenyl, and a dye of the formula (8), (9), (10) or (11), are used.

**12.** A process according to any one of claims 1 to 3, 6 and 11, wherein a dye mixture containing the dye of the formula

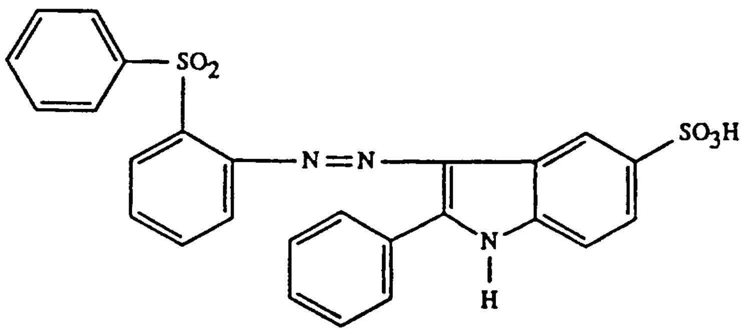

(14)

and the dye of the formula

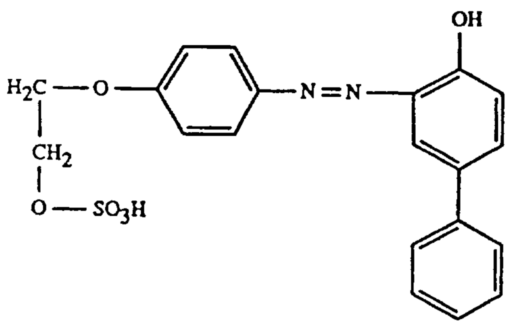

(8)

or

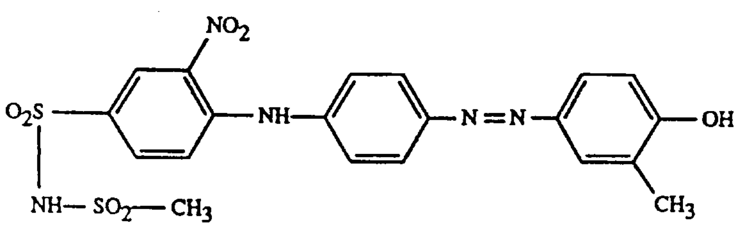

(15)

or

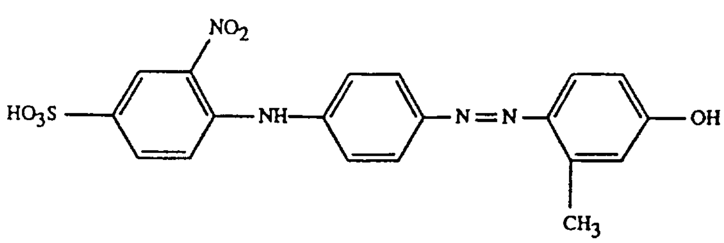

(16)

or

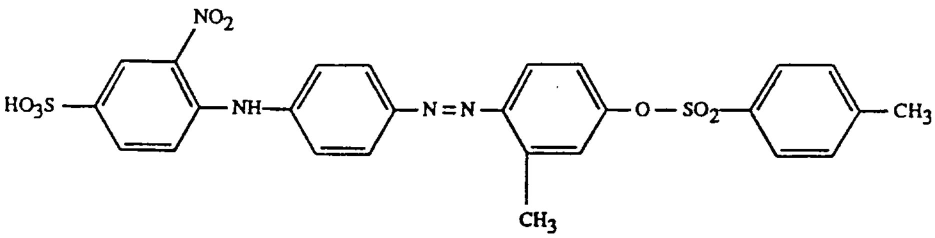
(17)

is used.

**13.** A process according to any one of claims 1 to 12, wherein the ratio of the dyes used of the formulae (1) and (2) or (1) and (3) or (1) and (4) or (1) and (5) is 20:80 to 80:20, and in particular 40:60 to 60:40.

**14.** A process for dyeing and printing naturally occurring and synthetic polyamide materials with a dye mixture, which comprises using a dye mixture according to any one of claims 1 to 13.

**15.** A process for dyeing and printing naturally occurring and synthetic polyamide materials using the dye mixture according to any one of claims 1 to 13 in combination with other dyes.

**16.** A process according to claim 15 for trichromatic dyeing or printing, which comprises using a dye mixture obtainable according to any one of claims 1 to 13 in combination with at least one red dye and at least one blue dye.

**17.** The use of the dye mixture according to claim 1 for dyeing and printing.

**Revendications**
**Revendications pour les Etats contractants suivants : BE, CH, DE, DK, FR, GB, IT, LI, NL**

**1.** Mélange de colorants, caractérisé en ce qu'il contient un colorant de formule

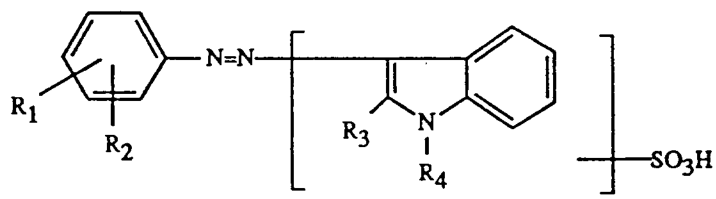
(1)

dans laquelle $R_1$ représente un atome d'hydrogène ou d'halogène ou un groupe alkyle en $C_1$-$C_4$, alcoxy en $C_1$-$C_4$ ou (alcanoyl en $C_2$-$C_4$)-amino, ou encore un reste arylsulfonyle, aryloxy ou arylcarbonyle portant éventuellement des substituants, $R_2$ représente un atome d'hydrogène ou d'halogène ou un groupe alkyle, aryloxy ou aryloxysulfonyle, portant éventuellement des substituants, ou encore un groupe de formule $-SO_2NR_5R_6$ ou $-CONR_5R_6$, $R_3$ représente un groupe alkyle ou aryle éventuellement substitué, $R_4$ représente un atome d'hydrogène ou un groupe alkyle et $R_5$ et $R_6$, indépendamment l'un de l'autre, représentent chacun un atome d'hydrogène ou un groupe alkyle, cycloalkyle ou aryle, éventuellement substitué,
et au moins un colorant correspondant à l'une des formules (2) à (5)

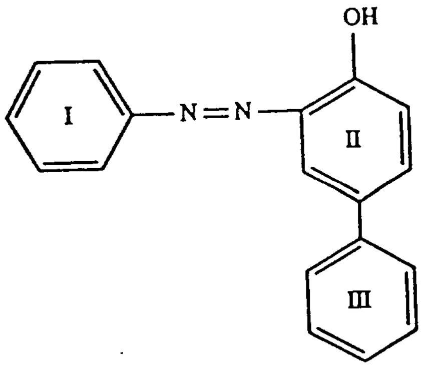

(2)

dans laquelle les cycles benzéniques I, II et III peuvent porter des substituants,

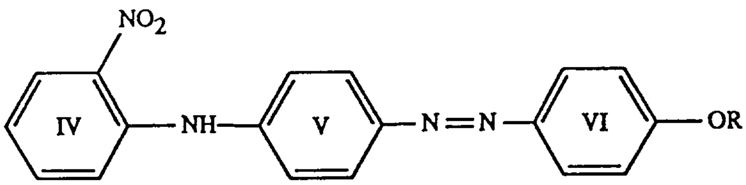

(3)

dans laquelle les cycles benzéniques IV, V et VI peuvent porter des substituants et R représente un atome d'hydrogène ou un groupe arylsulfonyle,

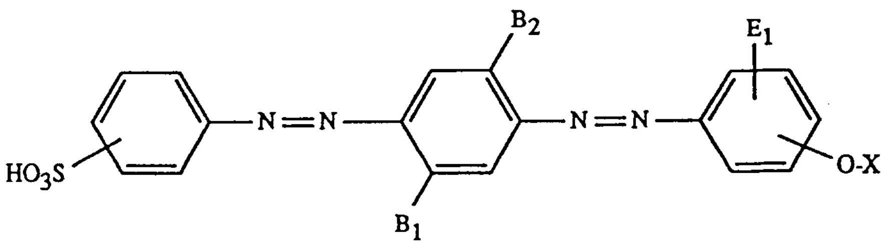

(4)

dans laquelle $B_1$, $B_2$ et $E_1$ représentent des atomes d'hydrogène ou des groupes alkyle en $C_1$-$C_4$, alcoxy en $C_1$-$C_4$ ou hydroxyalcoxy en $C_2$-$C_4$, et X représente un groupe alkyle en $C_1$-$C_4$ linéaire ou ramifié ou un groupe hydroxyalkyle en $C_2$-$C_4$ linéaire ou ramifié, et

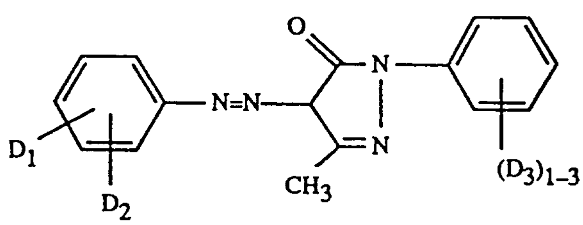

(5)

dans laquelle $D_1$ possède la signification indiquée à propos du symbole $R_1$ de la formule (1), $D_2$ possède la signification indiquée à propos du symbole $R_2$ de la formule (1), et $(D_3)_{1-3}$ représente de 1 à 3 substituants symbolisés par $D_3$, lequel représente un atome d'hydrogène ou d'halogène ou un groupe alkyle en $C_1$-$C_4$, alcoxy en $C_1$-$C_4$ ou sulfo.

2. Mélange de colorants conforme à la revendication 1, caractérisé en ce qu'il contient un colorant de formule (1) dans laquelle $R_1$ représente un atome d'hydrogène ou d'halogène ou un groupe alkyle en $C_1$-$C_4$, alcoxy en $C_1$-$C_4$ ou (alcanoyl en $C_2$-$C_4$)-amino, ou encore un groupe phénylsulfonyle, naphtylsulfonyle, phényloxy ou phénylcarbonyle portant éventuellement des substituants halogéno ou alkyle en $C_1$-$C_4$, $R_2$ représente un atome d'hydrogène ou d'halogène ou un groupe alkyle en $C_1$-$C_4$ ou trifluorométhyle, un groupe phénoxy ou phénoxysulfonyle portant éventuellement des substituants halogéno ou alkyle en $C_1$-$C_4$, ou encore un groupe de formule $-SO_2NR_7R_8$ ou $-CONR_7R_8$, $R_3$ représente un groupe alkyle en $C_1$-$C_4$ ou phényle, $R_4$ représente un atome d'hydrogène ou un groupe alkyle en $C_1$-$C_8$, et $R_7$ et $R_8$ représentent chacun, indépendamment l'un de l'autre, un atome d'hydrogène ou un groupe alkyle en $C_1$-$C_4$, hydroxyalkyle en $C_1$-$C_4$, cycloalkyle en $C_5$-$C_7$ ou phényle, ce dernier pouvant porter des substituants halogéno, trifluorométhyle ou alkyle en $C_1$-$C_4$, et un ou plusieurs colorants de formules (2), (3), (4) ou (5).

**3.** Mélange de colorants conforme à l'une des revendications 1 et 2, caractérisé en ce qu'il contient, en tant que colorant de formule (1), un colorant de formule

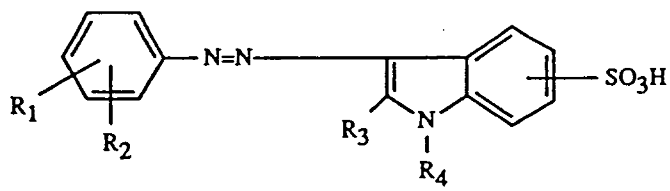

(6)

dans laquelle $R_1$ représente un atome d'hydrogène ou de chlore ou un groupe méthyle, méthoxy, éthoxy, o-méthylphénoxy, phénoxy, acétylamino, phénylsulfonyle, p-méthylphénylsulfonyle, p-chlorophénylsulfonyle, naphtylsulfonyle, p-méthylbenzoyle ou p-chlorobenzoyle, $R_2$ représente un atome d'hydrogène ou de chlore ou un groupe méthyle, trifluorométhyle, o-méthylphénoxy, o-chlorophénoxy, o-chlorophénoxysulfonyle, sulfamyle, N-(alkyl en $C_1$-$C_2$)-sulfamyle, N,N-diméthylsulfamyle, N-méthyl-N-$\beta$-hydroxyéthylsulfamyle, N-méthyl-N-cyclohexylsulfamyle, N-phénylsulfamyle, N-o-méthyl-phénylsulfamyle, N-o-chlorophénylsulfamyle, N-m-trifluorométhylphénylsulfamyle, N-éthyl-N-phénylsulfamyle, carbamyle ou N,N-diméthylcarbamyle, $R_3$ représente un groupe méthyle ou phényle et $R_4$ représente un atome d'hydrogène ou un groupe méthyle, éthyle ou octyle, et un ou plusieurs colorants de formules (2), (3), (4) et (5).

**4.** Mélange de colorants conforme à la revendication 3, caractérisé en ce qu'il contient un colorant de formule (6) et au moins un colorant de formule

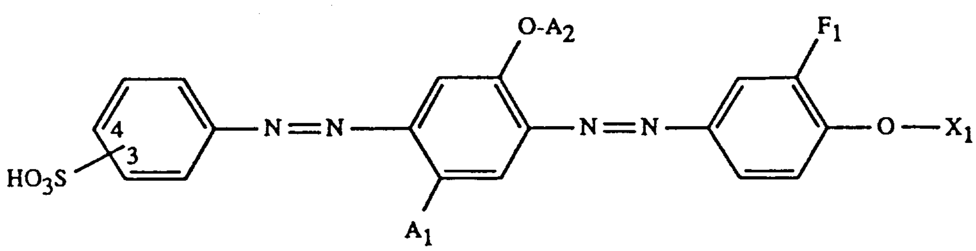

(7)

dans laquelle $A_1$ représente un atome d'hydrogène ou un groupe méthyle, $F_1$ représente un atome d'hydrogène ou un groupe méthyle et $A_2$ et $X_1$, indépendamment l'un de l'autre, représentent chacun un groupe méthyle, éthyle, $\beta$-hydroxyéthyle, $\beta$-hydroxypropyle, $\beta$-hydroxybutyle ou $\alpha$-éthyl-$\beta$-hydroxyéthyle, le groupe sulfo étant lié en position 3 ou 4.

**5.** Mélange de colorants conforme à la revendication 4, caractérisé en ce qu'il contient, en tant que colorant de formule (7), au moins l'un des colorants correspondant aux formules (7a) à (7y)

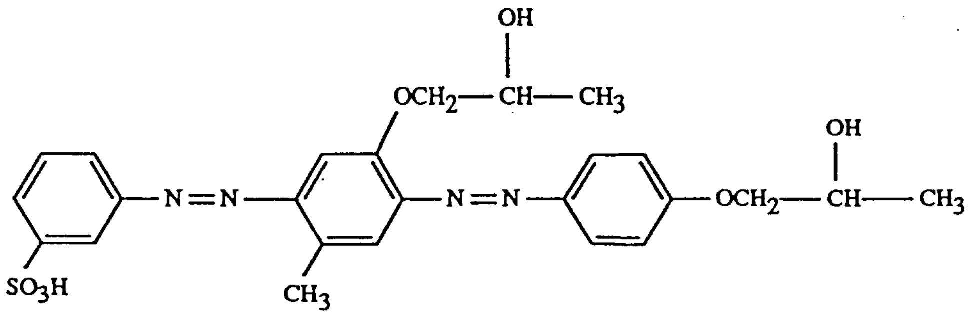
(7a)

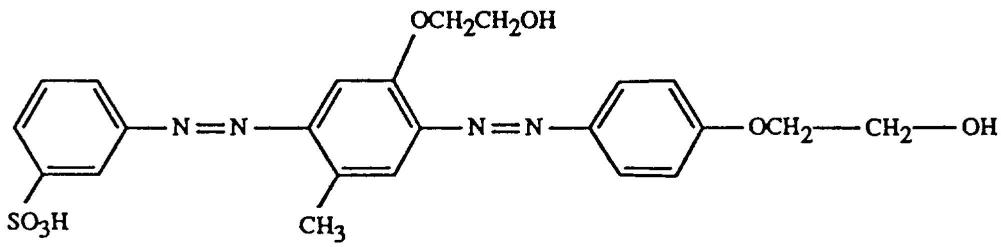
(7b)

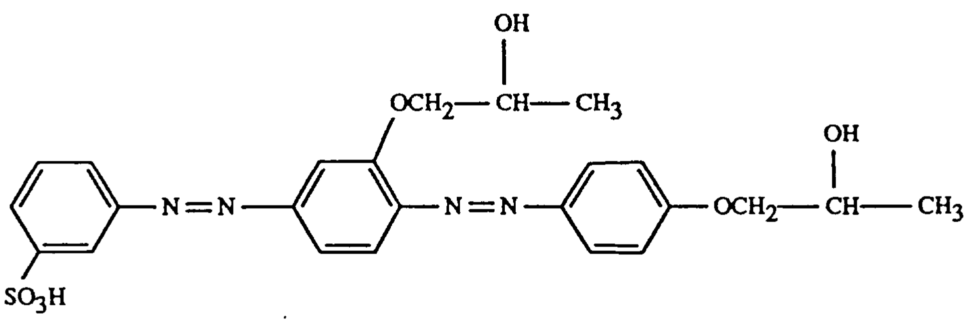
(7c)

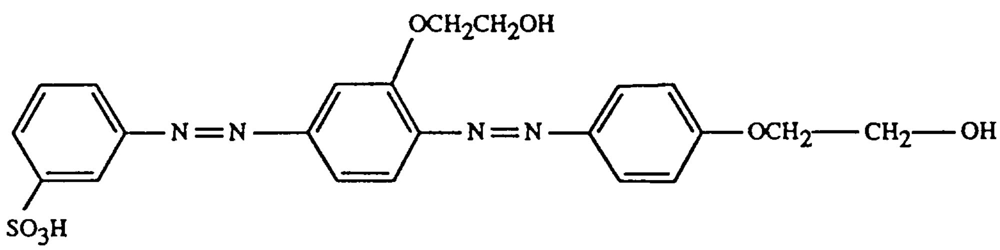
(7d)

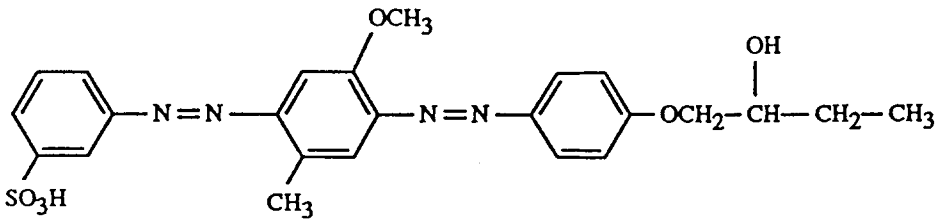

(7e)

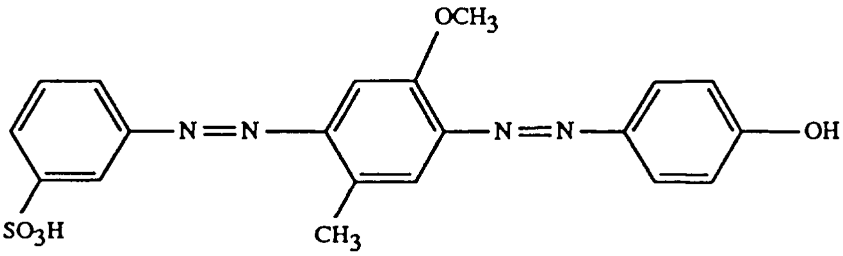

(7f)

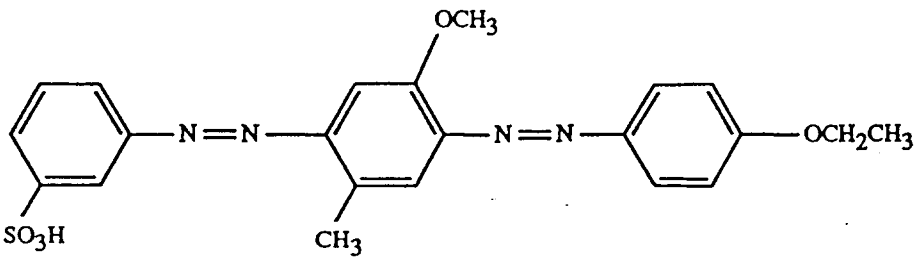

(7g)

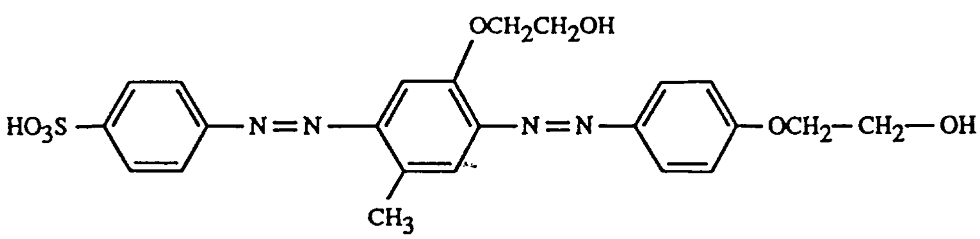

(7h)

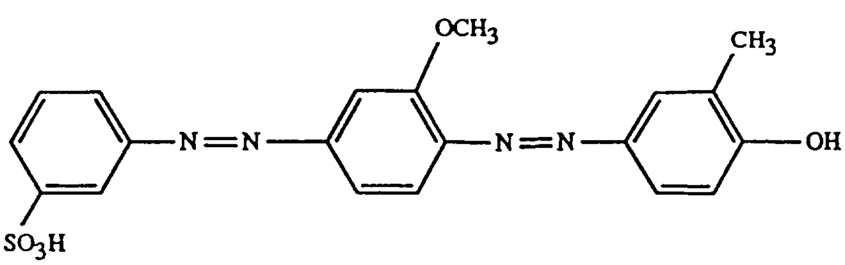

(7i)

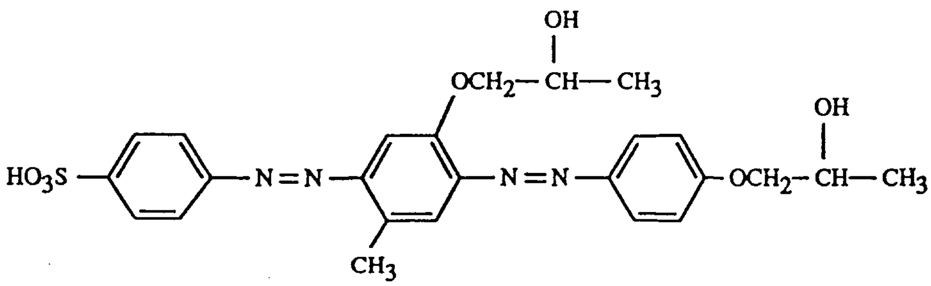

(7j)

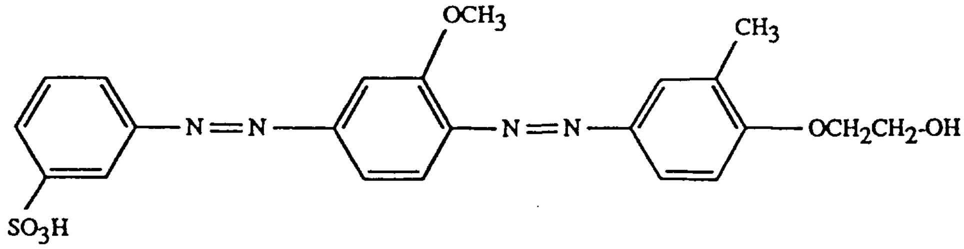

(7k)

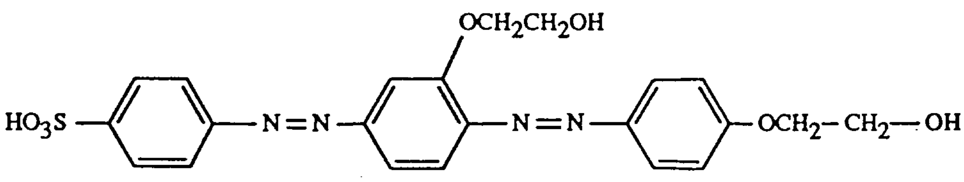

(7l)

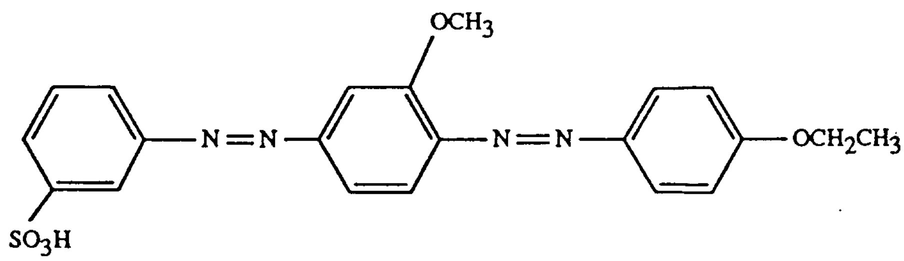

(7m)

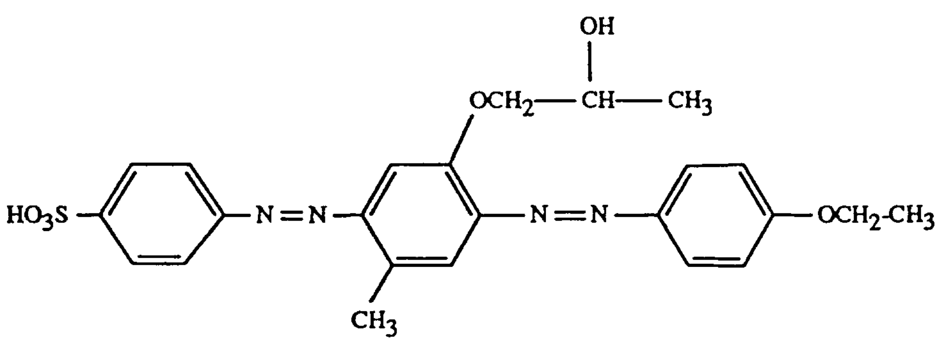

(7n)

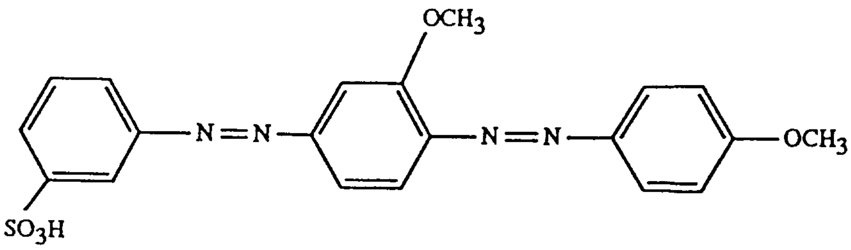

(7o)

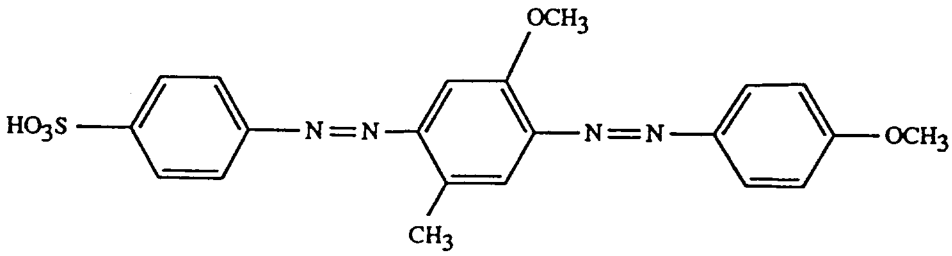

(7p)

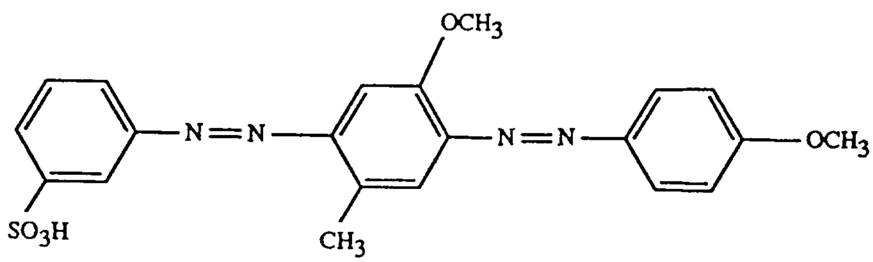

(7q)

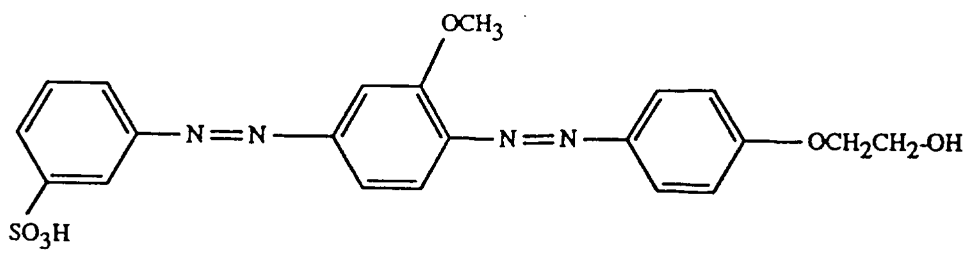

(7r)

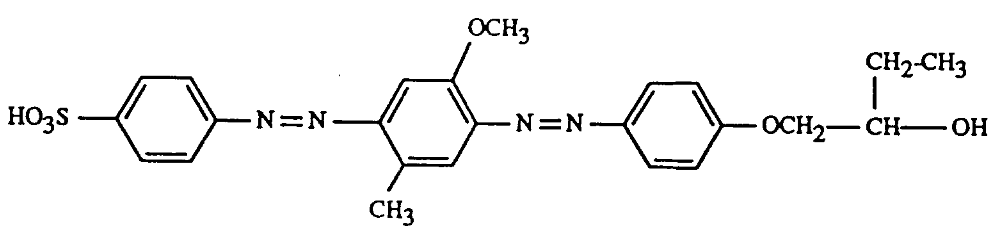

(7s)

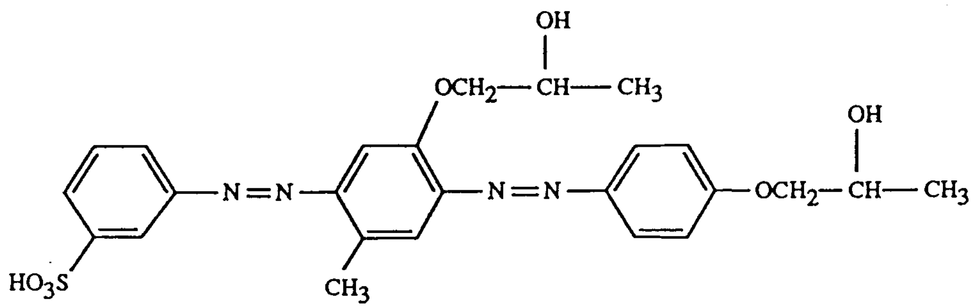

(7t)

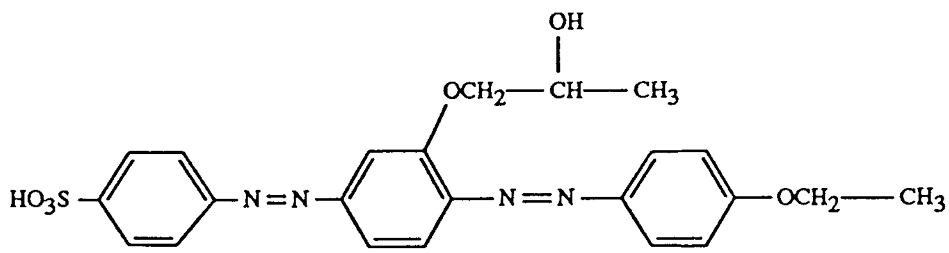

(7u)

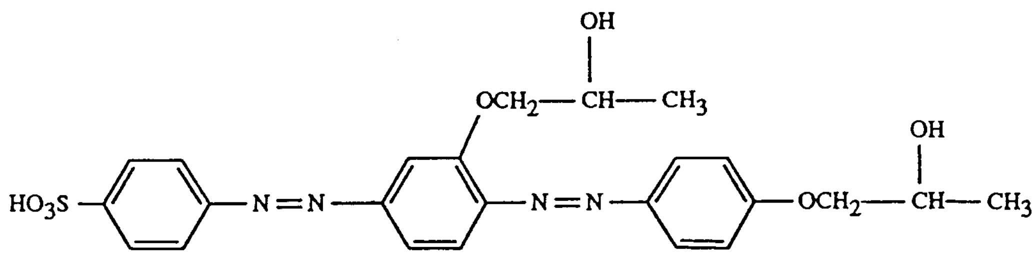

(7v)

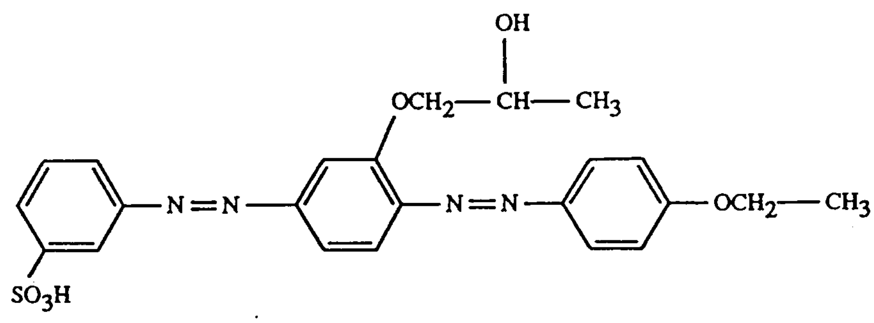

(7w)

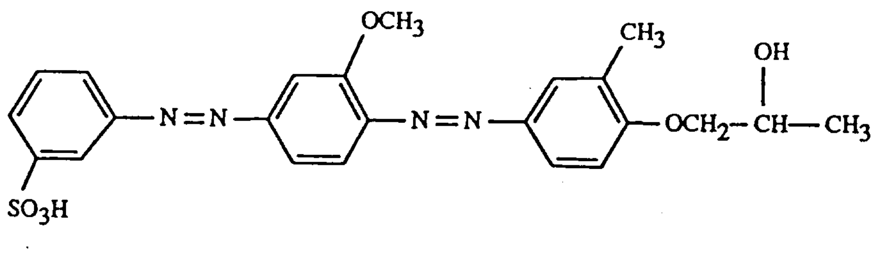

(7x)

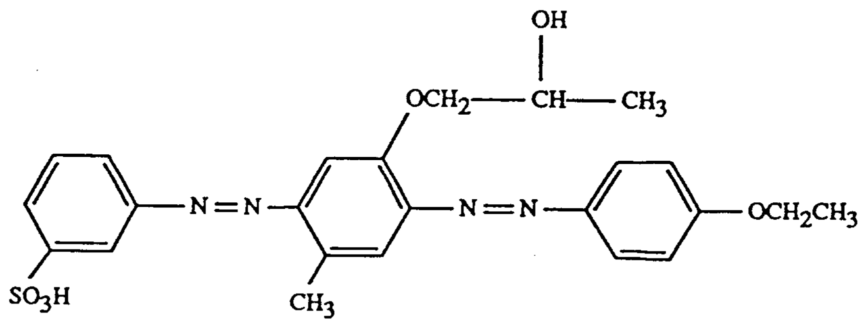

(7y)

et un colorant de formule (6).

6. Mélange de colorants conforme à la revendication 3, caractérisé en ce qu'il contient un colorant de formule (6) et au moins l'un des colorants correspondant aux formules (8), (9), (10) et (11)

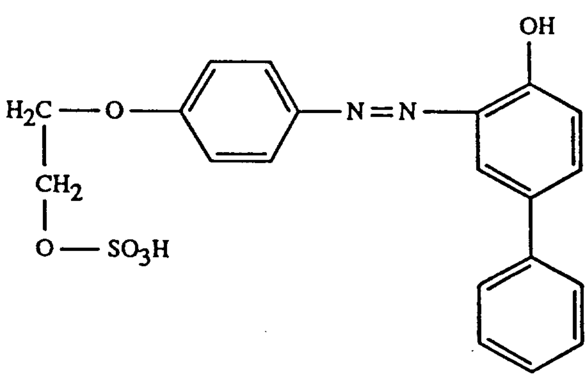

(8)

(9)

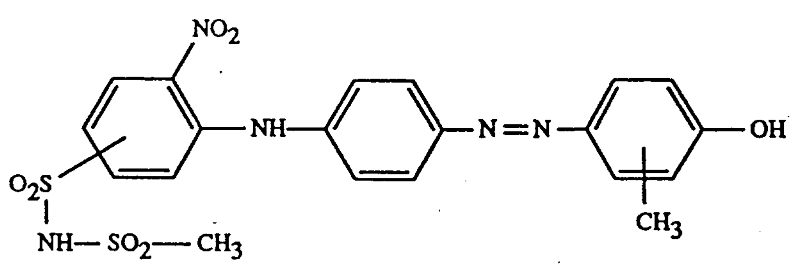

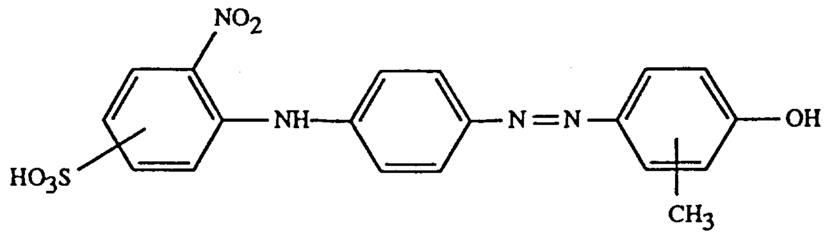

(10)

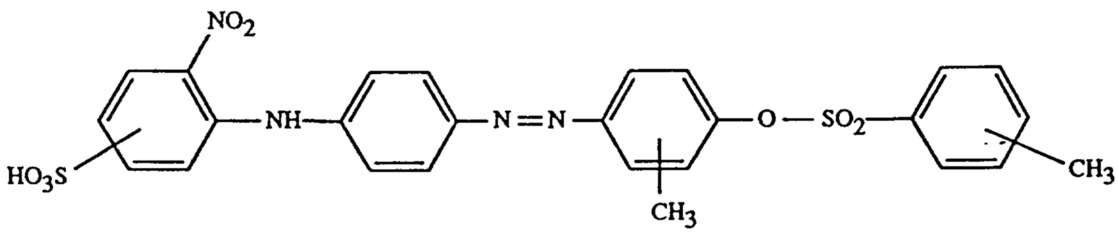

(11)

**7.** Mélange de colorants conforme à la revendication 3, caractérisé en ce qu'il contient un colorant de formule (6) et un colorant de formule

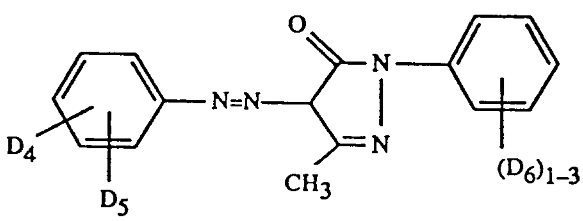

(12)

dans laquelle $D_4$ représente un atome de chlore ou un groupe phénylsulfamyle et $D_5$ représente un atome d'hydrogène ou un groupe sulfo, et $(D_6)_{1-3}$ représente de 1 à 3 substituants $D_6$, et $D_6$ représente un atome d'hydrogène ou de chlore ou un groupe sulfo.

**8.** Mélange de colorants conforme à la revendication 7, caractérisé en ce qu'il contient, en tant que colorant de formule (12), l'un des colorants de formules (12a) à (12d)

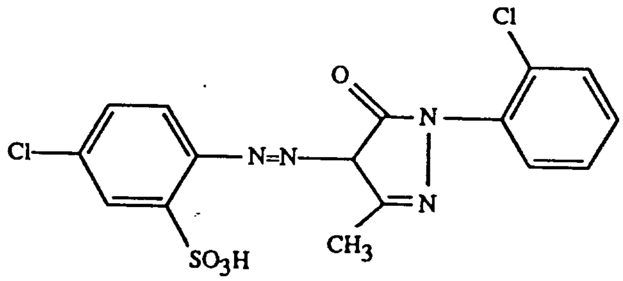

(12a)

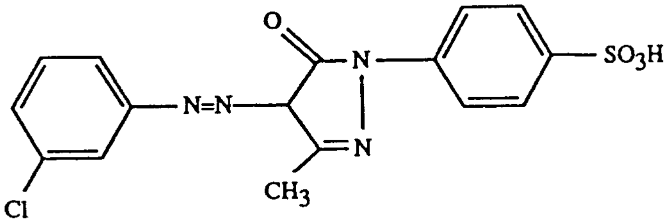

(12b)

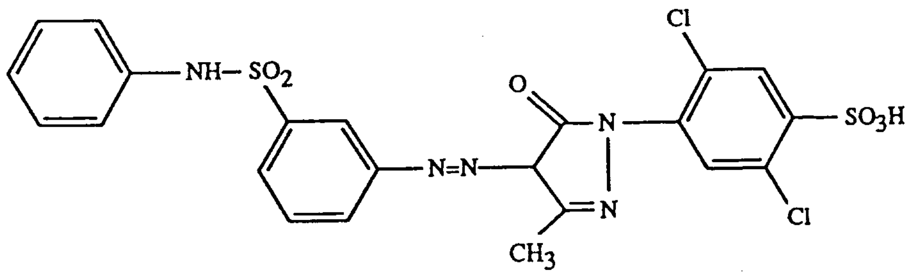

(12c)

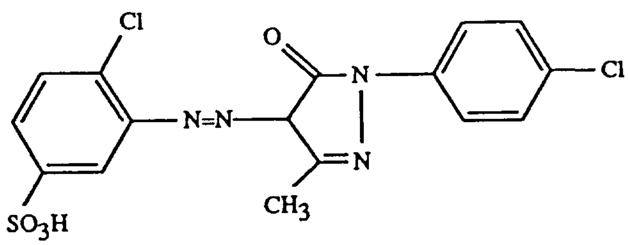

(12d)

**9.** Mélange de colorants conforme à l'une des revendications 4 et 5, caractérisé en ce qu'il contient, en tant que colorant de formule (6), un colorant de formule

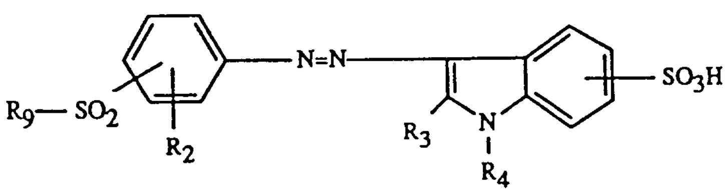

(13)

dans laquelle $R_2$, $R_3$ et $R_4$ ont les significations indiquées à propos de la formule (6) et $R_9$ représente un groupe phényle ou naphtyle portant éventuellement des substituants alkyle en $C_1$-$C_4$ ou halogéno, et en particulier, dans laquelle $R_2$ représente un atome d'hydrogène, $R_3$ représente un groupe phényle, $R_4$ représente un atome d'hydrogène et $R_9$ représente un groupe phényle, et un colorant de formule (7), en particulier un colorant correspondant à l'une des formules (7a) à (7y).

**10.** Mélange de colorants conforme à l'une des revendications 1 à 5 et 9, caractérisé en ce qu'il s'agit d'un mélange de colorants qui contient le colorant de formule

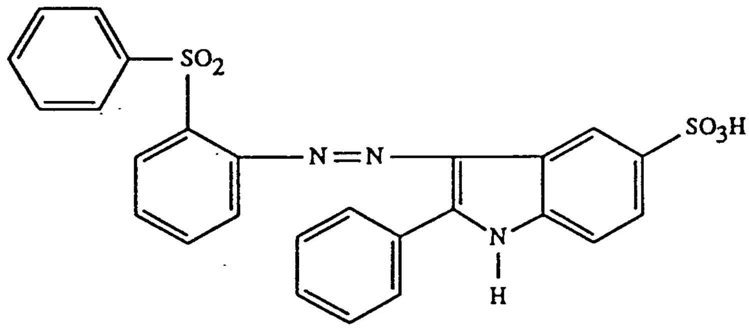

(14)

et le colorant de formule

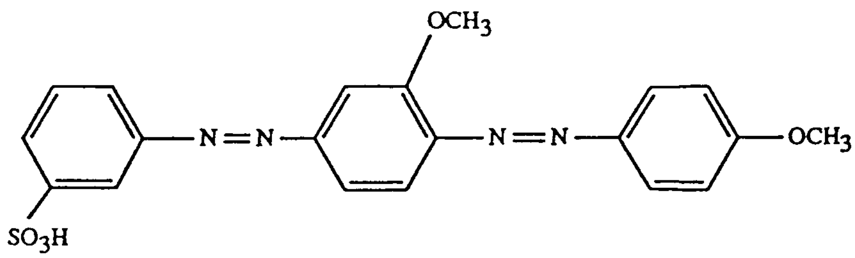

(7o)

ou le colorant de formule

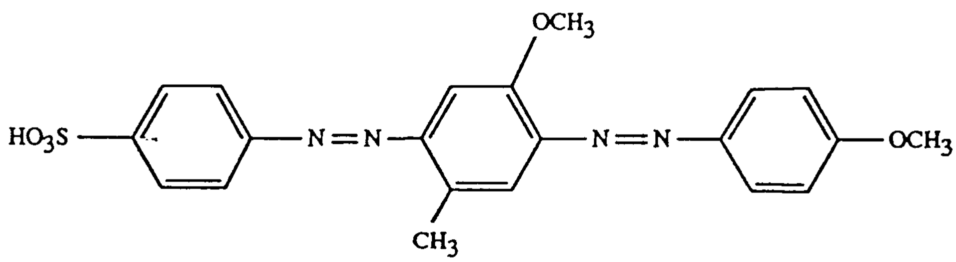

(7p)

**11.** Mélange de colorants conforme à la revendication 6, caractérisé en ce qu'il contient, en tant que colorant de formule (6), un colorant de formule

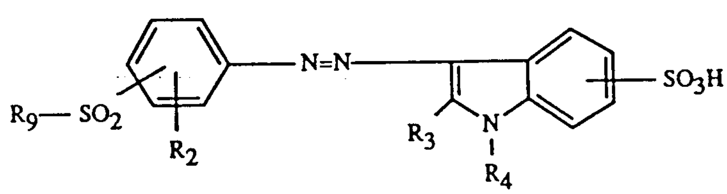

(13)

dans laquelle $R_2$, $R_3$ et $R_4$ ont les significations indiquées à propos de la formule (6) et $R_9$ représente un groupe phényle ou naphtyle portant éventuellement des substituants alkyle en $C_1$-$C_4$ ou halogéno, et en particulier, dans laquelle $R_2$ représente un atome d'hydrogène, $R_3$ représente un groupe phényle, $R_4$ représente un atome d'hydrogène et $R_9$ représente un groupe phényle, et un colorant de formule (8), (9), (10) ou (11).

**12.** Mélange de colorants conforme à l'une des revendications 1 à 3, 6 et 11, caractérisé en ce qu'il s'agit d'un mélange de colorants qui contient le colorant de formule

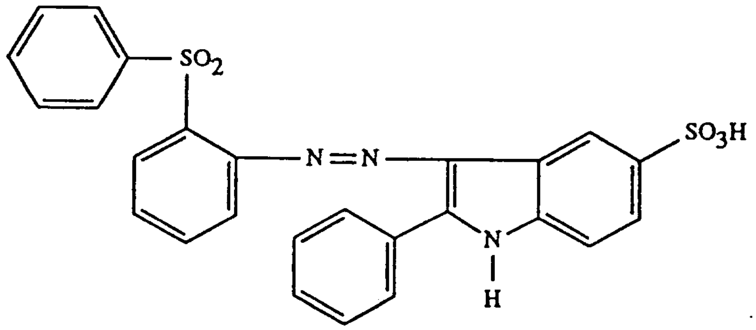

(14)

et le colorant de formule

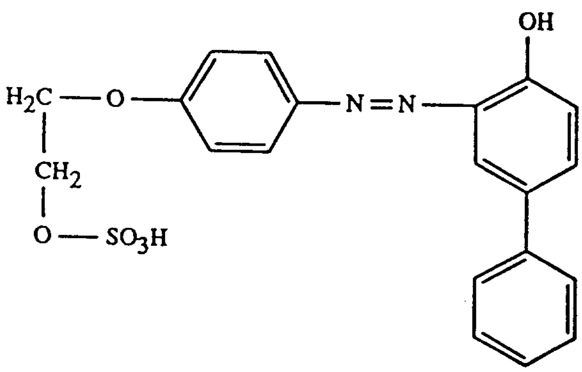

(8)

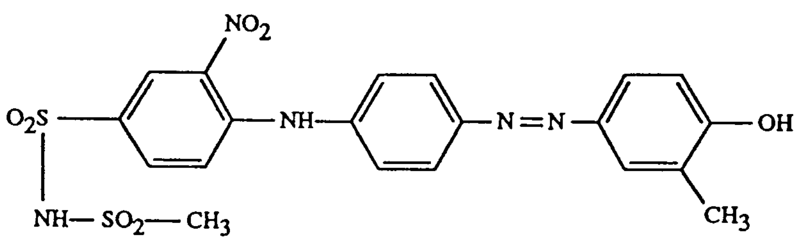

(15)

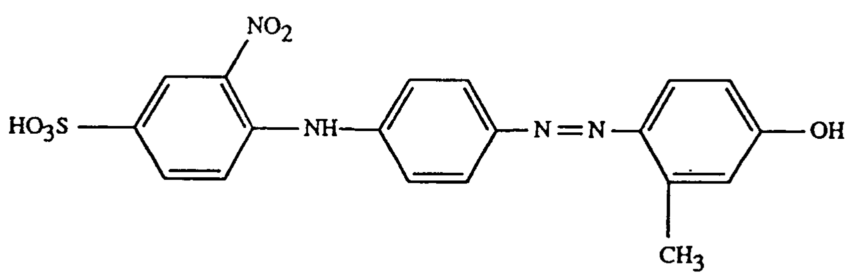

(16)

ou

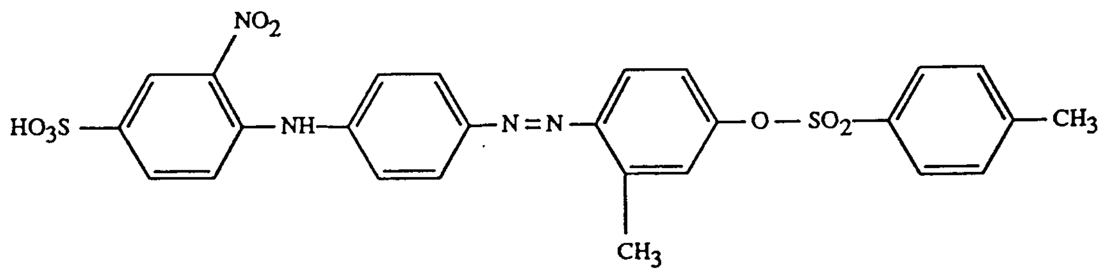 (17)

13. Mélange de colorants conforme à l'une des revendications 1 à 12, caractérisé en ce que les proportions des colorants de formules (1) et (2), ou (1) et (3), ou (1) et (4), ou (1) et (5) valent de 20/80 à 80/20, et en particulier de 40/60 à 60/40.

14. Procédé de teinture ou d'impression de matières en polyamides naturels ou synthétiques à l'aide d'un mélange de colorants, caractérisé en ce que l'on utilise un mélange de colorants conforme à l'une des revendications 1 à 13.

15. Procédé de teinture ou d'impression de matières en polyamides naturels ou synthétiques, dans lequel on utilise un mélange de colorants conforme à l'une des revendications 1 à 13, en combinaison avec d'autres colorants.

16. Procédé conforme à la revendication 15, permettant de réaliser une teinture ou une impression en trichromie, caractérisé en ce que l'on utilise un mélange de colorants conforme à l'une des revendications 1 à 13, en combinaison avec au moins un colorant rouge et au moins un colorant bleu.

17. Utilisation d'un mélange de colorants conforme à la revendication 1, pour la teinture ou l'impression.

18. Préparations pour teinture ou impression, qui contiennent un mélange de colorants conforme à l'une des revendications 1 à 13.

**Revendications pour l'Etat contractant suivant : ES**

1. Procédé de préparation d'un mélange de colorants, par mélange d'un colorant A avec au moins un des colorants B, C, D et E, caractérisé en ce que l'on utilise, comme colorant A, un colorant de formule

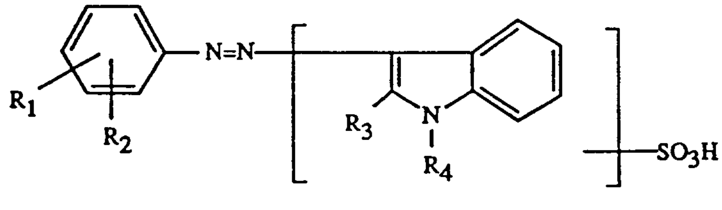 (1)

dans laquelle $R_1$ représente un atome d'hydrogène ou d'halogène ou un groupe alkyle en $C_1$-$C_4$, alcoxy en $C_1$-$C_4$ ou (alcanoyl en $C_2$-$C_4$)-amino, ou encore un reste arylsulfonyle, aryloxy ou arylcarbonyle portant éventuellement des substituants, $R_2$ représente un atome d'hydrogène ou d'halogène ou un groupe alkyle, aryloxy ou aryloxysulfonyle, portant éventuellement des substituants, ou encore un groupe de formule $-SO_2NR_5R_6$ ou $-CONR_5R_6$, $R_3$ représente un groupe alkyle ou aryle éventuellement substitué, $R_4$ représente un atome d'hydrogène ou un groupe alkyle et $R_5$ et $R_6$, indépendamment l'un de l'autre, représentent chacun un atome d'hydrogène ou un groupe alkyle, cycloalkyle ou aryle, éventuellement substitué,
et comme colorant B, C, D ou E, au moins un colorant correspondant à l'une des formules (2) à (5)

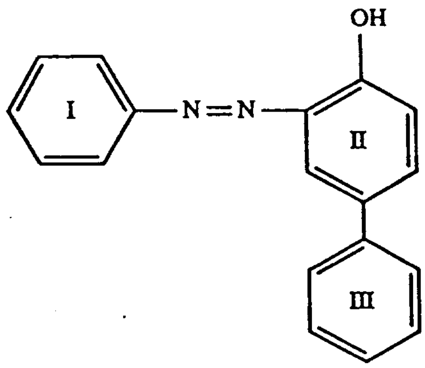

(2)

dans laquelle les cycles benzéniques I, II et III peuvent porter des substituants,

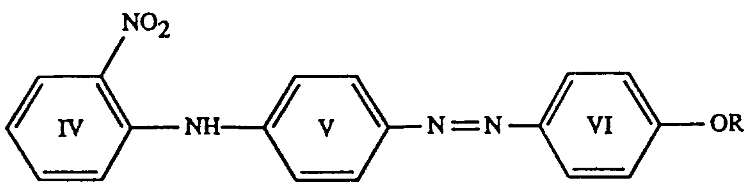

(3)

dans laquelle les cycles benzéniques IV, V et VI peuvent porter des substituants et R représente un atome d'hydrogène ou un groupe arylsulfonyle,

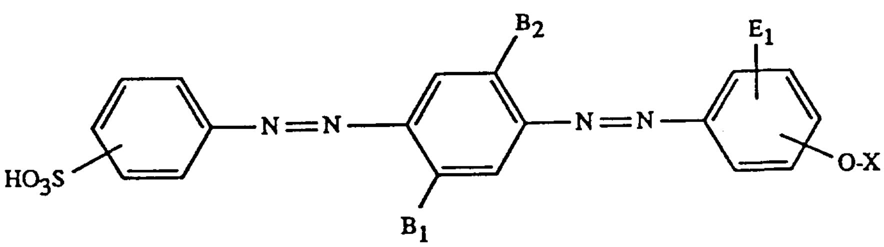

(4)

dans laquelle $B_1$, $B_2$ et $E_1$ représentent des atomes d'hydrogène ou des groupes alkyle en $C_1$-$C_4$, alcoxy en $C_1$-$C_4$ ou hydroxyalcoxy en $C_2$-$C_4$, et X représente un groupe alkyle en $C_1$-$C_4$ linéaire ou ramifié ou un groupe hydroxyalkyle en $C_2$-$C_4$ linéaire ou ramifié, et

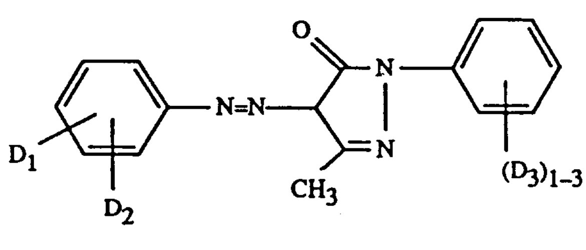

(5)

dans laquelle $D_1$ possède la signification indiquée à propos du symbole $R_1$ de la formule (1), $D_2$ possède la signification indiquée à propos du symbole $R_2$ de la formule (1), et $(D_3)_{1-3}$ représente de 1 à 3 substituants symbolisés par $D_3$, lequel représente un atome d'hydrogène ou d'halogène ou un groupe alkyle en $C_1$-$C_4$, alcoxy en $C_1$-$C_4$ ou sulfo.

**2.** Procédé conforme à la revendication 1, caractérisé en ce que l'on utilise un colorant de formule (1) dans laquelle $R_1$ représente un atome d'hydrogène ou d'halogène ou un groupe alkyle en $C_1$-$C_4$, alcoxy en $C_1$-$C_4$ ou (alcanoyl en $C_2$-$C_4$)-amino, ou encore un groupe phénylsulfonyle, naphtylsulfonyle,

phényloxy ou phénylcarbonyle portant éventuellement des substituants halogéno ou alkyle en $C_1$-$C_4$,$R_2$ représente un atome d'hydrogène ou d'halogène ou un groupe alkyle en $C_1$-$C_4$ ou trifluorométhyle, un groupe phénoxy ou phénoxysulfonyle portant éventuellement des substituants halogéno ou alkyle en $C_1$-$C_4$, ou encore un groupe de formule $-SO_2NR_7R_8$ ou $-CONR_7R_8$, $R_3$ représente un groupe alkyle en $C_1$-$C_4$ ou phényle, $R_4$ représente un atome d'hydrogène ou un groupe alkyle en $C_1$-$C_8$, et $R_7$ et $R_8$ représentent chacun, indépendamment l'un de l'autre, un atome d'hydrogène ou un groupe alkyle en $C_1$-$C_4$, hydroxyalkyle en $C_1$-$C_4$, cycloalkyle en $C_5$-$C_7$ ou phényle, ce dernier pouvant porter des substituants halogéno, trifluorométhyle ou alkyle en $C_1$-$C_4$, et un ou plusieurs colorants de formules (2), (3), (4) ou (5).

**3.** Procédé conforme à l'une des revendications 1 et 2, caractérisé en ce que l'on utilise, en tant que colorant de formule (1), un colorant de formule

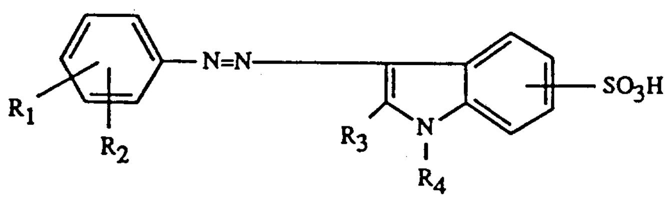

(6)

dans laquelle $R_1$ représente un atome d'hydrogène ou de chlore ou un groupe méthyle, méthoxy, éthoxy, o-méthylphénoxy, phénoxy, acétylamino, phénylsulfonyle, p-méthylphénylsulfonyle, p-chlorophénylsulfonyle, naphtylsulfonyle, p-méthylbenzoyle ou p-chlorobenzoyle, $R_2$ représente un atome d'hydrogène ou de chlore ou un groupe méthyle, trifluorométhyle, o-méthylphénoxy, o-chlorophénoxy, o-chlorophénoxysulfonyle, sulfamyle, N-(alkyl en $C_1$-$C_2$)-sulfamyle, N,N-diméthylsulfamyle, N-méthyl-N-$\beta$-hydroxyéthylsulfamyle, N-méthyl-N-cyclohexylsulfamyle, N-phénylsulfamyle, N-o-méthyl-phénylsulfamyle, N-o-chlorophénylsulfamyle, N-m-trifluorométhylphénylsulfamyle, N-éthyl-N-phénylsulfamyle, carbamyle ou N,N-diméthylcarbamyle, $R_3$ représente un groupe méthyle ou phényle et $R_4$ représente un atome d'hydrogène ou un groupe méthyle, éthyle ou octyle, et un ou plusieurs colorants de formules (2), (3), (4) et (5).

**4.** Procédé conforme à la revendication 3, caractérisé en ce que l'on utilise un colorant de formule (6) et au moins un colorant de formule

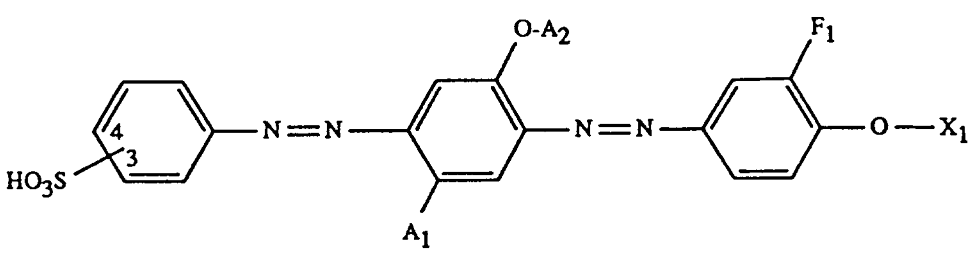

(7)

dans laquelle $A_1$ représente un atome d'hydrogène ou un groupe méthyle, $F_1$ représente un atome d'hydrogène ou un groupe méthyle et $A_2$ et $X_1$, indépendamment l'un de l'autre, représentent chacun un groupe méthyle, éthyle, $\beta$-hydroxyéthyle, $\beta$-hydroxypropyle, $\beta$-hydroxybutyle ou $\alpha$-éthyl-$\beta$-hydroxyéthyle, le groupe sulfo étant lié en position 3 ou 4.

**5.** Procédé conforme à la revendication 4, caractérisé en ce que l'on utilise, en tant que colorant de formule (7), au moins l'un des colorants correspondant aux formules (7a) à (7y)

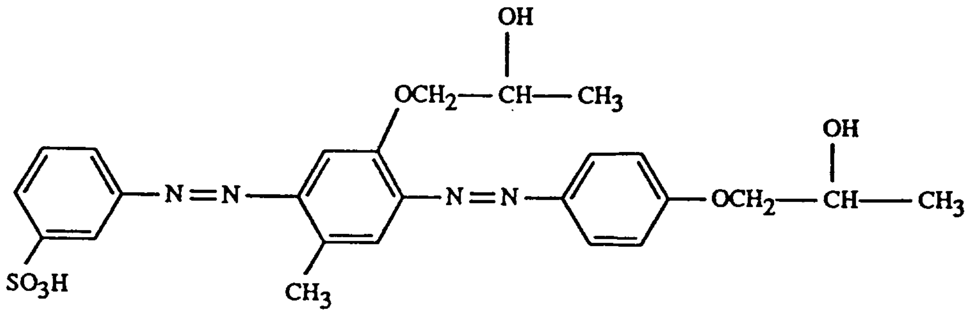

(7a)

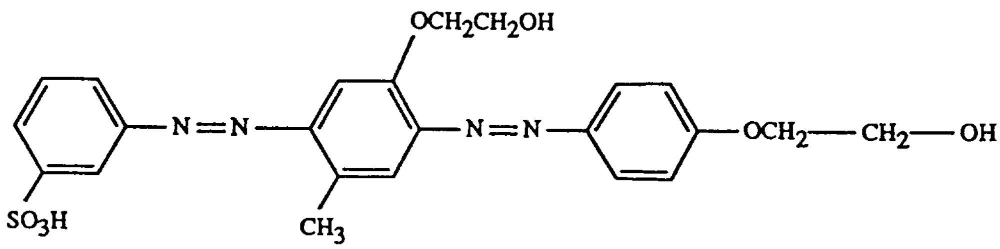

(7b)

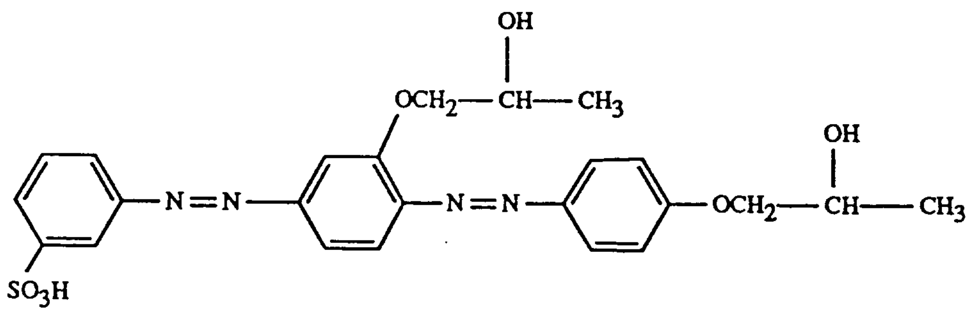

(7c)

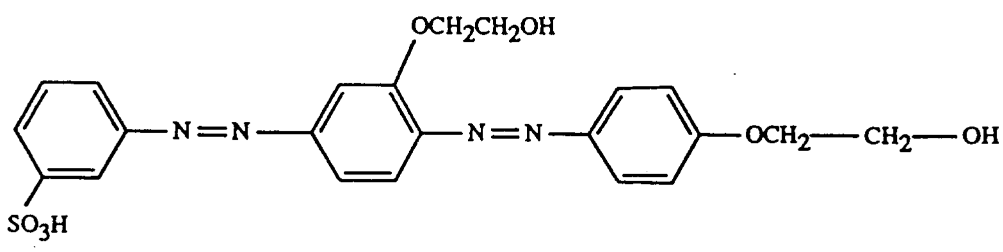

(7d)

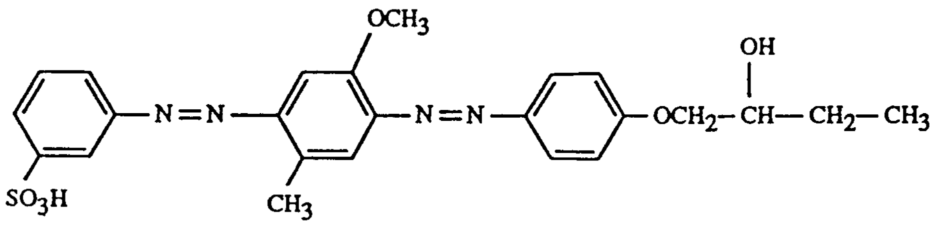

(7e)

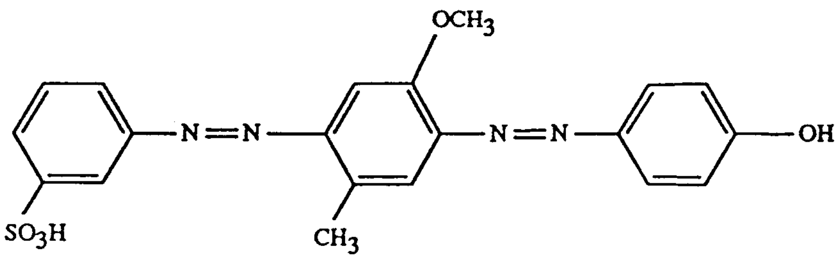

(7f)

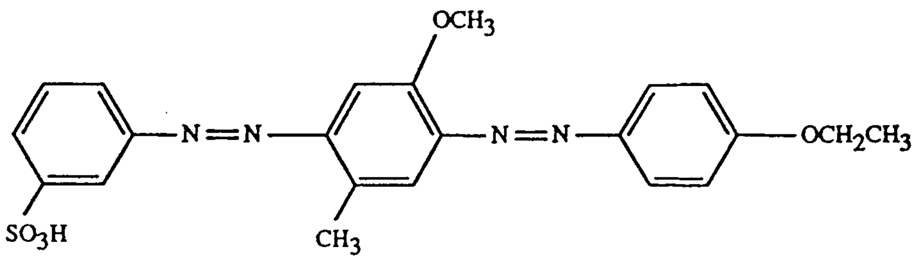

(7g)

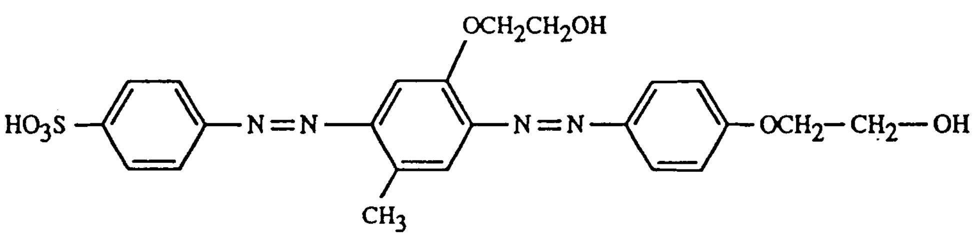

(7h)

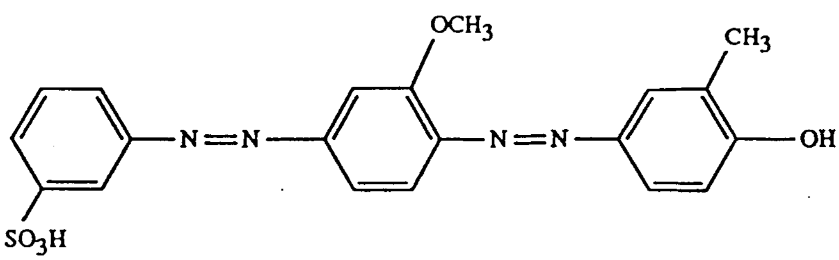

(7i)

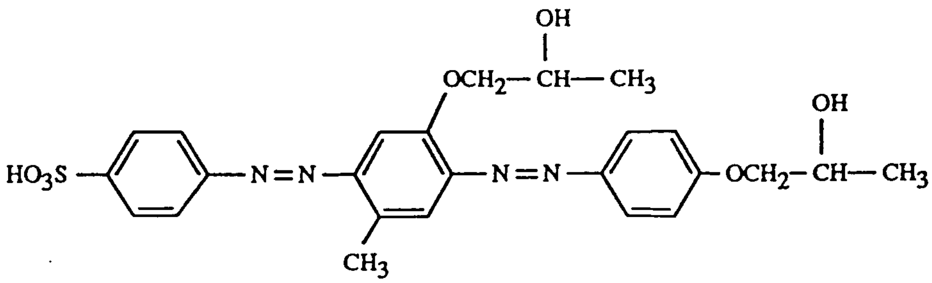

(7j)

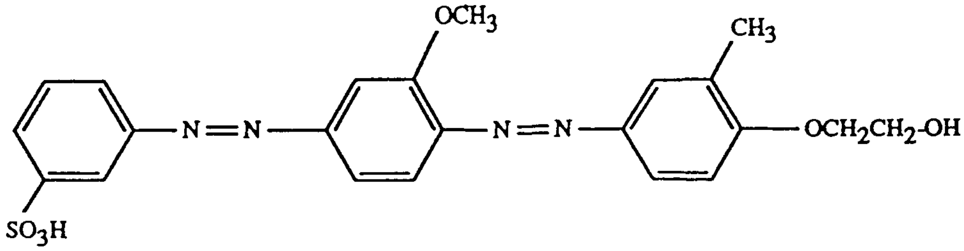

(7k)

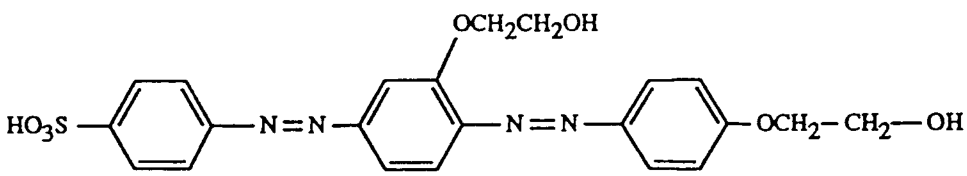

(7l)

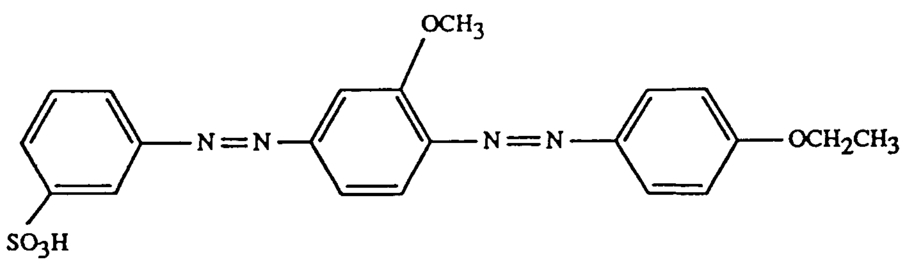

(7m)

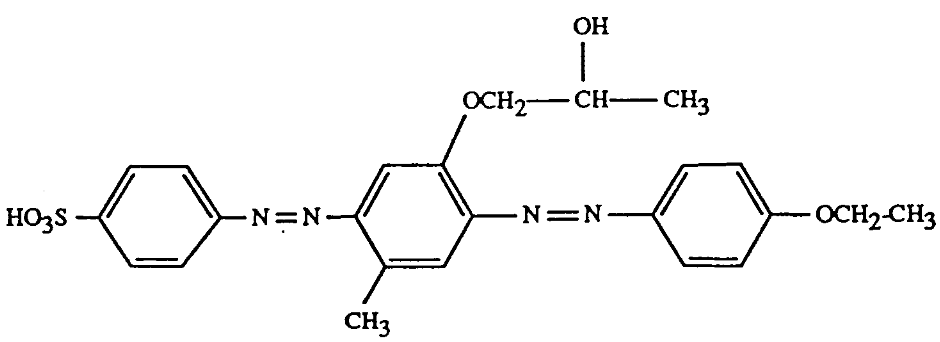

(7n)

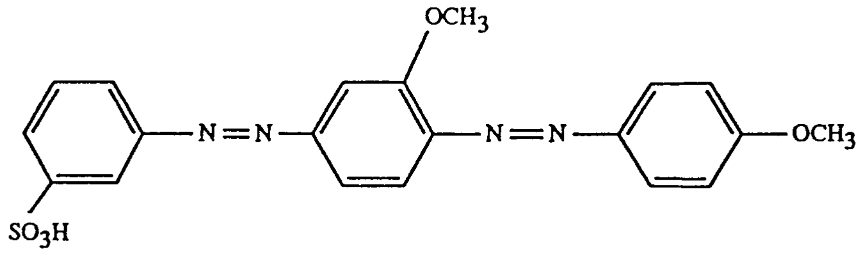

(7o)

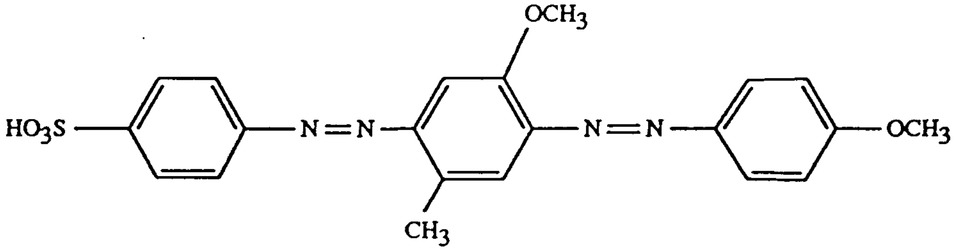

(7p)

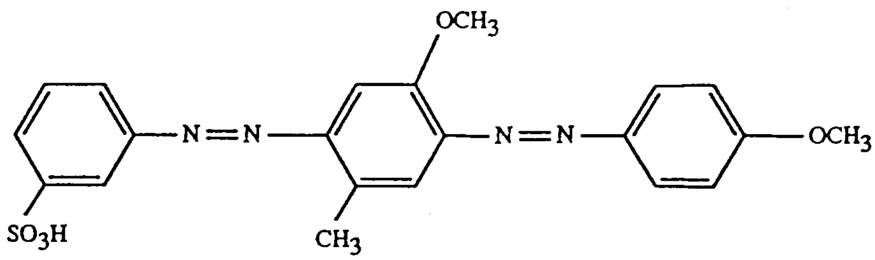

(7q)

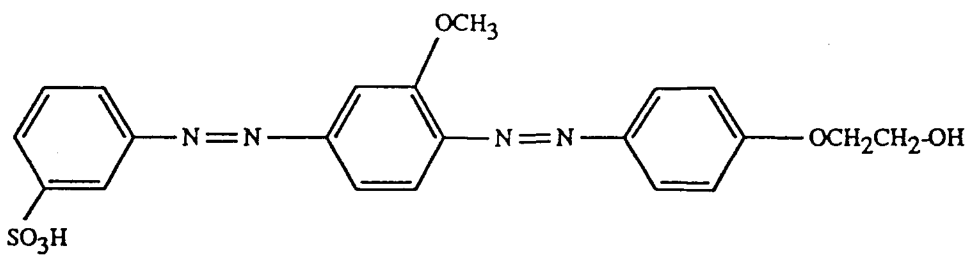

(7r)

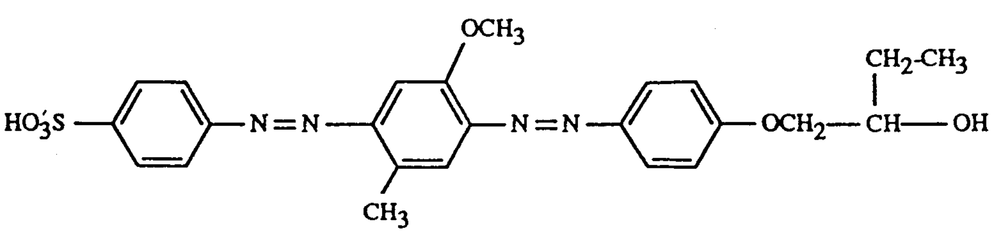

(7s)

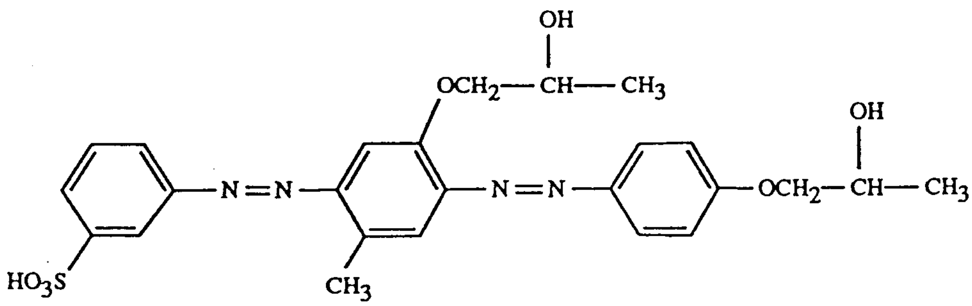

(7t)

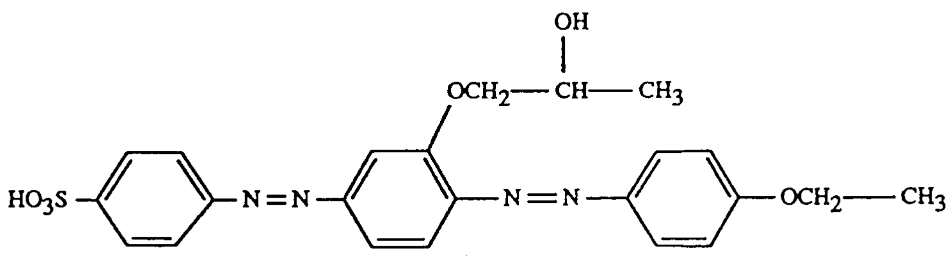

(7u)

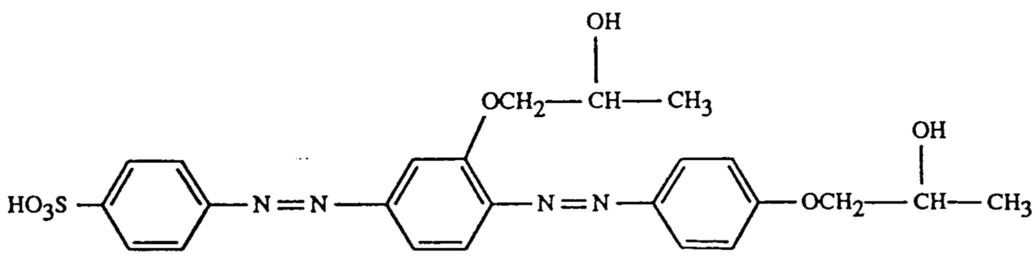

(7v)

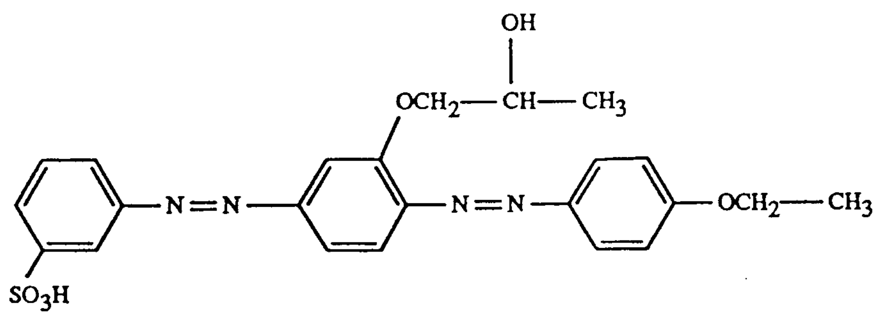

(7w)

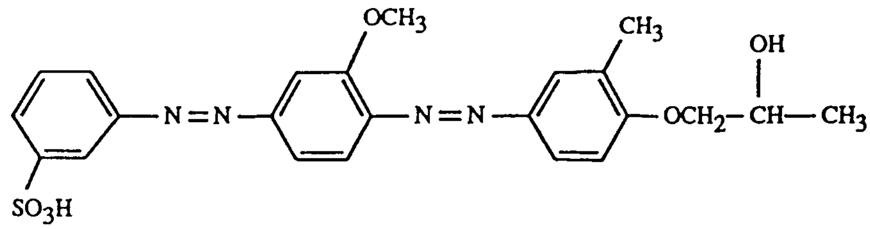

(7x)

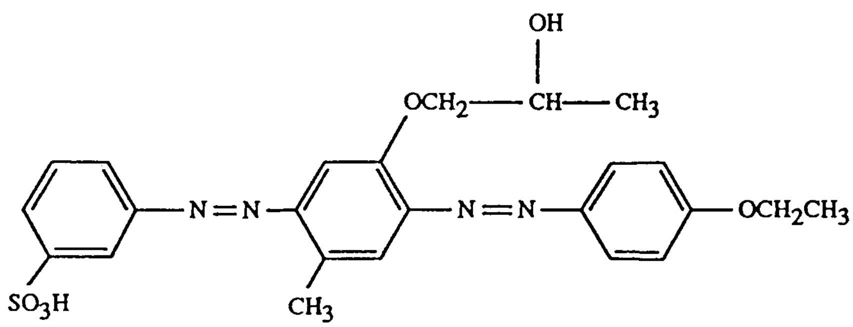

(7y)

et un colorant de formule (6).

6. Procédé conforme à la revendication 3, caractérisé en ce que l'on utilise un colorant de formule (6) et au moins l'un des colorants correspondant aux formules (8), (9), (10) et (11)

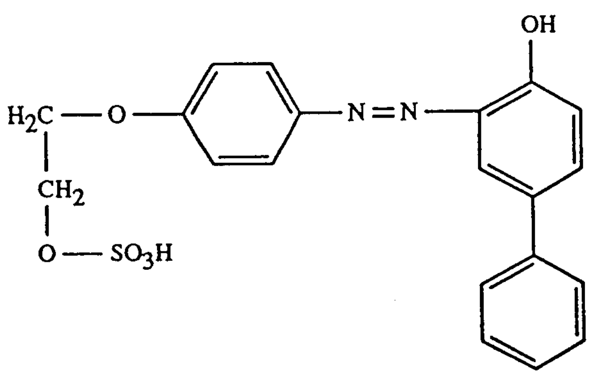

(8)

(9)

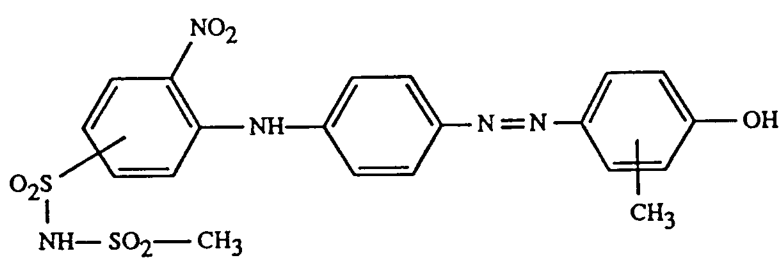

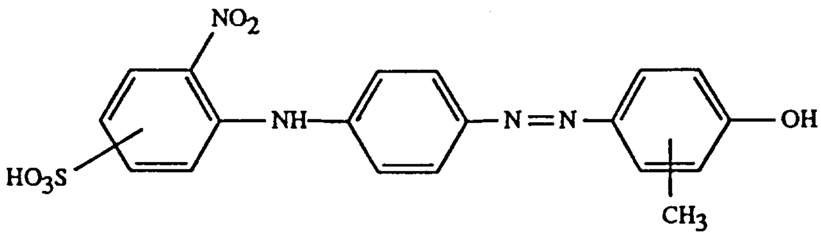

(10)

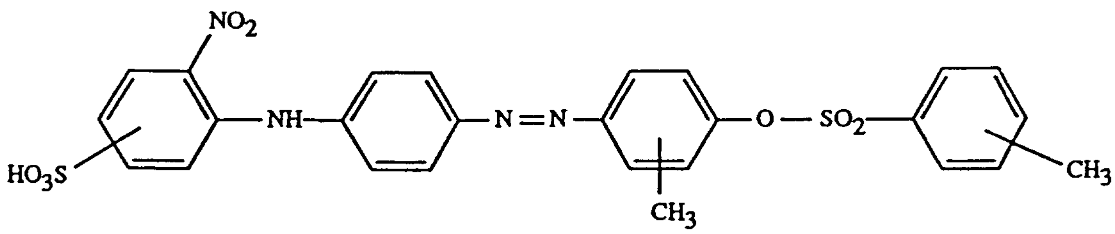

(11)

7. Procédé conforme à la revendication 3, caractérisé en ce que l'on utilise un colorant de formule (6) et un colorant de formule

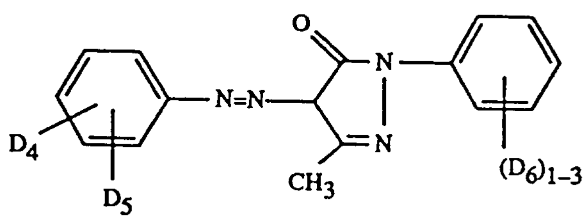

(12)

dans laquelle $D_4$ représente un atome de chlore ou un groupe phénylsulfamyle et $D_5$ représente un atome d'hydrogène ou un groupe sulfo, et $(D_6)_{1-3}$ représente de 1 à 3 substituants $D_6$, et $D_6$ représente un atome d'hydrogène ou de chlore ou un groupe sulfo.

8. Procédé conforme à la revendication 7, caractérisé en ce que l'on utilise, en tant que colorant de formule (12), l'un des colorants de formules (12a) à (12d)

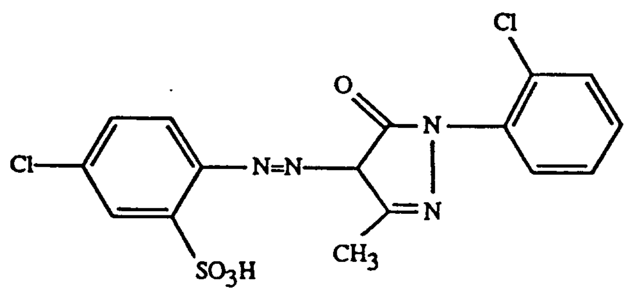

(12a)

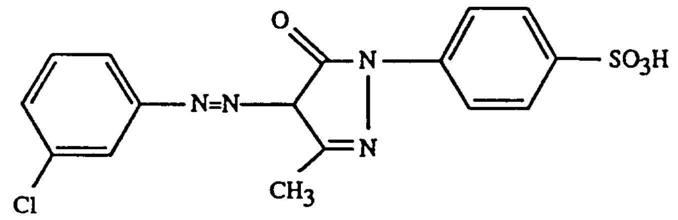

(12b)

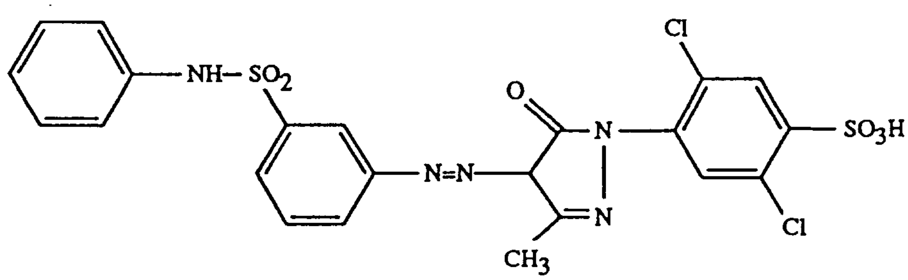

(12c)

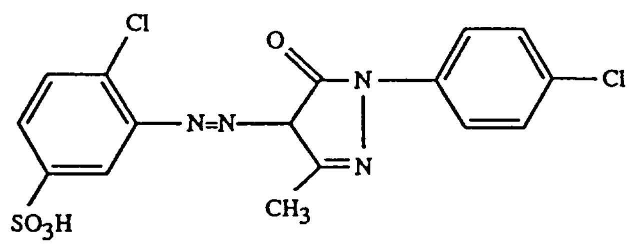

(12d)

**9.** Procédé conforme à l'une des revendications 4 et 5, caractérisé en ce que l'on utilise, en tant que colorant de formule (6), un colorant de formule

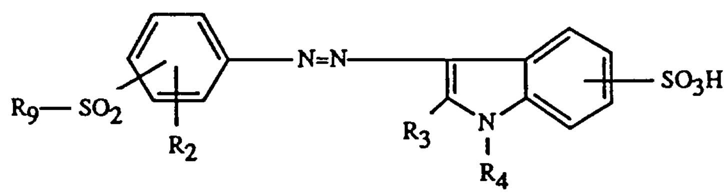

(13)

dans laquelle $R_2$, $R_3$ et $R_4$ ont les significations indiquées à propos de la formule (6) et $R_9$ représente un groupe phényle ou naphtyle portant éventuellement des substituants alkyle en $C_1$-$C_4$ ou halogéno, et en particulier, dans laquelle $R_2$ représente un atome d'hydrogène, $R_3$ représente un groupe phényle, $R_4$ représente un atome d'hydrogène et $R_9$ représente un groupe phényle, et un colorant de formule (7), en particulier un colorant correspondant à l'une des formules (7a) à (7y).

**10.** Procédé conforme à l'une des revendications 1 à 5 et 9, caractérisé en ce que l'on utilise un mélange de colorants qui contient le colorant de formule

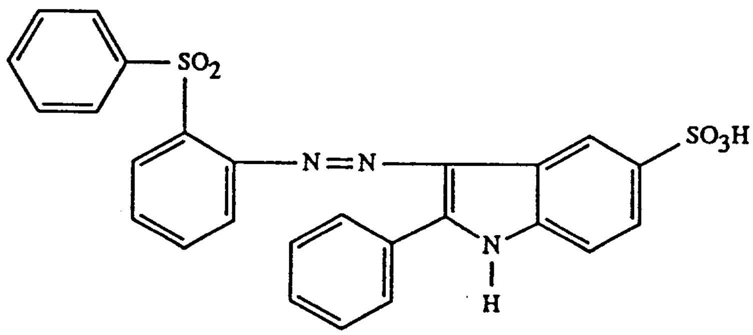

(14)

et le colorant de formule

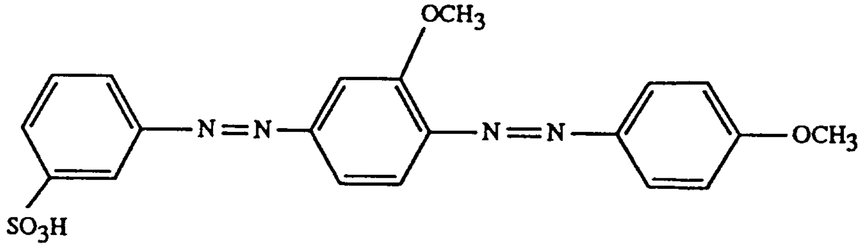

(7o)

ou le colorant de formule

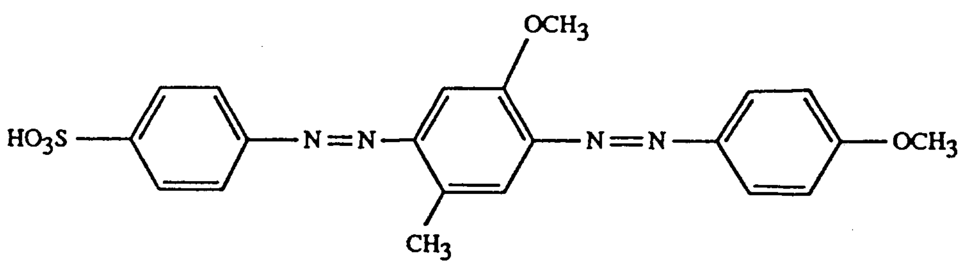

(7p)

**11.** Procédé conforme à la revendication 6, caractérisé en ce que l'on utilise, en tant que colorant de formule (6), un colorant de formule

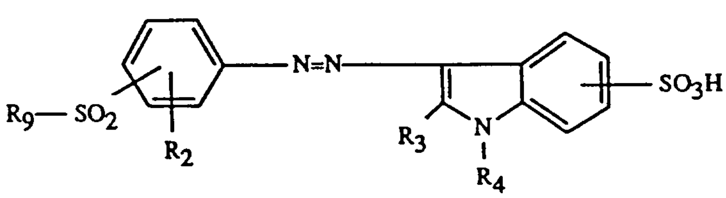

(13)

dans laquelle $R_2$, $R_3$ et $R_4$ ont les significations indiquées à propos de la formule (6) et $R_9$ représente un groupe phényle ou naphtyle portant éventuellement des substituants alkyle en $C_1$-$C_4$ ou halogéno, et en particulier, dans laquelle $R_2$ représente un atome d'hydrogène, $R_3$ représente un groupe phényle, $R_4$ représente un atome d'hydrogène et $R_9$ représente un groupe phényle, et un colorant de formule (8), (9), (10) ou (11).

**12.** Procédé conforme à l'une des revendications 1 à 3, 6 et 11, caractérisé en ce que l'on utilise un mélange de colorants qui contient le colorant de formule

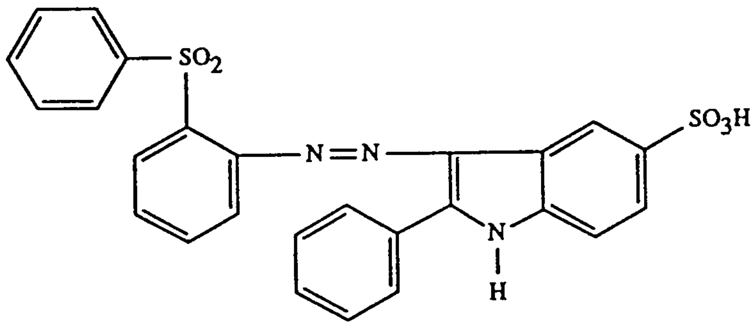

(14)

et le colorant de formule

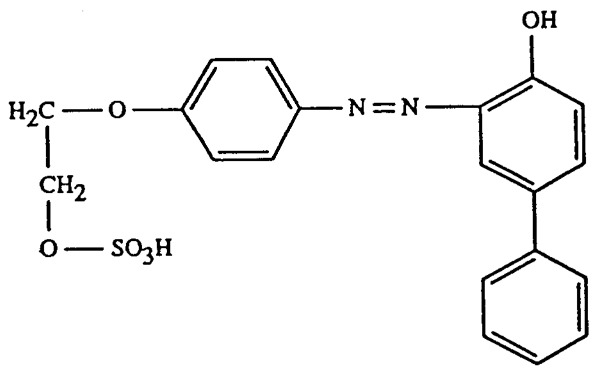

(8)

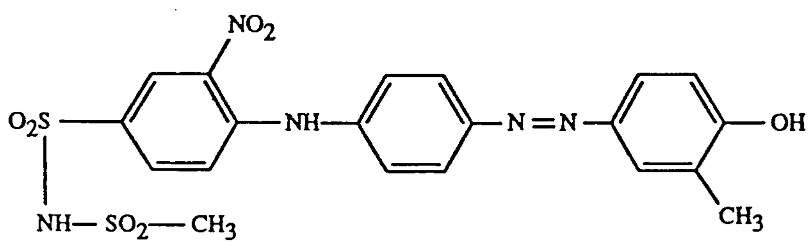

(15)

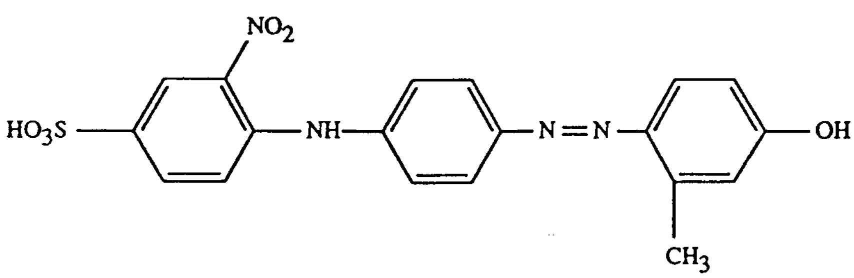

(16)

ou

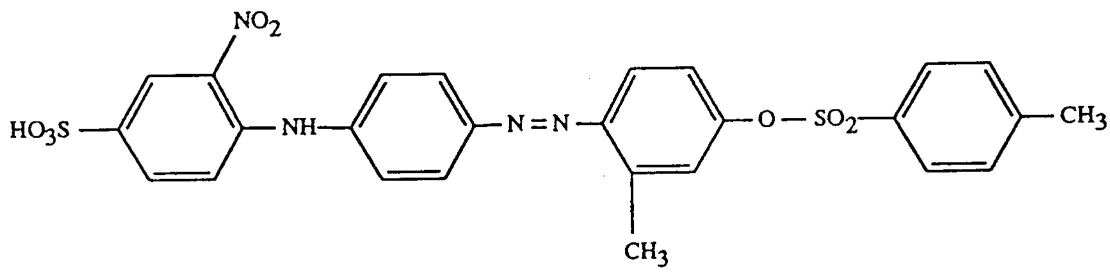

(17)

**13.** Procédé conforme à l'une des revendications 1 à 12, caractérisé en ce que les proportions des colorants de formules (1) et (2), ou (1) et (3), ou (1) et (4), ou (1) et (5) valent de 20/80 à 80/20, et en particulier de 40/60 à 60/40.

**14.** Procédé de teinture ou d'impression de matières en polyamides naturels ou synthétiques à l'aide d'un mélange de colorants, caractérisé en ce que l'on utilise un mélange de colorants obtenu conformément à l'une des revendications 1 à 13.

**15.** Procédé de teinture ou d'impression de matières en polyamides naturels ou synthétiques, dans lequel on utilise un mélange de colorants obtenu conformément à l'une des revendications 1 à 13, en combinaison avec d'autres colorants.

**16.** Procédé conforme à la revendication 15, permettant de réaliser une teinture ou une impression en trichromie, caractérisé en ce que l'on utilise un mélange de colorants obtenu conformément à l'une des revendications 1 à 13, en combinaison avec au moins un colorant rouge et au moins un colorant bleu.

**17.** Utilisation d'un mélange de colorants obtenu conformément à la revendication 1, pour la teinture ou l'impression.